(19) Europäisches Patentamt
European Patent Office
Office européen des brevets

(11) EP 4 342 921 A1

(12) **EUROPEAN PATENT APPLICATION**
published in accordance with Art. 153(4) EPC

(43) Date of publication:
**27.03.2024 Bulletin 2024/13**

(21) Application number: **22804695.9**

(22) Date of filing: **17.05.2022**

(51) International Patent Classification (IPC):
***C08F 261/06*** (2006.01) ***C08F 2/44*** (2006.01) ***C08F 16/30*** (2006.01) ***C08L 27/12*** (2006.01) ***C08L 29/10*** (2006.01)

(52) Cooperative Patent Classification (CPC):
**C08F 2/44; C08F 16/30; C08F 261/06; C08L 27/12; C08L 29/10**

(86) International application number:
**PCT/JP2022/020583**

(87) International publication number:
**WO 2022/244784 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.05.2021 JP 2021084879**
**19.11.2021 JP 2021189034**

(71) Applicant: **DAIKIN INDUSTRIES, LTD.**
**Osaka-Shi, Osaka 530-0001 (JP)**

(72) Inventors:
- **NANBA, Yoshinori**
  **Osaka-Shi, Osaka 530-0001 (JP)**
- **TAMAI, Rina**
  **Osaka-Shi, Osaka 530-0001 (JP)**
- **IWASAKA, Takuma**
  **Osaka-Shi, Osaka 530-0001 (JP)**
- **TSUCHIYA, Soushi**
  **Osaka-Shi, Osaka 530-0001 (JP)**
- **ICHIKAWA, Kenji**
  **Osaka-Shi, Osaka 530-0001 (JP)**
- **KATO, Taketo**
  **Osaka-Shi, Osaka 530-0001 (JP)**
- **IRIE, Masaki**
  **Osaka-Shi, Osaka 530-0001 (JP)**
- **YAMANAKA, Taku**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) METHOD FOR PRODUCING FLUOROPOLYMER, METHOD FOR PRODUCING POLYTETRAFLUOROETHYLENE, AND COMPOSITION

(57) The present disclosure provides a method for producing a fluoropolymer, the method comprising polymerizing a perfluoromonomer in an aqueous medium in the presence of a polymer (1) to obtain a fluoropolymer, wherein the content of a polymerized unit derived from the perfluoromonomer in the fluoropolymer is 90 mol% or more based on all polymerized units of the fluoropolymer, the polymer (1) is a polymer of a monomer (1) represented by the general formula (1): $CF_2=CF-O-R-(Rf-SO_3M)_m$, a polymerized unit (1) derived from the monomer (1) in the polymer (1) is 50% by mass or more based on all polymerized units of the polymer (1), and the content of a dimer and a trimer of the monomer (1) in the polymer (1) is 1.0% by mass or less based on the polymer (1).

EP 4 342 921 A1

## Description

TECHNICAL FIELD

The present disclosure relates to a method for producing a fluoropolymer, a method for producing a polytetrafluoroethylene, and a composition.

BACKGROUND ART

Patent Document 1 describes a method for producing a fluoropolymer, the method comprising emulsion-polymerizing one or more fluorinated monomers in an aqueous medium, in which the aqueous emulsion polymerization is carried out in an aqueous medium in the presence of at least one radical initiator and at least one polyfunctional dispersant [dispersant (D)], where

- the dispersant (D) contains a backbone chain containing repeating units derived from one or more ethylenically unsaturated monomers,
- the dispersant (D) has a molecular weight and distribution thereof such that it is substantially free from fractions with a molecular weight of less than 3000, and
- the dispersant (D) contains a plurality of ionizable groups selected from the group consisting of $-SO_3X_a$, $-PO_3X_a$, and $-COOX_a$ ($X_a$ is H, an ammonium group, or a monovalent metal) in an amount of at least 1.75 meq/g based on the weight thereof, and the dispersant (D) is used in an amount of 0.01% by weight and 5.00% by weight based on the total weight of the aqueous medium.

Patent Document 2 describes a method for producing a fluoropolymer, the method comprising a step of carrying out polymerization of a fluoromonomer in an aqueous medium in the presence of a polymer (1) containing a polymerized unit (1) derived from a monomer represented by the general formula (1) below, thereby obtaining a fluoropolymer:

$$CX_2=CY(-CZ_2-O-Rf-A) \qquad (1)$$

wherein X is the same or different and is -H or -F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, $-SO_3M$, or $-OSO_3M$ (M is -H, a metal atom, $-NR^7_4$, imidazolium optionally having a substituent, pyridinium optionally having a substituent, or phosphonium optionally having a substituent, and $R^7$ is H or an organic group), provided that at least one of X, Y, and Z contains a fluorine atom.

Patent Document 3 describes a method for producing a fluoropolymer aqueous dispersion characterized by comprising step A of performing ultrafiltration, microfiltration, or dialysis membrane treatment, or a combination thereof on a pretreatment aqueous dispersion containing a fluoropolymer obtained by polymerization in the presence of a polymer (I) containing a polymerized unit (I) derived from a monomer represented by the general formula (I) below (provided that the polymer (I) is excluded):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; A° is an anionic group; R is a linking group; $Z^1$ and $Z^2$ are each independently H, F, an alkyl group, or a fluorine-containing alkyl group; and m is an integer of 1 or more.

RELATED ART

PATENT DOCUMENTS

Patent Document 1: National Publication of International Patent Application No. 2020-510737
Patent Document 2: International Publication No. WO 2019/168183
Patent Document 3: International Publication No. WO 2020/218620

## SUMMARY OF THE INVENTION

### PROBLEM TO BE SOLVED BY THE INVENTION

An object of the present disclosure is to provide a method for producing a fluoropolymer using a polymer having a large number of sulfonic acid groups or sulfonic acid salt groups, by which a fluoropolymer can be produced that is substantially free from a dimer and a trimer of a monomer constituting the polymer and contains a polymerized unit derived from a perfluoromonomer in a high content.

Another object of the present disclosure is to provide a method for producing a polytetrafluoroethylene using a polymer having sulfonic acid groups or sulfonic acid salt groups, by which a polytetrafluoroethylene can be produced that is substantially free from a dimer and a trimer of a monomer constituting the polymer and has a high molecular weight.

Another object of the present disclosure is to provide a composition that comprises a polymer having a large number of sulfonic acid groups or sulfonic acid salt groups and a fluoropolymer containing a polymerized unit derived from a perfluoromonomer in a high content and that is substantially free from a dimer and a trimer of a monomer constituting the polymer.

Another object of the present disclosure is to provide a composition that comprises a polymer having sulfonic acid groups or sulfonic acid salt groups and a polytetrafluoroethylene having a high molecular weight and that is substantially free from a dimer and a trimer of a monomer constituting the polymer.

### MEANS FOR SOLVING THE PROBLEM

The present disclosure provides a method for producing a fluoropolymer, the method comprising polymerizing a perfluoromonomer in an aqueous medium in the presence of a polymer (1) to obtain a fluoropolymer, wherein the content of a polymerized unit derived from the perfluoromonomer in the fluoropolymer is 90 mol% or more based on all polymerized units of the fluoropolymer, the polymer (1) is a polymer of a monomer (1) represented by the general formula (1) below, a polymerized unit (1) derived from the monomer (1) in the polymer (1) is 50% by mass or more based on all polymerized units of the polymer (1), and the content of a dimer and a trimer of the monomer (1) in the polymer (1) is 1.0% by mass or less based on the polymer (1).

$$CF_2{=}CF\text{-}O\text{-}R\text{-}\ (Rf\text{-}SO_3M)_m \qquad (1)$$

(In the formula, R is a single bond or a linking group; Rf is a fluorine-containing alkylene group having 1 to 40 carbon atoms, or a fluorine-containing alkylene group having 2 to 100 carbon atoms and having an ether bond or a keto group; M is H, a metal atom, $NR^7_4$, imidazolium optionally having a substituent, pyridinium optionally having a substituent, or phosphonium optionally having a substituent; $R^7$ is H or an organic group; and m is an integer of 1 or more.)

In the production method of the present disclosure, it is preferable that the monomer (1) is a monomer (2) represented by the following general formula (2).

$$CF_2{=}CF\text{-}O\text{-}Rf\text{-}SO_3M \qquad (2)$$

(In the formula, Rf and M are as described above.)

In the production method of the present disclosure, it is preferable that the fluoropolymer is a polytetrafluoroethylene.

In the production method of the present disclosure, it is preferable that the fluoropolymer is a perfluoroelastomer.

The present disclosure also provides a method for producing a polytetrafluoroethylene, the method comprising polymerizing tetrafluoroethylene in an aqueous medium in the presence of a polymer (1) to obtain a polytetrafluoroethylene, wherein the polytetrafluoroethylene is a high-molecular-weight polytetrafluoroethylene, the polymer (1) is a polymer of a monomer (1) represented by the general formula (1) below, and the content of a dimer and a trimer of the monomer (1) in the polymer (1) is 1.0% by mass or less based on the polymer (1).

$$CF_2{=}CF\text{-}O\text{-}R\text{-}\ (Rf\text{-}SO_3M)_m \qquad (1)$$

(In the formula, R is a single bond or a linking group; Rf is a fluorine-containing alkylene group having 1 to 40 carbon atoms, or a fluorine-containing alkylene group having 2 to 100 carbon atoms and having an ether bond or a keto group; M is H, a metal atom, $NR^7_4$, imidazolium optionally having a substituent, pyridinium optionally having a substituent, or phosphonium optionally having a substituent; $R^7$ is H or an organic group; and m is an integer of 1 or more.)

In the production method of the present disclosure, it is preferable that the monomer (1) is a monomer (2) represented by the following general formula (2).

$$CF_2=CF-O-Rf-SO_3M \qquad (2)$$

(In the formula, Rf and M are as described above.)

The present disclosure also provides a composition comprising a polymer (1) and a fluoropolymer, wherein the fluoropolymer contains a polymerized unit derived from a perfluoromonomer, and the content of the polymerized unit derived from the perfluoromonomer in the fluoropolymer is 90 mol% or more based on all polymerized units of the fluoropolymer, the polymer (1) is a polymer of a monomer (1) represented by the general formula (1) below, a polymerized unit (1) derived from the monomer (1) in the polymer (1) is 50% by mass or more based on all polymerized units of the polymer (1), and the content of a dimer and a trimer of the monomer (1) in the polymer (1) is 1.0% by mass or less based on the polymer (1).

$$CF_2=CF-O-R-(Rf-SO_3M)_m \qquad (1)$$

(In the formula, R is a single bond or a linking group; Rf is a fluorine-containing alkylene group having 1 to 40 carbon atoms or a fluorine-containing alkylene group having 2 to 100 carbon atoms and having an ether bond or a keto group; M is H, a metal atom, $NR^7_4$, imidazolium optionally having a substituent, pyridinium optionally having a substituent, or phosphonium optionally having a substituent; $R^7$ is H or an organic group; and m is an integer of 1 or more.)

In the composition of the present disclosure, it is preferable that the monomer (1) is a monomer (2) represented by the following general formula (2).

$$CF_2=CF-O-Rf-SO_3M \qquad (2)$$

(In the formula, Rf and M are as described above.)

In the composition of the present disclosure, it is preferable that the polymer (1) is a copolymer of the monomer (1) and a monomer represented by the general formula $CFR^{11}=CR^{11}_2$, wherein $R^{11}$ is independently H, F, or a perfluoroalkyl group having 1 to 4 carbon atoms.

In the composition of the present disclosure, it is preferable that the content of the polymerized unit (1) derived from the monomer (1) is 50 to 94% by mass based on all polymerized units constituting the polymer (1), and the content of a polymerized unit (M) derived from the monomer represented by the general formula $CFR^{11}=CR^{11}_2$, wherein $R^{11}$ is independently H, F, or a perfluoroalkyl group having 1 to 4 carbon atoms, is 6 to 50% by mass based on all polymerized units constituting the polymer (1).

In the composition of the present disclosure, it is preferable that the alternating ratio of the polymerized unit (1) and the polymerized unit (M) is 40% or more.

In the composition of the present disclosure, it is preferable that the fluoropolymer is a polytetrafluoroethylene.

In the composition of the present disclosure, it is preferable that the fluoropolymer is a perfluoroelastomer.

In the composition of the present disclosure, when the fluoropolymer is the polytetrafluoroethylene or the perfluoroelastomer, it is preferable that the metal content in the composition is 10 ppm by mass or less.

The present disclosure also provides a composition comprising a polymer (1) and a polytetrafluoroethylene, wherein the polytetrafluoroethylene is a high-molecular-weight polytetrafluoroethylene, the polymer (1) is a polymer of a monomer (1) represented by the general formula (1) below, and the content of a dimer and a trimer of the monomer (1) in the polymer (1) is 1.0% by mass or less based on the polymer (1).

$$CF_2=CF-O-R-(Rf-SO_3M)_m \qquad (1)$$

(In the formula, R is a single bond or a linking group; Rf is a fluorine-containing alkylene group having 1 to 40 carbon atoms or a fluorine-containing alkylene group having 2 to 100 carbon atoms and having an ether bond or a keto group; M is H, a metal atom, $NR^7_4$, imidazolium optionally having a substituent, pyridinium optionally having a substituent, or phosphonium optionally having a substituent; $R^7$ is H or an organic group; and m is an integer of 1 or more.)

In the composition of the present disclosure, it is preferable that the monomer (1) is a monomer (2) represented by the following general formula (2).

$$CF_2=CF-O-Rf-SO_3M \qquad (2)$$

(In the formula, Rf and M are as described above.)

EFFECTS OF INVENTION

According to the present disclosure, there can be provided a method for producing a fluoropolymer using a polymer having a large number of sulfonic acid groups or sulfonic acid salt groups, by which a fluoropolymer can be produced that is substantially free from a dimer and a trimer of a monomer constituting the polymer and contains a polymerized unit derived from a perfluoromonomer in a high content.

According to the present disclosure, there can also be provided a method for producing a polytetrafluoroethylene using a polymer having sulfonic acid groups or sulfonic acid salt groups, by which a polytetrafluoroethylene can be produced that is substantially free from a dimer and a trimer of a monomer constituting the polymer and has a high molecular weight.

According to the present disclosure, there can also be provided a composition that comprises a polymer having a large number of sulfonic acid groups or sulfonic acid salt groups and a fluoropolymer containing a polymerized unit derived from a perfluoromonomer in a high content and that is substantially free from a dimer and a trimer of a monomer constituting the polymer.

According to the present disclosure, there can also be provided a composition that comprises a polymer having sulfonic acid groups or sulfonic acid salt groups and a polytetrafluoroethylene having a high molecular weight and that is substantially free from a dimer and a trimer of a monomer constituting the polymer.

DESCRIPTION OF EMBODIMENTS

Before describing the present disclosure in detail, some terms used in the present disclosure will be defined or described.

In the present disclosure, the fluororesin is a partially crystalline fluoropolymer which is a fluoroplastic. The fluororesin has a melting point and has thermoplasticity, and may be either melt-fabricable or non melt-processible.

The melt-fabricable in the present disclosure, means that a polymer has an ability to be processed in a molten state using a conventional processing device such as an extruder or an injection molding machine. Thus, a melt-fabricable fluororesin usually has a melt flow rate of 0.01 to 500 g/10 min as measured by the measurement method to be described later.

The fluoroelastomer in the present disclosure, is an amorphous fluoropolymer. The term "amorphous" means that a fluoropolymer has a melting peak ($\Delta H$) of 4.5 J/g or lower as determined by differential scanning calorimetry (DSC) (temperature-increasing rate: 10°C/min) or differential thermal analysis (DTA) (temperature-increasing rate: 10°C/min). The fluoroelastomer exhibits elastomeric characteristics when crosslinked. The elastomeric characteristics mean that a polymer has an ability to be stretched and to retain its original length when the force required to stretch the polymer is no longer applied.

The partially fluorinated elastomer in the present disclosure, means a fluoropolymer containing a fluoromonomer unit, having a perfluoromonomer unit content of less than 90 mol% based on all polymerized units, having a glass transition temperature of 20°C or lower, and having a melting peak ($\Delta H$) of 4.5 J/g or lower.

The perfluoroelastomer (perfluororubber) in the present disclosure, means a fluoropolymer having a perfluoromonomer unit content of 90 mol% or more, preferably 91 mol% or more based on all polymerized units, having a glass transition temperature of 20°C or lower, having a melting peak ($\Delta H$) of 4.5 J/g or lower, and having a fluorine atom concentration in the fluoropolymer of 71% by mass or more, preferably 71.5% by mass or more. The fluorine atom concentration in the fluoropolymer in the present disclosure, is the concentration (% by mass) of the fluorine atoms contained in the fluoropolymer calculated based on the type and content of each monomer constituting the fluoropolymer.

The perfluoromonomer in the present disclosure, means a monomer free from a carbon-hydrogen bond in the molecule. The perfluoromonomer may be a monomer containing carbon atoms and fluorine atoms in which some of the fluorine atoms bonded to any of the carbon atoms are replaced by chlorine atoms, and may be a monomer containing a nitrogen atom, an oxygen atom, a sulfur atom, a phosphorus atom, a boron atom, or a silicon atom in addition to the carbon atoms. The perfluoromonomer is preferably a monomer in which all hydrogen atoms are replaced by fluorine atoms. The perfluoromonomer does not encompass a monomer that provides a crosslinking site.

The monomer that provides a crosslinking site is a monomer (cure-site monomer) having a crosslinkable group that provides the fluoropolymer with a crosslinking site for forming a crosslink with the curing agent.

The polytetrafluoroethylene (PTFE) in the present disclosure, is preferably a fluoropolymer having a tetrafluoroethylene unit content of 99 mol% or more based on all polymerized units.

The fluororesin other than polytetrafluoroethylene and the fluoroelastomer in the present disclosure, are each preferably a fluoropolymer having a tetrafluoroethylene content of less than 99 mol% based on all polymerized units.

The content of each of the monomers constituting the fluoropolymer can be calculated in the present disclosure, by any appropriate combination of NMR, FT-IR, elemental analysis, X-ray fluorescence analysis in accordance with the types of the monomers.

The term "organic group" in the present disclosure, means a group containing one or more carbon atoms or a group obtainable by removing one hydrogen atom from an organic compound.
Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,
RaO-,
RaCO-,
$RaSO_2$-,
RaCOO-,
RaNRaCO-,
RaCONRa-,
RaOCO-,
$RaOSO_2$-, and
$RaNRbSO_2$-,
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
each Rb is independently H or an alkyl group optionally having one or more substituents.

The organic group is preferably an alkyl group optionally having one or more substituents.
The term "substituent" in the present disclosure, means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxyamino group, a carbamoylamino group, a sulfamoyl amino group, a halogen atom, a sulfamoyl carbamoyl group, a carbamoyl sulfamoyl group, a dialiphatic oxyphosphinyl group, and a diaromatic oxyphosphinyl group.
The aliphatic group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8, preferably 1 to 4 carbon atoms in total, such as a methyl group, an ethyl group, a vinyl group, a cyclohexyl group, and a carbamoylmethyl group.
The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino

group, a carbamoylamino group, or the like. Examples of the aromatic group include aryl groups having 6 to 12 carbon atoms, preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic rings having 2 to 12, and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8, preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12, preferably 2 to 8 carbon atoms in total, and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8, preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total, preferably 1 to 4 carbon atoms in total, such as methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total, preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, aromatic sulfonamide group, and heterocyclic sulfonamide group may be, for example, a methanesulfonamide group, a benzenesulfonamide group, a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8, preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group each may have an aliphatic group, an aliphatic oxy group, a halogen atom, a carbamoyl group, a heterocyclic group ring-fused with the aryl group, and an aliphatic oxycarbonyl group, preferably an aliphatic group having 1 to 4 carbon atoms in total, an aliphatic oxy group having 1 to

4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples thereof include alkylthio groups having 1 to 8 carbon atoms in total, more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino group having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

The ranges expressed by the endpoints in the present disclosure, each include all numerical values within the range (for example, the range of 1 to 10 includes 1.4, 1.9, 2.33, 5.75, 9.98, and the like).

The phrase "at least one" in the present disclosure, includes all numerical values equal to or greater than 1 (e.g., at least 2, at least 4, at least 6, at least 8, at least 10, at least 25, at least 50, at least 100, and the like) .

Hereinafter, specific embodiments of the present disclosure will be described in detail, but the present disclosure is not limited to the following embodiments.

The production method of the present disclosure is a method for producing a fluoropolymer, the method comprising polymerizing a perfluoromonomer in an aqueous medium in the presence of a polymer (1) to obtain a fluoropolymer (hereinafter, this may be referred to as a first production method of the present disclosure).

<Polymer (1)>

The polymer (1) used in the first production method of the present disclosure is a polymer of a monomer (1) represented by the general formula (1) below, in which a polymerized unit (1) derived from the monomer (1) in the polymer (1) is 50% by mass or more based on all polymerized units of the polymer (1), and the content of a dimer and a trimer of the monomer (1) in the polymer (1) is 1.0% by mass or less based on the polymer (1).

The monomer (1) is represented by the following general formula (1).

$$CF_2=CF\text{-}O\text{-}R\text{-}(Rf\text{-}SO_3M)_m \qquad (1)$$

(In the formula, R is a single bond or a linking group; Rf is a fluorine-containing alkylene group having 1 to 40 carbon atoms, or a fluorine-containing alkylene group having 2 to 100 carbon atoms and having an ether bond or a keto group; M is H, a metal atom, $NR^7_4$, imidazolium optionally having a substituent, pyridinium optionally having a substituent or phosphonium optionally having a substituent; $R^7$ is H or an organic group; and m is an integer of 1 or more.)

In the production method of the present disclosure, as the monomer (1), one type of monomer or two or more types of monomers can be used.

The polymer (1) may be a homopolymer of the monomer (1) or may be a copolymer thereof with another monomer.

R is a single bond or a linking group. The term "linking group" in the present disclosure, refers to a (m+1)-valent linking group, and when m is 1, it is a divalent linking group. It is preferable that the linking group contains at least one carbon atom, and the number of carbon atoms may be 2 or more, may be 4 or more, may be 8 or more, may be 10 or more, or may be 20 or more. The upper limit thereof is not limited, and may be 100 or less, and may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas, and carbamates. The linking group may be free from carbon atoms and may be a catenary heteroatom such as oxygen, sulfur, or nitrogen.

m is an integer of 1 or more, preferably 1 or 2, and more preferably 1. When m is an integer of 2 or more, Rf and M may be the same or different.

Next, a suitable configuration in the case where m is 1 in the general formula (1) will be described.

In the case where m is 1 in the general formula (1), it is preferable that R is a single bond.

That is, it is preferable that the monomer (1) is a monomer (2) represented by the general formula (2) below.

It is also preferable that the polymer (1) is a polymer (2) comprising a polymerized unit (2) derived from the

monomer (2) represented by the general formula (2).

$$CF_2=CF\text{-}O\text{-}Rf\text{-}SO_3M \qquad (2)$$

(In the formula, Rf and M are as described above.)

Rf is a fluorine-containing alkylene group having 1 to 40 carbon atoms, a fluorine-containing alkylene group having 2 to 100 carbon atoms and having an ether bond, or a fluorine-containing alkylene group having 2 to 100 carbon atoms and having a keto group. The fluorine-containing alkylene group having 2 to 100 carbon atoms and having an ether bond is an alkylene group which does not include a structure in which an oxygen atom is an end and contains an ether bond between carbon atoms.

The fluorine-containing alkylene group for Rf preferably has 2 or more carbon atoms. The fluorine-containing alkylene group also preferably has 30 or less carbon atoms, more preferably 20 or less carbon atoms, still more preferably 10 or less carbon atoms, and particularly preferably 5 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$, $-CF_2CF_2CF_2-$, and $-CF_2CF_2CF_2CF_2-$. The fluorine-containing alkylene group is preferably a perfluoroalkylene group, and more preferably an unbranched, linear perfluoroalkylene group.

The fluorine-containing alkylene group having an ether bond preferably has 3 or more carbon atoms. The fluorine-containing alkylene group having an ether bond preferably has 60 or less carbon atoms, more preferably 30 or less carbon atoms, still more preferably 12 or less carbon atoms, and particularly preferably 5 or less carbon atoms. It is also preferable that the fluorine-containing alkylene group having an ether bond is a divalent group represented by the following general formula:

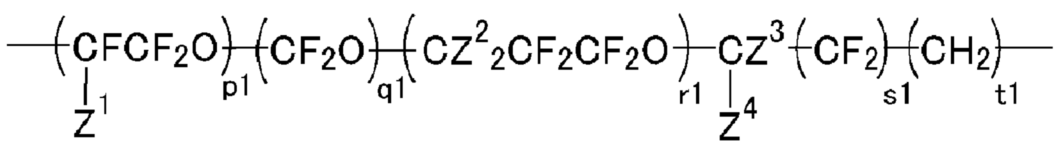

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF_2CF(CF_3)OCF_2-$, $-CF_2CF(CF_3)OCF_2CF_2-$, $-CF_2CF(CF_3)OCF_2CF_2CF_2-$, $-CF(CF_3)CF_2\text{-}O\text{-}CF(CF_3)-$, $-(CF(CF_3)CF_2\text{-}O)_n\text{-}CF(CF_3)-$ (where n is an integer of 1 to 10), $-CF(CF_3)CF_2\text{-}O\text{-}CF(CF_3)CH_2-$, $-(CF(CF_3)CF_2\text{-}O)_n\text{-}CF(CF_3)CH_2-$(where n is an integer of 1 to 10), $-CH_2CF_2CF_2O\text{-}CH_2CF_2CH_2-$, $-CF_2CF_2CF_2O\text{-}CF_2-$, $-CF_2CF_2CF_2O\text{-}CF_2CF_2-$, $-CF_2CF_2CF_2O\text{-}CF_2CF_2CF_2-$, $-CF_2CF_2CF_2O\text{-}CF_2CF_2CH_2-$, $-CF_2CF_2O\text{-}CF_2-$, and $-CF_2CF_2O\text{-}CF_2CH_2-$. The fluorine-containing alkylene group having an ether bond is preferably a perfluoroalkylene group.

The fluorine-containing alkylene group having a keto group preferably has 3 or more carbon atoms. The fluorine-containing alkylene group having a keto group preferably has 60 or less carbon atoms, more preferably 30 or less carbon atoms, still more preferably 12 or less carbon atoms, and particularly preferably 5 or less carbon atoms.

Specific examples of the fluorine-containing alkylene group having a keto group include $-CF_2CF(CF_3)CO\text{-}CF_2-$, $-CF_2CF(CF_3)CO\text{-}CF_2CF_2-$, $-CF_2CF(CF_3)CO\text{-}CF_2CF_2CF_2-$, and $-CF_2CF(CF_3)CO\text{-}CF_2CF_2CF_2CF_2-$. The fluorine-containing alkylene group having a keto group is preferably a perfluoroalkylene group.

Water may be added to the keto group in the fluorine-containing alkylene group. Accordingly, the monomer (1) may be a hydrate. Examples of the fluorine-containing alkylene group in which water is added to the keto group include $-CF_2CF(CF_3)C(OH)_2\text{-}CF_2-$, $-CF_2CF(CF_3)C(OH)_2\text{-}CF_2CF_2-$, $-CF_2CF(CF_3)C(OH)_2\text{-}CF_2CF_2CF_2-$, and $-CF_2CF(CF_3)C(OH)_2\text{-}CF_2CF_2CF_2CF_2-$.

M may be the same or different in each occurrence and is H, a metal atom, $NR^7_4$, imidazolium optionally having a substituent, pyridinium optionally having a substituent, or phosphonium optionally having a substituent, and $R^7$ is H or an organic group.

$R^7$ is preferably H or a $C_{1\text{-}10}$ organic group, more preferably H or a $C_{1\text{-}4}$ organic group, and still more preferably H or a $C_{1\text{-}4}$ alkyl group.

Examples of the metal atom include alkali metals (Group 1) and alkaline earth metals (Group 2), and preferred is Na, K, or Li.

M may be the same or different in each occurrence, and is preferably H, a metal atom, or $NR^7_4$, more preferably H, an alkali metal (Group 1), an alkaline earth metal (Group 2), or $NR^7_4$, still more preferably H, Na, K, Li, or $NH_4$, further preferably H, Na, K, or $NH_4$, and particularly preferably H, Na, or $NH_4$.

The monomer represented by the general formula (1) is preferably at least one selected from the group consisting of monomers represented by the general formulas (1a), (1b), (1c), (1d), and (1e):

$$CF_2=CF-O-(CF_2)_{n1}-SO_3M \qquad (1a)$$

wherein n1 represents an integer of 1 to 10, and M is as defined above;

$$CF_2=CF-O-(CF_2C(CF_3)F)_{n2}-SO_3M \qquad (1b)$$

wherein n2 represents an integer of 1 to 5, and M is as defined above;

$$CF_2=CF-O-(CFX^1)_{n3}-SO_3M \qquad (1c)$$

wherein $X^1$ represents F or $CF_3$, n3 represents an integer of 1 to 10, and M is as defined above;

$$CF_2=CF-O-(CF_2CFX^1O)_{n4}-(CF_2)_{n6}-SO_3M \qquad (1d)$$

wherein n4 represents an integer of 1 to 10, n6 represents an integer of 1 to 3, and M and $X^1$ are as defined above; and

$$CF_2=CF-O-(CF_2CF_2CFX^1O)_{n5}-CF_2CF_2CF_2-SO_3M \qquad (1e)$$

wherein n5 represents an integer of 0 to 10, and M and $X^1$ are as defined above.

In the formula (1a), n1 is preferably an integer of 5 or less, and more preferably an integer of 2 or less. M is preferably H, Na, K, or $NH_4$.

Examples of the monomer represented by the general formula (1a) include $CF_2=CF(OCF_2CF_2SO_3M)$, $CF_2=CF(OCF_2SO_3M)$, $CF_2=CF(OCF_2CF_2CF_2SO_3M)$, and $CF_2=CFO(CF_2CF_2CF_2CF_2)SO_3M$, wherein M is as defined above.

In the general formula (1b), n2 is preferably an integer of 3 or less from the viewpoint of dispersion stability of the resulting composition. M is preferably H, Na, K, or $NH_4$.

In the formula (1c), n3 is preferably an integer of 5 or less from the viewpoint of water-solubility, and M is preferably H, Na, K, or $NH_4$.

In the formula (1d), $X^1$ is preferably $-CF_3$ from the viewpoint of dispersion stability of the composition, n4 is preferably an integer of 5 or less from the viewpoint of water-solubility, and M is preferably H, Na, K, or $NH_4$.

Examples of the monomer represented by the formula (1d) include $CF_2=CFOCF_2CF(CF_3)OCF_2SO_3M$, $CF_2=CFOCF_2CF(CF_3)OCF_2CF_2SO_3M$, and $CF_2=CFOCF_2CF(CF_3)OCF_2CF_2CF_2SO_3M$, wherein M is as defined above.

In the formula (1e), n5 is preferably an integer of 5 or less from the viewpoint of water-solubility, and M is preferably H, Na, K, or $NH_4$.

An example of the monomer represented by the general formula (1e) is $CF_2=CFOCF_2CF_2CF_2SO_3M$, wherein M represents H, $NH_4$, or an alkali metal.

The monomer (1) is preferably $CF_2=CF(OCF_2CF_2SO_3M)$, wherein M is as defined above.

Next, a suitable configuration in the case where m is an integer of 2 or more in the general formula (1) will be described.

In the case where m is 2 in the general formula (1), it is preferable that R is a linking group containing at least one carbon atom.

It is also preferable that the monomer (1) is a monomer (3) represented by the general formula (3) below.

It is also preferable that the polymer (1) is a polymer (3) comprising a polymerized unit (3) derived from the monomer (3) represented by the general formula (3).

$$CF_2=CF-O-Q^{F1}-CF(-Rf-SO_3M)_2 \qquad (3)$$

(In the formula, Rf and M are as defined above, $Q^F$ is a single bond, a fluorine-containing alkylene group optionally containing an ether bond between carbon atoms, or a fluorine-containing oxyalkylene group optionally containing an ether bond between carbon atoms)

Examples of the monomer (3) represented by the general formula (3) include:

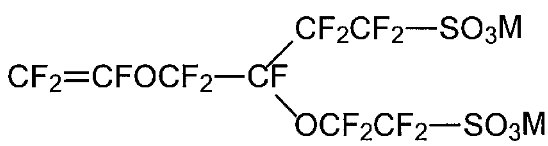

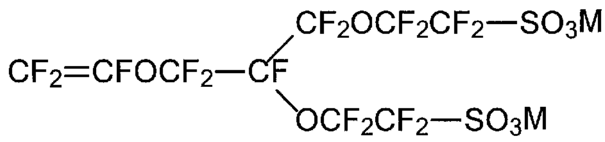

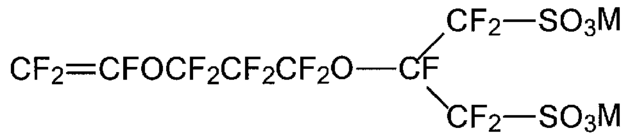

and the like.

The polymer (1) may be a homopolymer containing only the polymerized unit (1), or may be a copolymer of the polymerized unit (1) and a polymerized unit derived from another monomer copolymerizable with the monomer (1) represented by the general formula (1). From the viewpoint of solubility in the aqueous medium, preferred is a homopolymer containing only the polymerized unit (1). The polymerized unit (1) may be the same or different in each occurrence, and the polymer (1) may comprise polymerized units (1) derived from two or more different monomers represented by the general formula (1).

Examples of the other monomer copolymerizable with the monomer (1) include a monomer represented by the following general formula.

General formula: $CX_2$=CX-O-Rf-COOM

(In the formula, X is independently F or $CF_3$, and Rf and M are as defined in the general formula (1).)

The other monomer is preferably a monomer represented by the general formula: $CFR^{11}=CR^{11}_2$, wherein $R^{11}$ is independently H, F, or a perfluoroalkyl group having 1 to 4 carbon atoms. It is also preferable that the other monomer is a fluorine-containing ethylenic monomer having 2 or 3 carbon atoms. Examples of the other monomer include $CF_2=CF_2$, $CF_2=CFCl$, $CH_2=CF_2$, $CFH=CH_2$, $CFH=CF_2$, $CF_2=CFCF_3$, $CH_2=CFCF_3$, $CH_2=CHCF_3$, $CHF=CHCF_3$ (E isomer), and $CHF=CHCF_3$ (Z isomer).

Of these, as the other monomer, preferred is at least one selected from the group consisting of tetrafluoroethylene ($CF_2=CF_2$), chlorotrifluoroethylene ($CF_2=CFCl$), and vinylidene fluoride ($CH_2=CF_2$) from the viewpoint of achieving good copolymerizability, more preferred is at least one selected from the group consisting of tetrafluoroethylene and vinylidene fluoride, and still more preferred is vinylidene fluoride. Accordingly, the polymerized unit derived from the other monomer is preferably at least one selected from the group consisting of a polymerized unit derived from tetrafluoroethylene and a polymerized unit derived from vinylidene fluoride, and still more preferably a polymerized unit derived from vinylidene fluoride. The polymerized unit derived from the other monomer may be the same or different in each occurrence, and the fluoropolymer may comprise polymerized units derived from two or more different other monomers.

In the case where the polymer (1) contains the polymerized unit (1) and the polymerized unit derived from the other monomer copolymerizable with the monomer (1), the content of the polymerized unit (1) derived from the monomer (1) is preferably 50 to 94% by mass, more preferably 63 to 90% by mass, and still more preferably 67 to 87% by mass based on all polymerized units constituting the polymer (1), and the content of the polymerized unit derived from the other monomer is preferably 6 to 50% by mass, more preferably 10 to 37% by mass, and still more preferably 13 to 33% by mass based on all polymerized units constituting the polymer (1). Such a configuration is particularly suitable in the case where the polymerized unit derived from the other monomer copolymerizable with the monomer (1) is a polymerized unit (M) derived from a monomer represented by the general formula $CFR^{11}=CR^{11}_2$. In the case where the fluoropolymer contains the polymerized unit (1) and the polymerized unit (M), the total content of the polymerized unit (1) and the polymerized unit (M) is preferably 80 to 100% by mass, more preferably 85% by mass or more, still more preferably 90% by mass or more, and particularly preferably 99% by mass or more based on all polymerized units constituting the fluoropolymer. Also, in the case where the fluoropolymer contains the polymerized unit (1) and a polymerized unit (M1) derived from a monomer represented by $CX_2$=CX-O-Rf-COOM, the total content of the polymerized unit (1) and the polymerized unit (M1) is preferably 80 to 100% by mass, more preferably 85% by mass or more, still more preferably 90% by mass or more, and particularly preferably 99% by mass or more based on all polymerized units constituting the fluoropolymer.

In the case where the polymer (1) contains the polymerized unit (1) and the polymerized unit derived from the other monomer copolymerizable with the monomer (1), the alternating ratio of the polymerized unit (1) and the polymerized unit derived from the other monomer copolymerizable with the monomer (1) is preferably 40% or more, more preferably 50% or more, still more preferably 60% or more, further preferably 70% or more, particularly preferably 80% or more,

and most preferably 90% or more. The alternating ratio may be, for example, 40 to 99%. Such a configuration is particularly suitable in the case where the polymerized unit derived from the other monomer copolymerizable with the monomer (1) is the polymerized unit (M) derived from the monomer represented by the general formula $CFR^{11}=CR^{11}_2$.

The alternating ratio of the polymerized unit (1) and the polymerized unit derived from the other monomer copolymerizable with the monomer (1) in the polymer (1) can be determined by $^{19}F$-NMR analysis of the fluoropolymer.

Examples of the other monomer further include a monomer represented by the following general formula (n1-2):

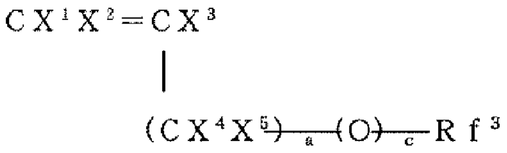

(n1-2)

wherein $X^1$ and $X^2$ are the same or different and are each H or F; $X^3$ is H, F, Cl, $CH_3$, or $CF_3$; $X^4$ and $X^5$ are the same or different and are each H or F; and a and c are the same or different and are each 0 or 1; and $Rf^3$ is a fluorine-containing alkyl group having 1 to 40 carbon atoms, or a fluorine-containing alkyl group having 2 to 100 carbon atoms and having an ether bond.

Specifically, preferred examples thereof include $CH_2=CFCF_2-O-Rf^3$, $CF_2=CF-O-Rf^3$, $CF_2=CFCF_2-O-Rf^3$, $CF_2=CF-Rf^3$, $CH_2=CH-Rf^3$, and $CH_2=CH-O-Rf^3$ (wherein $Rf^3$ is as described in the above formula (n1-2)).

Another example of the other monomer is a fluorine-containing acrylate monomer represented by the following formula (n2-1):

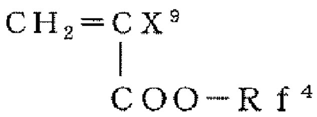

(n2-1)

wherein $X^9$ is H, F, or $CH_3$; and $Rf^4$ is a fluorine-containing alkyl group having 1 to 40 carbon atoms, or a fluorine-containing alkyl group having 2 to 100 carbon atoms and having an ether bond. Examples of the $Rf^4$ group include:

$$-(CH_2)_{d1}-(CF_2)_{e1}-Z^8$$

wherein $Z^8$ is H, F, or Cl; d1 is an integer of 1 to 4; and e1 is an integer of 1 to 10,

$-CH(CF_3)_2$.

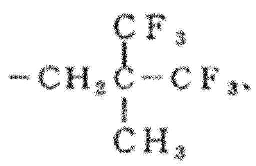

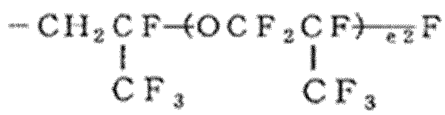

wherein e2 is an integer of 1 to 5,

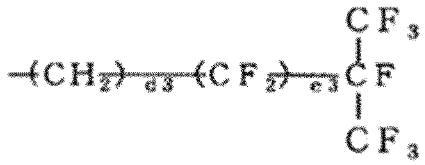

wherein d3 is an integer of 1 to 4; and e3 is an integer of 1 to 10.

Another example of the other monomer is a fluorine-containing vinyl ether represented by the following formula (n2-2) :

$CH_2=CHO-Rf^5$ (n2-2)

wherein $Rf^5$ is a fluorine-containing alkyl group having 1 to 40 carbon atoms, or a fluorine-containing alkyl group having 2 to 100 carbon atoms and having an ether bond.

Specific preferred examples of the monomer of the general formula (n2-2) include:

$$CH_2=CHOCH_2-(CF_2)_{e4}-Z^9$$

wherein $Z^9$ is H or F; and e4 is an integer of 1 to 10,

$$CH_2=CHOCH_2CH_2-(CF_2)_{e5}-F$$

wherein e5 is an integer of 1 to 10,

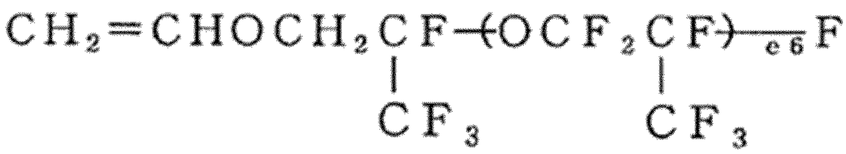

wherein e6 is an integer of 1 to 10.

More specific examples thereof include:

$CH_2=CHOCH_2CF_2CF_2H$,

$$CH_2=CHOCH_2-(CF_2CF_2)_2-H、$$

$$CH_2=CHOCH_2-(CF_2CF_2)_3-H、$$

$CH_2=CHOCH_2CF_2CF_3$,

$CH_2=CHOCH_2CF_3$,

$$CH_2=CHOCH_2CH_2-(CF_2CF_2)_4-F、$$

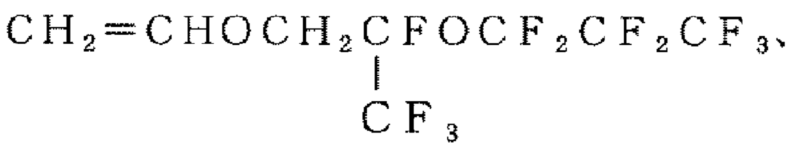

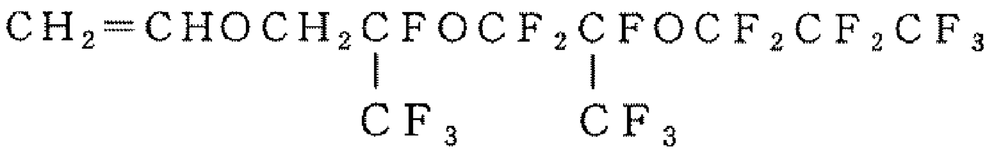

and the like.

Additional examples of the other monomer include a fluorine-containing allyl ether represented by the following general formula (n2-3):

$CH_2=CHCH_2O\text{-}Rf^6$ (n2-3)

wherein $Rf^6$ is a fluorine-containing alkyl group having 1 to 40 carbon atoms, or a fluorine-containing alkyl group having 2 to 100 carbon atoms and having an ether bond; and a fluorine-containing vinyl monomer represented by the following general formula (n2-4):

$CH_2=CH\text{-}Rf^7$ (n2-4)

wherein $Rf^7$ is a fluorine-containing alkyl group having 1 to 40 carbon atoms, or a fluorine-containing alkyl group having 2 to 100 carbon atoms and having an ether bond.

Specific examples of the monomers represented by the general formulas (n2-3) and (n2-4) include monomers such as:

$CH_2=CHCH_2OCH_2CF_2CF_2H$,

$CH_2=CHCH_2OCH_2\text{-}(CF_2CF_2)_2\text{-}H$、

$CH_2=CHCH_2OCH_2\text{-}(CF_2CF_2)_3\text{-}H$、

$CH_2=CHCH_2OCH_2CF_2CF_3$,

$CH_2=CHCH_2OCH_2CF_3$,

$CH_2=CHCH_2OCH_2CH_2\text{-}(CF_2CF_2)_4\text{-}F$、

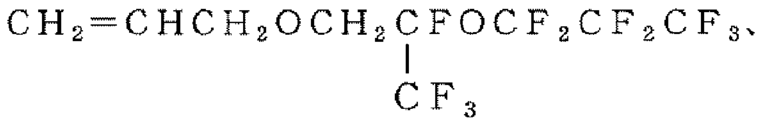

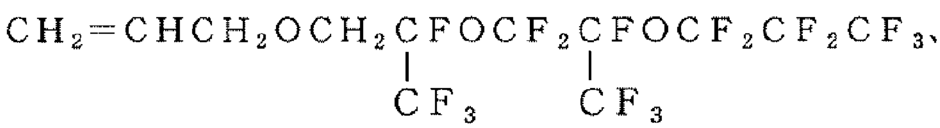

$CH_2=CH\text{-}(CF_2CF_2)_2\text{-}F$、

$CH_2=CH\text{-}(CF_2CF_2)_4\text{-}F$

and the like.

In the polymer (1), the content of the polymerized unit (1) is, in the preferred order, 50% by mass or more, more

than 50% by mass, 60% by mass or more, 70% by mass or more, 80% by mass or more, 90% by mass or more, or 99% by mass or more based on all polymerized units. It is particularly preferable that the content of the polymerized unit (1) is substantially 100% by mass, and it is most preferable that the polymer (1) contains only the polymerized unit (1).

In the polymer (1), the content of the polymerized unit derived from the other monomer copolymerizable with the monomer represented by the general formula (1) is, in the preferred order, 50% by mass or less, less than 50% by mass, 40% by mass or less, 30% by mass or less, 20% by mass or less, 10% by mass or less, or 1% by mass or less based on all polymerized units. It is particularly preferable that the content of the polymerized unit derived from the other monomer copolymerizable with the monomer represented by the general formula (1) is substantially 0% by mass, and it is most preferable that the polymer (1) contains no polymerized unit derived from the other monomer.

The lower limit of the number average molecular weight of the polymer (1) is, in the preferred order, $0.3 \times 10^4$ or more, $0.4 \times 10^4$ or more, $0.5 \times 10^4$ or more, $0.7 \times 10^4$ or more, $0.8 \times 10^4$ or more, $1.0 \times 10^4$ or more, $1.2 \times 10^4$ or more, $1.4 \times 10^4$ or more, $1.6 \times 10^4$ or more, $1.8 \times 10^4$ or more, $2.0 \times 10^4$ or more, or $3.0 \times 10^4$ or more. The upper limit of the number average molecular weight of the polymer (1) is, in the preferred order, $75.0 \times 10^4$ or less, $50.0 \times 10^4$ or less, $40.0 \times 10^4$ or less, $30.0 \times 10^4$ or less, or $20.0 \times 10^4$ or less.

The lower limit of the weight average molecular weight of the polymer (1) is, in the preferred order, $0.4 \times 10^4$ or more, $0.5 \times 10^4$ or more, $0.6 \times 10^4$ or more, $0.8 \times 10^4$ or more, $1.0 \times 10^4$ or more, $1.2 \times 10^4$ or more, $1.4 \times 10^4$ or more, $1.7 \times 10^4$ or more, $1.9 \times 10^4$ or more, $2.1 \times 10^4$ or more, $2.3 \times 10^4$ or more, $2.7 \times 10^4$ or more, $3.1 \times 10^4$ or more, $3.5 \times 10^4$ or more, $3.9 \times 10^4$ or more, $4.3 \times 10^4$ or more, $4.7 \times 10^4$ or more, $5.1 \times 10^4$ or more, $10.0 \times 10^4$ or more, $15.0 \times 10^4$ or more, $20.0 \times 10^4$ or more, or $25.0 \times 10^4$ or more. The upper limit of the weight average molecular weight of the polymer (1) is, in the preferred order, $150.0 \times 10^4$ or less, $100.0 \times 10^4$ or less, $60.0 \times 10^4$ or less, $50.0 \times 10^4$ or less, or $40.0 \times 10^4$ or less.

The molecular weight distribution (Mw/Mn) of the polymer (1) is, in the preferred order, 3.0 or less, 2.7 or less, 2.4 or less, 2.2 or less, 2.0 or less, 1.9 or less, 1.7 or less, 1.5 or less, 1.4 or less, or 1.3 or less.

The number average molecular weight and the weight average molecular weight are molecular weight values calculated by gel permeation chromatography (GPC) using monodisperse polyethylene oxide (PEO) and polyethylene glycol (PEG) as standards. Also, in the case where measurement by GPC is not possible, the number average molecular weight of the polymer (1) can be determined by the correlation between the number average molecular weight calculated from the number of end groups obtained by NMR, FT-IR, or the like and the melt flow rate. The melt flow rate can be measured in accordance with JIS K 7210.

The polymer (1) normally has an end group. The end group is an end group produced during polymerization, and a representative end group is independently selected from hydrogen, iodine, bromine, linear or branched alkyl groups, and linear or branched fluoroalkyl groups, and may optionally contain at least one catenary heteroatom. It is preferable that the alkyl group or fluoroalkyl group has 1 to 20 carbon atoms. These end groups are generally produced from the initiator or chain transfer agent used to form the polymer (1), or produced during the chain transfer reaction.

It is preferable that the polymer (1) has an ion exchange rate (IXR) of 53 or less. The IXR is defined as the number of carbon atoms in the polymer main chain relative to the ionic groups. Precursor groups that become ionic by hydrolysis (for example, $-SO_2F$) are not considered to be ionic groups, for the purpose of determining the IXR.

The IXR is preferably 0.5 or more, more preferably 1 or more, still more preferably 3 or more, further preferably 4 or more, yet more preferably 5 or more, and particularly preferably 8 or more. The IXR is also more preferably 43 or less, still more preferably 33 or less, and particularly preferably 23 or less.

The ion exchange capacity of the polymer (1) is, in the preferred order, 0.80 meq/g or more, 1.50 meq/g or more, 1.75 meq/g or more, 2.00 meq/g or more, 2.20 meq/g or more, more than 2.20 meq/g, 2.50 meq/g or more, 2.60 meq/g or more, 3.00 meq/g or more, 3.20 meq/g or more, or 3.50 meq/g or more. The ion exchange capacity is the content of ionic groups (anionic groups) in the polymer (1) and can be determined by calculation from the compositional features of the polymer (1) .

In the polymer (1), the ionic groups (anionic groups) are typically distributed along the polymer main chain. The polymer (1) comprises the polymer main chain together with repeating side chains bonded to this main chain, and these side chains preferably have ionic groups.

It is preferable that the polymer (1) has water-solubility. The term "water-solubility" refers to the property of being easily dissolved or dispersed in an aqueous medium. When the polymer has water-solubility, the particle size thereof cannot be measured by, for example, dynamic light scattering (DLS), or a particle size of 10 nm or less is exhibited.

It is preferable that the polymer (1) has sufficient water-solubility. In general, the higher the content of the polymer (1) in the aqueous solution, the more difficult it becomes for the polymer (1) to be sufficiently dissolved or dispersed in the aqueous medium. Accordingly, even when the content of the polymer (1) in the aqueous solution is high, the polymer (1) of which particle size cannot be measured by dynamic light scattering (DLS) can be said to have high water-solubility. It is preferable that the particle size of the polymer (1) cannot be measured even when it is contained in the aqueous solution in a content of 1.0% by mass. It is preferable that the particle size of the polymer (1) cannot be measured even when it is contained in the aqueous solution in a content of, more preferably 1.5% by mass and still

more preferably 2.0% by mass.

The viscosity of the aqueous solution of the polymer (1) is preferably 5.0 mPa.s or more, more preferably 8.0 mPa.s or more, still more preferably 10.0 mPa.s or more, particularly preferably 12.0 mPa.s or more, and most preferably 14.0 mPa.s or more, and it is preferably 100.0 mPa.s or less, more preferably 50.0 mPa.s or less, still more preferably 25.0 mPa.s or less, and yet more preferably 20.0 mPa.s or less.

The viscosity of the aqueous solution of the polymer (1) can be specified by adjusting the content of the polymer (1) in the aqueous solution to 33% by mass based on the aqueous solution and measuring the viscosity of the obtained aqueous solution at 20°C using a tuning fork vibration viscometer (model number: SV-10) manufactured by A&D Co., Ltd.

The critical micelle concentration (CMC) of the polymer (1) is preferably 0.1% by mass or more, more preferably 0.5% by mass or more, and still more preferably 1% by mass or more, and it is preferably 20% by mass or less, more preferably 10% by mass or less, and still more preferably 5% by mass or less.

The critical micelle concentration of the polymer (1) can be determined by measuring the surface tension. The surface tension can be measured with, for example, the surface tensiometer CBVP-A3 model manufactured by Kyowa Interface Science Co., Ltd.

The acid number of the polymer (1) is preferably 60 or more, more preferably 90 or more, still more preferably 120 or more, particularly preferably 150 or more, and most preferably 180 or more, and although the upper limit thereof is not limited, it is preferably 300 or less.

When the polymer (1) has $-SO_3M$ other than $-SO_3H$, that is, $-SO_3M$ (M is a metal atom, $-NR^7_4$, imidazolium optionally having a substituent, pyridinium optionally having a substituent, or phosphonium optionally having a substituent.), the acid number of the polymer (1) can be measured by converting $-SO_3M$ to $-SO_3H$ and then performing acid-base titration of $-SO_3H$.

The polymer (1) can be produced by the production method for producing the polymer (1) by carrying out polymerization for the polymer (1).

Since the polymer (1) having an even higher molecular weight can be easily produced, the oxygen concentration in the reaction system of polymerization is preferably 1,500 ppm by volume or less, more preferably 500 ppm by volume or less, still more preferably 100 ppm by volume or less, and particularly preferably 50 ppm by volume or less. The oxygen concentration in the reaction system is usually 0.01 ppm by volume or more. In the above production method, it is preferable that the oxygen concentration in the reaction system is maintained in the above range over the entire period of polymerization for the polymer (1).

The oxygen concentration in the reaction system of polymerization can be controlled by, for example, circulating an inert gas such as nitrogen or argon, or, in the case of using a gaseous monomer, that gaseous monomer in the liquid phase or gas phase in the reactor. The oxygen concentration in the polymerization reaction system can be determined by measuring and analyzing the gas that has come out of the discharge gas line of the polymerization system with a low concentration oxygen analyzer.

Since the polymer (1) having an even higher molecular weight can be easily produced, the polymerization temperature for the polymer (1) is preferably 70°C or lower, more preferably 65°C or lower, still more preferably 60°C or lower, further preferably 55°C or lower, yet more preferably 50°C or lower, particularly preferably 45°C or lower, and most preferably 40°C or lower, and it is preferably 10°C or higher, more preferably 15°C or higher, and still more preferably 20°C or higher.

In the above production method, the polymer (1) and the above-mentioned other monomer may be copolymerized.

In the above production method, polymerization may be performed in the presence of a pH adjuster. The pH adjuster may be added before the initiation of polymerization or may be added after the initiation of polymerization.

As the pH adjuster, ammonia, sodium hydroxide, potassium hydroxide, sodium carbonate, potassium carbonate, ammonium carbonate, sodium bicarbonate, potassium bicarbonate, ammonium bicarbonate, sodium phosphate, potassium phosphate, sodium citrate, potassium citrate, ammonium citrate, sodium gluconate, potassium gluconate, ammonium gluconate, or the like can be used. The pH can be measured with a pH meter manufactured by Orion.

The polymerization pressure is usually at the atmospheric pressure to 10 MPaG. The polymerization pressure is determined as appropriate in accordance with the types of the monomers used, the target molecular weight of the polymer (1), and the reaction rate.

The polymerization time is usually 1 to 200 hours, and it may be 5 to 100 hours.

In the above production method, the polymerization of the monomer (1) may be performed in an aqueous medium, or may be performed in the absence of an aqueous medium. Also, the polymerization of the monomer (1) may be performed in the absence of an aqueous medium and in the presence of a nonaqueous medium (for example, an organic solvent such as toluene) in an amount of less than 10% by mass based on the amount of monomers containing the monomer (1). The polymerization of the monomer (1) may be emulsion polymerization or suspension polymerization, or may be bulk polymerization.

The aqueous medium is a reaction medium in which the polymerization is performed, and means a liquid

containing water. The aqueous medium may be any medium containing water, and it may be one containing water and, for example, any of fluorine-free organic solvents such as alcohols, ethers, and ketones, and/or fluorine-containing organic solvents having a boiling point of 40°C or lower. The aqueous medium is preferably water.

In the above production method, the polymerization for the polymer (1) can be carried out in the presence of a polymerization initiator. The polymerization initiator may be any polymerization initiator capable of generating radicals within the polymerization temperature range, and known oil-soluble and/or water-soluble polymerization initiators may be used. The polymerization initiator may be combined with a reducing agent, for example, to form a redox agent, which initiates the polymerization. The concentration of the polymerization initiator is determined as appropriate in accordance with the types of the monomers, the target molecular weight of the polymer (1), and the reaction rate. When the monomer (1) is polymerized in an aqueous medium, a water-soluble polymerization initiator such as a persulfate is preferably used. When the monomer (1) is polymerized in the absence of an aqueous medium, an oil-soluble polymerization initiator such as a peroxide is preferably used.

The polymerization initiator used may be an organic peroxide such as a persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Further, during the polymerization, a radical scavenger such as hydroquinone or catechol may be added or a decomposer for peroxides such as ammonium sulfite may be added to adjust the radical concentration in the system.

Among the polymerization initiators, persulfates are preferred since the polymer (1) having an even higher molecular weight can be easily produced. Examples of the persulfates include ammonium persulfate, potassium persulfate, and sodium persulfate, and ammonium persulfate is preferred.

As the polymerization initiator, an oil-soluble radical polymerization initiator may be used. The oil-soluble radical polymerization initiator may be a known oil-soluble peroxide, and representative examples thereof include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω)-hydro-dodecafluorohexanoyl)peroxide, di(ω)-hydro-tetradecafluoroheptanoyl)peroxide, di(ω)-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω)-chloro-hexafluorobutyryl)peroxide, di(ω)-chloro-decafluorohexanoyl)peroxide, di(ω)-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The polymerization initiator may be added in any amount, and the initiator in an amount that does not significantly decrease the polymerization rate (e.g., concentration of several ppm in water) or more may be added at once in the initial stage of polymerization, or may be added successively or continuously. The upper limit thereof falls within a range where the reaction temperature is allowed to increase while the polymerization reaction heat is removed through the device surfaces. The upper limit thereof is more preferably within a range where the polymerization reaction heat can be removed through the device surfaces.

In the above production method, the polymerization initiator can be added at the initiation of polymerization and can also be added during polymerization. The proportion between the amount of polymerization initiator added at the initiation of polymerization and the amount of polymerization initiator added during polymerization is preferably 95/5 to 5/95, more preferably 60/40 to 10/90, and still more preferably 30/70 to 15/85. The method for adding the polymerization initiator during polymerization is not limited, and it may be added in the entire amount at once, may be added in two or more portions, or may be added continuously.

In the above production method, since the polymer (1) having an even higher molecular weight can be easily produced, the polymerization initiator used for polymerization is preferably added in a total amount of 0.00001 to 10% by mass based on the aqueous medium. The polymerization initiator used for polymerization is added in a total amount of preferably 0.0001% by mass or more, more preferably 0.001% by mass or more, and still more preferably 0.01% by mass or more, and preferably 5% by mass or less, and more preferably 2% by mass or less.

In the above production method, since the polymer (1) having an even higher molecular weight can be easily produced, the polymerization initiator used for polymerization is preferably added in a total amount of 0.001 to 10 mol% based on the total amount of monomers used for polymerization. The polymerization initiator used for polymerization is added in a total amount of more preferably 0.005 mol% or more, still more preferably 0.01 mol% or more, yet more preferably 0.1 mol% or more, and most preferably 0.5 mol% or more, and more preferably 10 mol% or less, still more preferably 5.0 mol% or less, yet more preferably 2.5 mol% or less, particularly most preferably 2.2 mol% or less, and preferably 2.0 mol% or less.

In the above production method, since the polymer (1) having an even higher molecular weight can be easily

produced, it is preferable that the amount of monomers containing the polymer (1) present at the initiation of polymerization is 20% by mass or more based on the amount of aqueous medium present. The amount of monomers present is more preferably 30% by mass or more, and still more preferably 40% by mass or more. The upper limit of the amount of monomers present is not limited, and from the viewpoint of smoothly proceeding the polymerization, it may be 200% by mass or less. The amount of monomers present at the initiation of polymerization is the total amount of the polymer (1), and the other monomer, if present, present in the reactor at the initiation of polymerization.

When the monomer (1) is polymerized in the absence of an aqueous medium, the total amount of the polymerization initiator such as a peroxide added is preferably 0.001 to 10 mol% based on the total amount of monomers containing the monomer (1) (monomer mixture). The polymerization initiator used for polymerization is added in a total amount of more preferably 0.005 mol% or more, and still more preferably 0.01 mol% or more, and more preferably 10 mol% or less, still more preferably 5.0 mol% or less, yet more preferably 2.5 mol% or less, particularly most preferably 2.2 mol% or less, and preferably 2.0 mol% or less.

The polymerization for the polymer (1) can be performed by charging a reactor with the polymer (1), and optionally an aqueous medium, other monomers, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the monomers, the polymerization initiator, and the other additives may be added depending on the purpose.

The polymer (1) used in the production method of the present disclosure is substantially free from the dimer and trimer of the monomer (1). The dimer and trimer of the monomer (1) are usually generated when the monomer (1) is polymerized to obtain the polymer (1). The content of the dimer and trimer in the polymer (1) is 1.0% by mass or less, preferably 0.1% by mass or less, more preferably 0.01% by mass or less, still more preferably 0.001% by mass or less, and particularly preferably 0.0001% by mass or less, based on the polymer (1).

The polymer (1) used in the production method of the present disclosure may be substantially free from a dimer and a trimer constituted by the polymerized unit (1) derived from the monomer (1) and the polymerized unit derived from the other monomer copolymerizable with the monomer (1). The dimer and trimer constituted by the polymerized unit (1) and the polymerized unit derived from the other monomer are usually generated when the monomer (1) and the other monomer copolymerizable with the monomer (1) are polymerized to obtain the polymer (1). The content of the dimer and trimer constituted by the polymerized unit (1) and the polymerized unit derived from the other monomer in the polymer (1) is 1.0% by mass or less, preferably 0.1% by mass or less, more preferably 0.01% by mass or less, still more preferably 0.001% by mass or less, and particularly preferably 0.0001% by mass or less, based on the polymer (1).

The content of the dimer and trimer in the polymer (1) can be specified by carrying out gel permeation chromatography (GPC) analysis of the polymer (1) and calculating the proportion (area percentage) of the total area of the dimer and trimer peaks to the total area of each peak in the chromatogram obtained by the GPC analysis.

Also, when the content of the dimer and trimer in the polymer (1) is less than 0.5% by mass based on the polymer (1), it can be specified by measurement by liquid chromatography-mass spectrometry (LC/MS).

Specifically, aqueous solutions having five or more different content levels of the monomer (1) are prepared, LC/MS analysis is carried out on the aqueous solutions with the respective content levels, and the relationship between the content level and the area (peak integrated value) corresponding to that content level is plotted to prepare a calibration curve of the monomer (1). Furthermore, from the calibration curve of the monomer (1), a calibration curve of the dimer and trimer of the monomer (1) is prepared.

Methanol is added to the polymer (1) to prepare a mixture, the mixture is filtered using an ultrafiltration disc (cut-off molecular weight 3,000 Da), and the obtained recovered solution is subjected to LC/MS analysis.

Then, using the calibration curve, the area (peak integrated value) of the chromatogram of the dimer and trimer of the monomer (1) can be converted to the content of the dimer and trimer.

The content of the fraction having a molecular weight of 3,000 or less in the polymer (1) may be 3.7% or less, and is preferably 3.2% or less, still more preferably 2.7% or less, even more preferably 1.7% or less, yet more preferably 1.2% or less, particularly preferably 1.0% or less, and most preferably 0.5% or less based on the polymer (1). The lower limit of the content of the fraction having a molecular weight of 3,000 or less is not limited, and it is, for example, 0.01%. The content of the fraction having a molecular weight of 3,000 or less can be calculated from the peak area of GPC. The fraction having a molecular weight of 3,000 or less includes all compounds having a molecular weight of 3,000 or less.

The content of the fraction having a molecular weight of 2,000 or less in the polymer (1) may be 3.2% or less, and is preferably 2.7% or less, still more preferably 2.2% or less, even more preferably 1.7% or less, yet more preferably 1.2% or less, and particularly preferably 0.6% or less based on the polymer (1). The lower limit of the content of the fraction having a molecular weight of 2,000 or less is not limited, and it is, for example, 0.01%. The content of the fraction having a molecular weight of 2,000 or less can be calculated from the peak area of GPC. The fraction having a molecular weight of 2,000 or less includes all compounds having a molecular weight of 2,000 or less.

The content of the fraction having a molecular weight of 1,500 or less in the polymer (1) may be 2.7% or less, and is preferably 2.2% or less, still more preferably 1.7% or less, even more preferably 1.2% or less, and yet more

preferably 0.6% or less based on the polymer (1). The lower limit of the content of the fraction having a molecular weight of 1,500 or less is not limited, and it is, for example, 0.01%. The content of the fraction having a molecular weight of 1,500 or less can be calculated from the peak area of GPC. The fraction having a molecular weight of 1,500 or less includes all compounds having a molecular weight of 1,500 or less.

The content of the fraction having a molecular weight of 1,000 or less in the polymer (1) may be 2.2% or less, and is preferably 1.7% or less, still more preferably 1.2% or less, and even more preferably 0.6% or less based on the polymer (1). The lower limit of the content of the fraction having a molecular weight of 1,000 or less is not limited, and it is, for example, 0.01%. The content of the fraction having a molecular weight of 1,000 or less can be calculated from the peak area of GPC. The fraction having a molecular weight of 1,000 or less includes all compounds having a molecular weight of 1,000 or less.

By using the polymer (1) substantially free from the dimer and trimer of the monomer (1) when polymerizing the perfluoromonomer in the aqueous medium, a fluoropolymer substantially free from the dimer and trimer of the monomer (1) can be produced.

The polymer (1) is a polymer comprising the polymerized unit (1) derived from the monomer (1). The polymer (1) used in the present disclosure is a polymer in which the dimer (polymer comprising two polymerized units (1)) and the trimer (polymer comprising three polymerized units (1)) have been substantially removed from the polymer (1) comprising two or more polymerized units (1).

By using the polymer (1) substantially free from the dimer and trimer constituted by the polymerized unit (1) derived from the monomer (1) and the polymerized unit derived from the other monomer copolymerizable with the monomer (1) when polymerizing the perfluoromonomer in the aqueous medium, a fluoropolymer substantially free from the dimer and trimer constituted by the polymerized unit (1) and the polymerized unit derived from the other monomer can be produced even in the case of using the polymer (1) containing the polymerized unit (1) and the polymerized unit derived from the other monomer as the polymer (1).

The molecular weight of the monomer (1) is preferably 500 or less, and more preferably 400 or less. That is, it is preferable that the polymer (1) is substantially free from the dimer and trimer having a molecular weight of 1,500 or less, and it is more preferable that the polymer (1) is substantially free from the dimer and trimer having a molecular weight of 1,200 or less.

Accordingly, it is preferable that the production method of the present disclosure comprises polymerizing the monomer (1) represented by the general formula (1) to obtain a crude composition containing the polymer of the monomer (1) and removing the dimer and trimer of the monomer (1) contained in the crude composition from the crude composition to obtain the polymer (1) in which the content of the dimer and trimer of the monomer (1) is 1.0% by mass or less based on the polymer (1) .

The polymerization of the monomer (1) can be carried out by the above-mentioned method. By producing the crude composition by such a method, a crude composition in which the polymer (1) is dispersed or dissolved in the aqueous medium can be obtained.

It is preferable that the polymerization of the monomer (1) is carried out in the aqueous medium substantially in the absence of a fluorine-containing surfactant (except for the monomer (1) represented by the general formula (1)).

In the present disclosure, the expression "substantially in the absence of a fluorine-containing surfactant" means that the amount of the fluorine-containing surfactant is 10 ppm by mass or less based on the aqueous medium. The amount of the fluorine-containing surfactant based on the aqueous medium is preferably 1 ppm by mass or less, more preferably 100 ppb by mass or less, still more preferably 10 ppb by mass or less, and further preferably 1 ppb by mass or less.

The fluorine-containing surfactant will be mentioned later in the description on the polymerization of perfluoromonomer.

In the crude composition thus obtained, the dimer and trimer of the monomer (1) are usually contained in a total amount of more than 1.0% by mass based on the mass of the polymer. For example, the content of the dimer and trimer of the monomer (1) in the polymer may be 2.0% by mass or more or 3.0% by mass or more, and may be 30.0% by mass or less or 20.0% by mass or less, based on the polymer of the monomer (1) .

Also, in the case of carrying out polymerization of the monomer (1) and the other monomer copolymerizable with the monomer (1), in the resulting crude composition, the dimer and trimer constituted by the polymerized unit (1) derived from the monomer (1) and the polymerized unit derived from the other monomer copolymerizable with the monomer (1) are usually contained in a total amount of more than 1.0% by mass based on the mass of the polymer. For example, the content of the dimer and trimer constituted by the polymerized unit (1) and the polymerized unit derived from the other monomer may be 2.0% by mass or more or 3.0% by mass or more, and may be 30.0% by mass or less or 20.0% by mass or less, based on the polymer.

The content of the dimer and trimer in the crude composition can be specified by carrying out gel permeation chromatography (GPC) analysis of the crude composition and calculating the proportion (area percentage) of the total area of the dimer and trimer peaks to the total area of each peak in the chromatogram obtained by the GPC analysis.

Next, the dimer and trimer of the monomer (1) or the dimer and trimer constituted by the polymerized unit (1) and the polymerized unit derived from the other monomer contained in the crude composition obtained by polymerization of the monomer (1) are removed from the crude composition. The means of removing the dimer and trimer is not limited, but at least one means selected from the group consisting of ultrafiltration, microfiltration, dialysis membrane treatment, liquid separation, and reprecipitation is preferred, at least one means selected from the group consisting of ultrafiltration, microfiltration, liquid separation, and reprecipitation is more preferred, at least one means selected from the group consisting of ultrafiltration and liquid separation is still more preferred, and ultrafiltration is particularly preferred.

Also, a fraction having a molecular weight of 3,000 or less, a fraction having a molecular weight of 2,000 or less, a fraction having a molecular weight of 1,500 or less, and a fraction having a molecular weight of 1,000 or less can be removed by appropriately selecting the means of removing the dimer and trimer.

It has not been conventionally known that the polymerization of the monomer (1) produces the dimer and trimer of the monomer (1), resulting in the inclusion of the dimer and trimer of the monomer (1) in the polymer (1). Although the mechanism by which the dimer and trimer of the monomer (1) are produced is not necessarily clear, it is presumed that dimerization and trimerization of the monomer (1) occur with a non-negligible frequency, especially through a polymerization reaction in a polymerization system in which the monomer (1) accounts for the majority of the monomers present in the polymerization system.

When removing the dimer and trimer, the unreacted monomer (1) is usually also removed from the crude composition at the same time. Even when the unreacted monomer (1) is incorporated into the PTFE by the polymerization, it does not necessarily have an adverse effect on the function of the PTFE, and therefore, the unreacted monomer (1) does not necessarily need to be removed. However, by removing the unreacted monomer (1) at the same time as the dimer and trimer, the amount of monomer subjected to the polymerization can be calculated without taking into account the presence of the unreacted monomer (1), which has an advantage that it is possible to easily produce a fluoropolymer having the desired monomeric composition. Note that, even when the monomer (1) remains in the polymer (1) or when the monomer (1) is newly added as a comonomer, dimerization and trimerization of the monomer (1) hardly progress through a polymerization reaction in a polymerization system in which TFE accounts for the majority of the polymerization system among the monomers present in the polymerization system, and the dimer and trimer of the monomer (1) hardly remain in the resulting fluoropolymer.

The crude composition obtained by the polymerization of the monomer (1) may be a composition as polymerized, obtained from the polymerization, may be one formed by diluting or concentrating the composition as polymerized, obtained from the polymerization, or may be one that has undergone dispersion stabilization treatment or the like. It is also preferable to adjust the viscosity of the crude composition by such treatment in order to facilitate ultrafiltration, microfiltration, or dialysis membrane treatment.

The content of the polymer of the monomer (1) in the crude composition is not limited, and may be, for example, 0.1 to 20% by mass. From the viewpoint of removal efficiency of the dimer and trimer, the content of the polymer of the monomer (1) in the crude composition is preferably 18.0% by mass or less, more preferably 15.0% by mass or less, still more preferably 12.0% by mass or less, and particularly preferably 10.0% by mass or less, and it is preferably 0.5% by mass or more, more preferably 1.0% by mass or more, still more preferably 1.2% by mass or more, particularly preferably 1.5% by mass or more, and most preferably 2.0% by mass or more. The content of the polymer of the monomer (1) in the crude composition can be adjusted by, for example, a method in which water is added to the crude composition obtained by the polymerization of the monomer (1), a method in which the crude composition obtained by the polymerization of the monomer (1) is concentrated, and the like.

The pH of the crude composition is preferably -7.0 to 11.0, more preferably -6.0 to 8.0, and still more preferably - 5.0 to 7.0. The pH of the crude composition can be adjusted by adding a pH adjuster to the crude composition obtained by the polymerization of the monomer (1). The pH adjuster may be an acid or an alkali, and examples thereof include phosphates, sodium hydroxide, potassium hydroxide, and aqueous ammonia.

In the case of carrying out ultrafiltration, microfiltration, or dialysis membrane treatment, the viscosity of the crude composition is preferably 25 mPa·s or less since these treatments progress smoothly. The viscosity of the crude composition can be adjusted by, for example, a method in which the number average molecular weight of the polymer of the monomer (1) is adjusted, a method in which the concentration of the polymer of the monomer (1) in the crude composition is adjusted, a method in which the temperature of the crude composition is adjusted, and the like.

Although the ultrafiltration or microfiltration is not limited and may be either cross-flow type or dead-end type, the cross-flow type is preferred from the viewpoint of reducing membrane clogging.

The ultrafiltration can be carried out using an ultrafiltration membrane. The ultrafiltration can be carried out using, for example, an ultrafiltration device having an ultrafiltration membrane, and the centrifugal ultrafiltration method, batch ultrafiltration method, circulating ultrafiltration method, and the like can be adopted.

The cut-off molecular weight of the ultrafiltration membrane is usually about $0.1 \times 10^4$ to $30 \times 10^4$ Da. The ultrafiltration membrane preferably has a cut-off molecular weight of $0.3 \times 10^4$ Da or more, since it can suppress membrane clogging and efficiently reduce the dimer and trimer. The cut-off molecular weight is more preferably 0.5 ×

$10^4$ Da or more, particularly preferably $0.6 \times 10^4$ Da or more, and most preferably $0.8 \times 10^4$ Da or more. The cut-off molecular weight may be $1.0 \times 10^4$ Da or more. Also, the cut-off molecular weight is preferably $20 \times 10^4$ Da or less, and more preferably $10 \times 10^4$ Da or less, from the viewpoint of removal efficiency of the dimer and trimer.

The cut-off molecular weight of the ultrafiltration membrane can be determined by, for example, passing a polystyrene with a known weight average molecular weight through the membrane and using a molecular weight that can be blocked by 90% as the cut-off molecular weight. Quantification of the polystyrene can be carried out using gel permeation chromatography.

Although the shape of the ultrafiltration membrane is not limited to those conventionally known, for example, it may be hollow fiber type, flat membrane type, spiral type, tubular type, or the like. The hollow fiber type is preferred from the viewpoint of inhibiting clogging.

The inner diameter of the hollow fiber type ultrafiltration membrane is not limited, and may be, for example, 0.1 to 2 mm. It is preferably 0.8 to 1.4 mm. The length of the hollow fiber type ultrafiltration membrane is not limited, and may be, for example, 0.05 to 3 m. It is preferably 0.05 to 2 m.

Although the material of the ultrafiltration membrane is not limited, examples thereof include organic materials such as cellulose, cellulose ester, polysulfone, sulfonated polysulfone, polyethersulfone, sulfonated polyethersulfone, chlorinated polyethylene, polypropylene, polyolefin, polyvinyl alcohol, polymethyl methacrylate, polyacrylnitrile, polyvinylidene fluoride, and polytetrafluoroethylene; metals such as stainless steel; and inorganic materials such as ceramics.

The material of the ultrafiltration membrane is preferably an organic material, and it is more preferably chlorinated polyethylene, polypropylene, polyvinylidene fluoride, polytetrafluoroethylene, polyacrylnitrile, polysulfone, or polyethersulfone, and still more preferably polyacrylnitrile, polysulfone, or polyvinylidene fluoride.

Specific examples of the ultrafiltration membrane include the G-5 type, G-10 type, G-20 type, G-50 type, PW type, and HWS UF type from DESAL; HFM-180, HFM-183, HFM-251, HFM-300, HFM-116, HFM-183, HFM-300, HFK-131, HFK-328, MPT-U20, MPS-U20P, and MPS-U20S from KOCH; SPE1, SPE3, SPE5, SPE10, SPE30, SPV5, SPV50, and SOW30 from Synder; the Microza (R) UF series manufactured by Asahi Kasei Corporation; and NTR 7410 manufactured by Nitto Denko Corporation.

The ultrafiltration is preferably carried out at a pressure of 0.01 MPa or more from the viewpoint of removal efficiency of the dimer and trimer. It is more preferably 0.03 MPa or more, and still more preferably 0.05 MPa or more. Also, from the viewpoint of pressure resistance, the pressure is preferably 0.5 MPa or less, more preferably 0.25 MPa or less, and still more preferably 0.2 MPa or less.

The ultrafiltration is preferably carried out at a flow rate of 10 mL/min or more and more preferably carried out at a flow rate of 50 mL/min or more, and also preferably carried out at a flow rate of 5,000 mL/min or less and more preferably carried out at a flow rate of 1,000 mL/min or less, from the viewpoint of removal efficiency of the dimer and trimer.

The microfiltration can be carried out using a microfiltration membrane. The microfiltration membrane usually has an average pore size of 0.05 to 1.0 μm.

It is preferable that the microfiltration membrane has an average pore size of 0.1 μm or more, since it can efficiently remove the dimer and trimer. It is more preferably 0.075 μm or more, and still more preferably 0.1 μm or more. Also, the average pore size is preferably 1.00 μm or less. It is more preferably 0.50 μm or less, and still more preferably 0.25 μm or less.

The average pore size of the microfiltration membrane can be measured in conformity with ASTM F316-03 (bubble point method).

Although the shape of the microfiltration membrane is not limited to those conventionally known, for example, it may be hollow fiber type, flat membrane type, spiral type, tubular type, or the like. The hollow fiber type is preferred from the viewpoint of inhibiting clogging.

The inner diameter of the hollow fiber type microfiltration membrane is not limited, and may be, for example, 0.1 to 2 mm. It is preferably 0.8 to 1.4 mm.

The length of the hollow fiber type microfiltration membrane is not limited, and may be, for example, 0.05 to 3 m. It is preferably 0.05 to 2 m.

Examples of the material of the microfiltration membrane include cellulosic materials, aromatic polyamide, polyvinyl alcohol, polysulfone, polyethersulfone, polyvinylidene fluoride, polyethylene, polyacrylonitrile, polypropylene, polycarbonate, polytetrafluoroethylene, ceramics, and metals. Among these, aromatic polyamide, polyvinyl alcohol, polysulfone, polyvinylidene fluoride, polyethylene, polyacrylonitrile, polypropylene, polycarbonate, or polytetrafluoroethylene is preferred, and polyacrylonitrile or polyvinylidene fluoride is particularly preferred.

Specific examples of the microfiltration membrane include Cefilt manufactured by NGK Insulators, Ltd.; the Microza U series and Microza P series manufactured by Asahi Kasei Corporation; Poreflon SPMW, Poreflon OPMW, and Poreflon PM manufactured by Sumitomo Electric Industries, Ltd.; Torayfil manufactured by Toray Industries, Inc.; NADIR MP005 and NADIR MV020 manufactured by Microdyn-Nadir GmbH; and X-flow manufactured by Norit N.V.

The microfiltration is preferably carried out at a pressure of 0.01 MPa or more from the viewpoint of removal efficiency of the dimer and trimer. It is more preferably 0.03 MPa or more, and still more preferably 0.05 MPa or more.

Also, from the viewpoint of pressure resistance, the pressure is preferably 0.5 MPa or less, more preferably 0.25 MPa or less, and still more preferably 0.2 MPa or less.

The microfiltration is preferably carried out at a flow rate of 10 mL/min or more and more preferably carried out at a flow rate of 50 mL/min or more, and also preferably carried out at a flow rate of 5,000 mL/min or less and more preferably carried out at a flow rate of 1,000 mL/min or less, from the viewpoint of removal efficiency of the dimer and trimer.

The dialysis membrane treatment is carried out using a dialysis membrane. The cut-off molecular weight of the dialysis membrane is usually $0.05 \times 10^4$ to $100 \times 10^4$ Da.

The dialysis membrane preferably has a cut-off molecular weight of $0.3 \times 10^4$ Da or more, since it can suppress membrane clogging and efficiently remove the dimer and trimer. The cut-off molecular weight is more preferably $0.5 \times 10^4$ Da or more, still more preferably $1.0 \times 10^4$ Da or more, further preferably $1.5 \times 10^4$ Da or more, yet more preferably $2.0 \times 10^4$ Da or more, particularly preferably $3.0 \times 10^4$ Da or more, and most preferably $5.0 \times 10^4$ Da or more. The cut-off molecular weight may be $8.0 \times 10^4$ Da or more.

Also, the cut-off molecular weight is preferably $20 \times 10^4$ Da or less, and more preferably $10 \times 10^4$ Da or less, from the viewpoint of removal efficiency of the dimer and trimer.

The cut-off molecular weight of the dialysis membrane can be measured by, for example, the same method as for the ultrafiltration membrane.

Although the material of the dialysis membrane is not limited, examples thereof include cellulose, polyacrylonitrile, polymethyl methacrylate, ethylene vinyl alcohol copolymers, polysulfone, polyamide, and polyester polymer alloys.

Specific examples of the dialysis membrane include Spectra/Por (R) Float-A-Lyzer, Tube-A-Lyzer, Dialysis tubing, 6Dialysis tubing, and 7Dialysis tubing manufactured by Spectrum Laboratories Inc.

It is preferable that the ultrafiltration, microfiltration, or dialysis membrane treatment is carried out at a temperature of 10°C or higher. It is more preferably 15°C or higher, still more preferably 20°C or higher, and particularly preferably 30°C or higher. By setting the temperature in the above range, the dimer and trimer can be reduced more efficiently. The temperature is preferably 90°C or lower, more preferably 80°C or lower, still more preferably 70°C or lower, and particularly preferably 60°C or lower.

The ultrafiltration, microfiltration, or dialysis membrane treatment can be carried out while adding water to the crude composition or while adjusting the pH of the crude composition. Water may be added intermittently to the crude composition or may be added continuously to the crude composition.

The end point of the ultrafiltration, microfiltration, or dialysis membrane treatment may be determined as appropriate and is not limited. In addition, the ultrafiltration, microfiltration, or dialysis membrane treatment may be backwashed with water about once every 1 to 24 hours of filtration time to improve the durability of the filtration membrane.

The liquid separation can be performed by, for example, adding an organic solvent to the composition to separate it into two phases, the aqueous phase and the organic solvent phase, and collecting the aqueous phase.

The reprecipitation can be performed by, for example, dropping the composition into a poor solvent to precipitate the polymer, collecting the precipitated polymer, dissolving the collected polymer in a good solvent, dropping the obtained solution into a poor solvent to precipitate the polymer again, and collecting the precipitated polymer.

By removing the dimer and trimer of the monomer (1) from the crude composition containing the polymer of the monomer (1), an aqueous solution containing the polymer (1) substantially free from the dimer and trimer is usually obtained. The polymer (1) used in the production method of the present disclosure may be a polymer (1) contained in the obtained aqueous solution or a polymer (1) obtained by separation from the aqueous solution. The method for separating the polymer (1) from the aqueous solution is not limited. For example, the polymer (1) can be separated by a method such as coagulation, washing, and drying of the polymer (1) in the aqueous solution.

As the polymer (1), an aqueous solution containing the polymer (1) can be used. The preferred content of the dimer and trimer of the monomer (1) or the preferred content of the dimer and trimer constituted by the polymerized unit (1) and the polymerized unit derived from the other monomer are as mentioned above based on the polymer (1) in the aqueous solution.

<Polymerization of perfluoromonomer>

The first production method of the present disclosure comprises polymerizing a perfluoromonomer in the aqueous medium in the presence of the polymer (1) to obtain a fluoropolymer. The content of a polymerized unit derived from the perfluoromonomer in the fluoropolymer is 90 mol% or more based on all polymerized units of the fluoropolymer.

The perfluoromonomer preferably has at least one double bond. The perfluoromonomer is preferably at least one selected from the group consisting of tetrafluoroethylene (TFE), hexafluoropropylene (HFP), a perfluoro(alkyl vinyl ether), and a perfluoro(alkyl allyl ether).

The perfluoro(alkyl vinyl ether) is preferably, for example, at least one selected from the group consisting of:

a fluoromonomer represented by the general formula (110): $CF_2=CF-ORf^{111}$

wherein $Rf^{111}$ represents a perfluoroorganic group;
a fluoromonomer represented by the general formula (130): $CF_2=CFOCF_2ORf^{131}$
wherein $Rf^{131}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms;
a fluoromonomer represented by the general formula (140): $CF_2=CFO(CF_2CF(Y^{141})O)_m(CF_2)_nF$
wherein $Y^{141}$ represents a fluorine atom or a trifluoromethyl group; m is an integer of 1 to 4; and n is an integer of 1 to 4; and
a fluoromonomer represented by the general formula (150) : $CF_2=CF-O-(CF_2CFY^{151}-O)_n-(CFY^{152})_m-A^{151}$
wherein $Y^{151}$ represents a fluorine atom, a $-SO_2F$ group, or a perfluoroalkyl group; the perfluoroalkyl group optionally containing ether oxygen and a $-SO_2F$ group; n represents an integer of 0 to 3; n $Y^{151}$s are the same as or different from each other; $Y^{152}$ represents a fluorine atom or a $-SO_2F$ group; m represents an integer of 1 to 5; m $Y^{152}$s are the same as or different from each other; $A^{151}$ represents $-SO_2X^{151}$, $-COZ^{151}$, or - $POZ^{152}Z^{153}$; $X^{151}$ represents F, Cl, Br, I, $-OR^{151}$, or-$NR^{152}R^{153}$; $Z^{151}$, $Z^{152}$, and $Z^{153}$ are the same as or different from each other, and each represent $-NR^{154}R^{155}$ or $-OR^{156}$; $R^{151}$, $R^{152}$, $R^{153}$, $R^{154}$, $R^{155}$, and $R^{156}$ are the same as or different from each other, and each represent H, ammonium, an alkali metal, or an alkyl group, aryl group, or sulfonyl-containing group optionally containing a fluorine atom.

The "perfluoroorganic group" in the present disclosure, means an organic group in which all hydrogen atoms bonded to the carbon atoms are replaced by fluorine atoms. The perfluoroorganic group optionally has ether oxygen.
An example of the fluoromonomer represented by general formula (110) is a fluoromonomer in which $Rf^{111}$ is a perfluoroalkyl group having 1 to 10 carbon atoms. The perfluoroalkyl group preferably has 1 to 5 carbon atoms.
Examples of the perfluoroorganic group in the general formula (110) include a perfluoromethyl group, a perfluoroethyl group, a perfluoropropyl group, a perfluorobutyl group, a perfluoropentyl group, and a perfluorohexyl group.
Examples of the fluoromonomer represented by the general formula (110) also include those represented by the general formula (110) in which $Rf^{111}$ is a perfluoro(alkoxyalkyl) group having 4 to 9 carbon atoms; those in which $Rf^{111}$ is a group represented by the following formula:

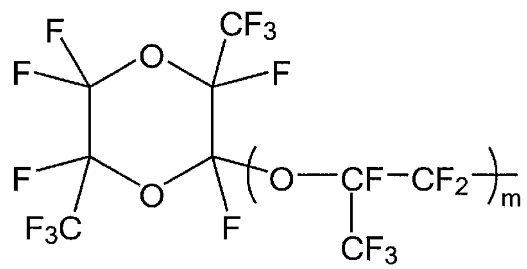

wherein m represents 0 or an integer of 1 to 4; and those in which Rf is a group represented by the following formula:

$CF_3CF_2CF_2-(O-CF(CF_3)-CF_2)_n-$

wherein n represents an integer of 1 to 4.
Of these, the fluoromonomer represented by the general formula (110) is preferably
a fluoromonomer represented by the general formula (160): $CF_2=CF-ORf^{161}$
wherein $Rf^{161}$ represents a perfluoroalkyl group having 1 to 10 carbon atoms. $Rf^{161}$ is preferably a perfluoroalkyl group having 1 to 5 carbon atoms.
The perfluoro(alkyl vinyl ether) is preferably at least one selected from the group consisting of fluoromonomers represented by the general formulas (160), (130), and (140).
The fluoromonomer represented by the general formula (160) is preferably at least one selected from the group consisting of perfluoro(methyl vinyl ether), perfluoro(ethyl vinyl ether), and perfluoro(propyl vinyl ether), more preferably at least one selected from the group consisting of perfluoro(methyl vinyl ether) and perfluoro(propyl vinyl ether), and still more preferably perfluoro(methyl vinyl ether).
The fluoromonomer represented by the general formula (130) is preferably at least one selected from the group consisting of $CF_2=CFOCF_2OCF_3$, $CF_2=CFOCF_2OCF_2CF_3$, and $CF_2=CFOCF_2OCF_2CF_2OCF_3$.
The fluoromonomer represented by the general formula (140) is preferably at least one selected from the group consisting of $CF_2=CFOCF_2CF(CF_3)O(CF_2)_3F$, $CF_2=CFO(CF_2CF(CF_3)O)_2(CF_2)_3F$, and $CF_2=CFO(CF_2CF(CF_3)O)_2(CF_2)_2F$.

The fluoromonomer represented by the general formula (150) is preferably at least one selected from the group consisting of $CF_2=CFOCF_2CF_2SO_2F$, $CF_2=CFOCF_2CF(CF_3)OCF_2CF_2SO_2F$, $CF_2=CFOCF_2CF(CF_2CF_2SO_2F)OCF_2CF_2SO_2F$, and $CF_2=CFOCF_2CF(SO_2F)_2$.

An example of the perfluoro(alkyl allyl ether) is a fluoromonomer represented by the general formula (180):

$$CF_2=CF-CF_2-ORf^{111}$$

wherein $Rf^{111}$ represents a perfluoroorganic group.

$Rf^{111}$ in the general formula (180) is the same as $Rf^{111}$ in the general formula (110). $Rf^{111}$ is preferably a perfluoroalkyl group having 1 to 10 carbon atoms or a perfluoroalkoxyalkyl group having 1 to 10 carbon atoms. The perfluoro(alkyl allyl ether) represented by the general formula (180) is preferably at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably at least one selected from the group consisting of $CF_2=CF-CF_2-O-C_2F_5$, $CF_2=CF-CF_2-O-C_3F_7$, and $CF_2=CF-CF_2-O-C_4F_9$, and still more preferably $CF_2=CF-CF_2-O-CF_2CF_2CF_3$.

Along with the perfluoromonomer, a partially fluorinated monomer may also be polymerized. The partially fluorinated monomer preferably has at least one double bond. The partially fluorinated monomer is preferably at least one selected from the group consisting of chlorotrifluoroethylene (CTFE), vinyl fluoride, vinylidene fluoride (VDF), trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by the general formula (100): $CHX^{101}=CX^{102}Rf^{101}$ (wherein one of $X^{101}$ and $X^{102}$ is H and the other is F, and $Rf^{101}$ is a linear or branched fluoroalkyl group having 1 to 12 carbon atoms), a fluorinated vinyl heterocyclic compound, and a monomer that provides a crosslinking site.

An example of the fluoroalkyl vinyl ether is a fluoromonomer represented by the general formula (120):

$$CF_2=CF-OCH_2-Rf^{121}$$

wherein $Rf^{121}$ represents a perfluoroalkyl group having 1 to 5 carbon atoms.

The fluoromonomer represented by the general formula (100) is preferably a fluoromonomer in which $Rf^{101}$ is a linear fluoroalkyl group, and more preferably a fluoromonomer in which $Rf^{101}$ is a linear perfluoroalkyl group. $Rf^{101}$ preferably has 1 to 6 carbon atoms. Examples of the fluoromonomer represented by the general formula (100) include $CH_2=CFCF_3$, $CH_2=CFCF_2CF_3$, $CH_2=CFCF_2CF_2CF_3$, $CH_2=CFCF_2CF_2CF_2H$, $CH_2=CFCF_2CF_2CF_2CF_3$, $CHF=CHCF_3$ (E isomer), and $CHF=CHCF_3$ (Z isomer), of which preferred is 2,3,3,3-tetrafluoropropylene represented by $CH_2=CFCF_3$.

The fluoroalkyl ethylene is preferably a fluoroalkyl ethylene represented by the general formula (170):

$$CH_2=CH-(CF_2)_n-X^{171}$$

(wherein $X^{171}$ is H or F; and n is an integer of 3 to 10), and more preferably at least one selected from the group consisting of $CH_2=CH-C_4F_9$ and $CH_2=CH-C_6F_{13}$.

An example of the fluorinated vinyl heterocyclic compound is a fluorinated vinyl heterocyclic compound represented by the general formula (230):

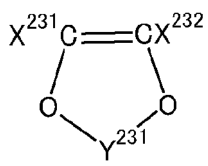

wherein $X^{231}$ and $X^{232}$ are each independently F, Cl, a methoxy group, or a fluorinated methoxy group; and $Y^{231}$ is represented by the formula $Y^{232}$ or the formula $Y^{233}$:

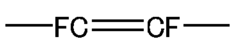 $(Y^{232})$

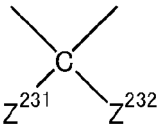

$(Y^{233})$

wherein $Z^{231}$ and $Z^{232}$ are each independently F or a fluorinated alkyl group having 1 to 3 carbon atoms.

The monomer that provides a crosslinking site is preferably at least one selected from the group consisting of:

a fluoromonomer represented by the general formula (181): $CX^{181}_2=CX^{182}-R_f^{181}CHR^{181}X^{183}$
wherein $X^{181}$ and $X^{182}$ are each independently a hydrogen atom, a fluorine atom, or $CH_3$; $R_f^{181}$ is a fluoroalkylene group, a perfluoroalkylene group, a fluoro(poly)oxyalkylene group, or a perfluoro(poly)oxyalkylene group; $R^{181}$ is a hydrogen atom or $CH_3$; and $X^{183}$ is an iodine atom or a bromine atom;
a fluoromonomer represented by the general formula (190): $CX^{191}_2=CX^{192}-R_f^{191}X^{193}$
wherein $X^{191}$ and $X^{192}$ are each independently a hydrogen atom, a fluorine atom, or $CH_3$; $R_f^{191}$ is a fluoroalkylene group, a perfluoroalkylene group, a fluoropolyoxyalkylene group, or a perfluoropolyoxyalkylene group; and $X^{193}$ is an iodine atom or a bromine atom;
a fluoromonomer represented by the general formula (200) : $CF_2=CFO(CF_2CF(CF_3)O)_m(CF_2)_n-X^{201}$
wherein m is an integer of 0 to 5; n is an integer of 1 to 3; and $X^{201}$ is a cyano group, a carboxyl group, an alkoxycarbonyl group, an iodine atom, a bromine atom, or $-CH_2I$; and
a fluoromonomer represented by the general formula (210) : $CH_2=CFCF_2O(CF(CF_3)CF_2O)_m(CF(CF_3))_n-X^{211}$
wherein m is an integer of 0 to 5; n is an integer of 1 to 3; and $X^{211}$ is a cyano group, a carboxyl group, an alkoxycarbonyl group, an iodine atom, a bromine atom, or-$CH_2OH$; and
a monomer represented by the general formula (220): $CR^{221}R^{222}=CR^{223}-Z^{221}-CR^{224}=CR^{225}R^{226}$
wherein $R^{221}$, $R^{222}$, $R^{223}$, $R^{224}$, $R^{225}$, and $R^{226}$ are the same as or different from each other, and are each a hydrogen atom or an alkyl group having 1 to 5 carbon atoms; $Z^{221}$ is a linear or branched alkylene group having 1 to 18 carbon atoms and optionally having an oxygen atom, a cycloalkylene group having 3 to 18 carbon atoms, an at least partially fluorinated alkylene or oxyalkylene group having 1 to 10 carbon atoms, or a (per)fluoropolyoxyalkylene group which is represented by:

$$-(Q)_p-CF_2O-(CF_2CF_2O)_m(CF_2O)_n-CF_2-(Q)_p-$$

(wherein Q is an alkylene group or an oxyalkylene group; p is 0 or 1; and m/n is 0.2 to 5) and has a molecular weight of 500 to 10,000.

$X^{183}$ and $X^{193}$ are each preferably an iodine atom. $R_f^{181}$ and $R_f^{191}$ are each preferably a perfluoroalkylene group having 1 to 5 carbon atoms. $R^{181}$ is preferably a hydrogen atom. $X^{201}$ is preferably a cyano group, an alkoxycarbonyl group, an iodine atom, a bromine atom, or $-CH_2I$. $X^{211}$ is preferably a cyano group, an alkoxycarbonyl group, an iodine atom, a bromine atom, or $-CH_2OH$.

The monomer that provides a crosslinking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, $CH_2=CH(CF_2)_2CH=CH_2$, $CH_2=CH(CF_2)_6CH=CH_2$, and $CF_2=CFO(CF_2)_5CN$, and is more preferably at least one selected from the group consisting of $CF_2=CFOCF_2CF(CF_3)OCF_2CF_2CN$ and $CF_2=CFOCF_2CF_2CH_2I$ .

In the polymerization, the perfluoromonomer may be polymerized with a fluorine-free monomer. An example of the fluorine-free monomer is a hydrocarbon monomer reactive with the fluoromonomer. Examples of the hydrocarbon monomer include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, monochlorovinyl acetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; alkyl allyl esters such as ethyl allyl ester, propyl allyl ester, butyl allyl ester, isobutyl allyl ester, and cyclohexyl allyl ester; and (meth)acrylic esters such as methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, and vinyl methacrylate.

The fluorine-free monomer may also be a functional group-containing hydrocarbon monomer (other than monomers that provide a crosslinking site). Examples of the functional group-containing hydrocarbon monomer include hydroxy alkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-free monomers having a carboxyl group, such as acrylic acid, methacrylic acid, itaconic acid, succinic acid, succinic anhydride, fumaric acid, fumaric anhydride, crotonic acid, maleic acid, maleic anhydride, and perfluorobutenoic acid; fluorine-free monomers having a sulfo group, such as vinylsulfonic acid; fluorine-free monomers having a glycidyl group, such as glycidyl vinyl ether and glycidyl allyl ether; fluorine-free monomers having an amino group, such as aminoalkyl vinyl ether and aminoalkyl allyl ether; fluorine-free monomers having an amide group, such as (meth)acrylamide and methylol acrylamide; and fluorine-free monomers having a nitrile group, such as acrylonitrile and methacrylonitrile.

In the polymerization, desired fluoropolymer particles can be obtained by polymerizing one or two or more of the monomers such as perfluoromonomers.

The amount of the polymer (1) added in the polymerization is preferably more than 0.0001% by mass and 20% by mass or less based on the aqueous medium, more preferably 0.001% by mass or more, and more preferably 10% by mass or less, and still more preferably 5% by mass or less. When the amount of the polymer (1) added is within the above range, polymerization of the perfluoromonomer in the aqueous medium can progress smoothly. The amount of the polymer (1) added is the total amount of the polymer (1) added in the polymerization.

In the polymerization, the polymer (1) may be added all at once, or the polymer (1) may be added continuously. Adding the polymer (1) continuously means, for example, adding the polymer (1) not all at once, but adding over time and without interruption or adding in portions. In the polymerization, an aqueous solution containing the polymer (1) and water may be prepared and that aqueous solution may be added.

In the polymerization, the presence of at least one of the polymers (1) can efficiently produce a fluoropolymer. Also, two or more of the compounds encompassed in the polymer (1) may be used at the same time, and a compound having a surfactant function other than the polymer (1) may also be used in combination insofar as the compound is volatile or is allowed to remain in a molded body formed from the fluoropolymer or the like.

In the polymerization, a nucleating agent may be used. The amount of the nucleating agent added can be selected as appropriate in accordance with the type of the nucleating agent. The amount of the nucleating agent added may be 5,000 ppm by mass or less based on the aqueous medium, and it is preferably 1,000 ppm by mass or less, more preferably 500 ppm by mass or less, still more preferably 100 pm by mass or less, particularly preferably 50 ppm by mass or less, and most preferably 10 ppm by mass or less.

In the polymerization, it is preferable to add the nucleating agent to the aqueous medium before the initiation of polymerization or before the solid content of the fluoropolymer formed in the aqueous medium reaches 5.0% by mass. Adding the nucleating agent at the initial stage of the polymerization allows for obtaining an aqueous dispersion having a small average primary particle size and excellent stability.

The amount of the nucleating agent added at the initial stage of the polymerization is preferably 0.001% by mass or more, more preferably 0.01% by mass or more, still more preferably 0.05% by mass or more, and particularly preferably 0.1% by mass or more, based on the resulting fluoropolymer. The upper limit of the amount of the nucleating agent added at the initial stage of the polymerization may be, but is not limited to, 2,000% by mass.

The use of the nucleating agent allows for obtaining a fluoropolymer having a smaller primary particle size than that in the case of polymerization in the absence of the above nucleating agent.

Examples of the nucleating agent include dicarboxylic acids, perfluoropolyether (PFPE) acids or salts thereof, and hydrocarbon-containing surfactants. The nucleating agent is preferably free from an aromatic ring, and is preferably an aliphatic compound.

Although the nucleating agent is preferably added before addition of the polymerization initiator or simultaneously with addition of the polymerization initiator, it is also possible to adjust the particle size distribution by adding the nucleating agent during the polymerization.

The amount of the dicarboxylic acid is preferably 1,000 ppm by mass or less, more preferably 500 ppm by mass or less, and still more preferably 100 ppm by mass or less, based on the aqueous medium.

The perfluoropolyether (PFPE) acids or salts thereof may have any chain structure in which the oxygen atoms in the main chain of the molecule are separated by saturated carbon fluoride groups having 1 to 3 carbon atoms. Two or more carbon fluoride groups may be present in the molecule. Representative structures thereof have the repeating units represented by the following formulas:

$(\text{-}CFCF_3\text{-}CF_2\text{-}O\text{-})_n$ (VII)

$(\text{-}CF_2\text{-}CF_2\text{-}CF_2\text{-}O\text{-})_n$ (VIII)

$$(-CF_2-CF_2-O-)_n-(-CF_2-O-)_m \quad (IX)$$

$$(-CF_2-CFCF_3-O-)_n-(-CF_2-O-)_m \quad (X).$$

These structures are described in Kasai, J. Appl. Polymer Sci., 57, 797(1995). As disclosed in this document, the PFPE acid or a salt thereof may have a carboxylic acid group or a salt thereof at one end or both ends. The PFPE acid or a salt thereof may also have a sulfonic acid, a phosphonic acid group, or a salt thereof at one end or both ends. The PFPE acid or a salt thereof may have different groups at each end. Regarding monofunctional PFPE, the other end of the molecule is usually perfluorinated, but may contain a hydrogen or chlorine atom. The PFPE acid or a salt thereof has at least two ether oxygen atoms, preferably at least four ether oxygen atoms, and still more preferably at least six ether oxygen atoms. Preferably, at least one carbon fluoride group separating ether oxygen atoms, more preferably at least two of such carbon fluoride groups, have 2 or 3 carbon atoms. Still more preferably, at least 50% of the carbon fluoride groups separating ether oxygen atoms has 2 or 3 carbon atoms. Also preferably, the PFPE acid or a salt thereof has at least 15 carbon atoms in total, and for example, a preferable minimum value of n or n + m in the repeating unit structure is preferably at least 5. Two or more of the PFPE acids and salts thereof having an acid group at one end or both ends may be used in the production method of the present disclosure. The PFPE acid or a salt thereof preferably has a number average molecular weight of less than 6,000 g/mol.

The hydrocarbon-containing surfactant is preferably added in an amount of 40 ppm by mass or less, more preferably 30 ppm by mass or less, and still more preferably 20 ppm by mass or less, based on the aqueous medium. The amounts in ppm of the oleophilic nucleation sites present in the aqueous medium will be less than the amounts in ppm disclosed herein as being added to the aqueous medium. Thus, the amounts of oleophilic nucleation sites will each be less than the 40 ppm by mass, 30 ppm by mass, and 20 ppm by mass as described above. Since it is considered that oleophilic nucleation sites exist as molecules, only a small amount of the hydrocarbon-containing surfactant can generate a large amount of oleophilic nucleation sites. Thus, addition of as little as 1 ppm by mass of the hydrocarbon-containing surfactant to the aqueous medium can provide beneficial effect. The lower limit value thereof is preferably 0.01 ppm by mass.

The hydrocarbon-containing surfactant encompasses nonionic surfactants and cationic surfactants, including siloxane surfactants such as those disclosed in U.S. Patent No. 7,897,682 (Brothers et al.) and U.S. Patent No. 7,977,438 (Brothers et al.).

The hydrocarbon-containing surfactant is preferably a nonionic surfactant (for example, a nonionic hydrocarbon surfactant). In other words, the nucleating agent is preferably a nonionic surfactant.

(Nonionic surfactant)

The nonionic surfactant used in the production method of the present disclosure is usually free from a charged group and has a hydrophobic moiety that is a long-chain hydrocarbon. The hydrophilic moiety of the nonionic surfactant contains water-soluble functional groups such as chains of ethylene ether derived from polymerization with ethylene oxide.

Examples of the nonionic surfactant include the following.

Polyoxyethylene alkyl ether, polyoxyethylene alkyl phenyl ether, polyoxyethylene alkyl ester, sorbitan alkyl ester, polyoxyethylene sorbitan alkyl ester, glycerol ester, and derivatives thereof.

Specific examples of polyoxyethylene alkyl ethers: polyoxyethylene lauryl ether, polyoxyethylene cetyl ether, polyoxyethylene stearyl ether, polyoxyethylene oleyl ether, polyoxyethylene behenyl ether, and the like.

Specific examples of polyoxyethylene alkyl phenyl ether: polyoxyethylene nonylphenyl ether, polyoxyethylene octylphenyl ether, and the like.

Specific examples of polyoxyethylene alkyl esters: polyethylene glycol monolaurylate, polyethylene glycol monooleate, polyethylene glycol monostearate, and the like.

Specific examples of sorbitan alkyl ester: polyoxyethylene sorbitan monolaurate, polyoxyethylene sorbitan monopalmitate, polyoxyethylene sorbitan monostearate, polyoxyethylene sorbitan monooleate, and the like.

Specific examples of polyoxyethylene sorbitan alkyl ester: polyoxyethylene sorbitan monolaurate, polyoxyethylene sorbitan monopalmitate, polyoxyethylene sorbitan monostearate, and the like.

Specific examples of glycerol ester: glycerol monomyristate, glycerol monostearate, glycerol monooleate, and the like.

Specific examples of the derivatives: polyoxyethylene alkylamine, polyoxyethylene alkyl phenyl-formaldehyde condensate, and polyoxyethylene alkyl ether phosphate.

The ethers and esters may have an HLB value of 10 to 18.

Examples of nonionic surfactants include the Triton(R) X series (X15, X45, X100, etc.), the Tergitol(R) 15-S series, the Tergitol(R) TMN series (TMN-6, TMN-10, TMN-100, etc.), and the Tergitol(R) L series manufactured by Dow Chemical Co., Ltd., and the Pluronic(R) R series (31R1, 17R2, 10R5, 25R4 (m ~22, n ~23) and the Iconol(R) TDA series

(TDA-6, TDA-9, TDA-10) manufactured by BASF.

The nonionic surfactant is preferably a fluorine-free nonionic surfactant. Examples thereof include ether-type nonionic surfactants such as polyoxyethylene alkyl phenyl ether, polyoxyethylene alkyl ether, and polyoxyethylene alkylene alkyl ether; polyoxyethylene derivatives such as ethylene oxide/propylene oxide block copolymers; ester-type nonionic surfactants such as sorbitan fatty acid esters, polyoxyethylene sorbitan fatty acid esters, polyoxyethylene sorbitol fatty acid esters, glycerin fatty acid esters, and polyoxyethylene fatty acid esters; and amine-based nonionic surfactants such as polyoxyethylene alkyl amine and alkylalkanolamide.

The hydrophobic group of the nonionic surfactant may be any of an alkylphenol group, a linear alkyl group, and a branched alkyl group.

The nonionic surfactant is preferably a nonionic surfactant represented by the general formula (i):

$$R^6\text{-O-}A^1\text{-H} \qquad \text{(i)}$$

wherein $R^6$ is a linear or branched primary or secondary alkyl group having 8 to 18 carbon atoms, and $A^1$ is a polyoxyalkylene chain.

In the general formula (i), the number of carbon atoms in $R^6$ is preferably 10 to 16, and more preferably 12 to 16. When the number of carbon atoms in $R^6$ is 18 or less, excellent precipitation stability of the composition is easily obtained. On the other hand, when the number of carbon atoms in $R^6$ exceeds 18, it is difficult to handle because of the high flow temperature. When $R^6$ has less than 8 carbon atoms, the surface tension of the composition becomes high, so that the permeability and wettability are likely to decrease.

The polyoxyalkylene chain of $A^1$ may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically supplied, or a broader or bimodal distribution which may be obtained by blending. When the average number of repeating oxypropylene groups is more than 0, the oxyethylene groups and oxypropylene groups in the polyoxyalkylene chain may be arranged in blocks or randomly. From the viewpoint of viscosity and precipitation stability of the composition, a polyoxyalkylene chain in which the average number of repeating oxyethylene groups is 7 to 12 and the average number of repeating oxypropylene groups is 0 to 2 is preferred. In particular, when $A^1$ has 0.5 to 1.5 oxypropylene groups on average, low foaming properties are good, which is preferred.

More preferably, $R^6$ is (R') (R'')HC-, wherein R' and R" are the same or different linear, branched, or cyclic alkyl groups, and the total amount of carbon atoms is at least 5, preferably 7 to 17. Preferably, at least one of R' and R" is a branched or cyclic hydrocarbon group.

Specific examples of the polyoxyethylene alkyl ether include $C_{13}H_{27}\text{-O-}(C_2H_4O)_n\text{-H}$, $C_{12}H_{25}\text{-O-}(C_2H_4O)_n\text{-H}$, $C_{10}H_{21}CH(CH_3)CH_2\text{-O-}(C_2H_4O)_n\text{-H}$, $C_{13}H_{27}\text{-O-}(C_2H_4O)_n\text{-}(CH(CH_3)CH_2O)\text{-H}$, $C_{16}H_{33}\text{-O-}(C_2H_4O)_n\text{-H}$, and $HC(C_5H_{11})(C_7H_{15})\text{-O-}(C_2H_4O)_n\text{-H}$ (wherein, in each formula, n is an integer of 1 or more). Examples of commercially available products of the polyoxyethylene alkyl ether include the Genapol X series (manufactured by Clariant) exemplified by Genapol X080 (trade name), the NOIGEN TDS series (manufactured by DKS Co., Ltd.) exemplified by NOIGEN TDS-80 (trade name), the LEOCOL TD series (manufactured by Lion Corp.) exemplified by LEOCOL TD-90 (trade name), the LIONOL(R) TD series (manufactured by Lion Corp.), the T-Det A series (manufactured by Harcros Chemicals Inc.) exemplified by T-Det A 138 (trade name), and the Tergitol(R) 15S series (manufactured by Dow Chemical Co., Ltd.).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all trade names, manufactured by Dow Chemical Co., Ltd.).

The hydrophobic group of the nonionic surfactant may be any of an alkylphenol group, a linear alkyl group, and a branched alkyl group. Examples of the nonionic surfactant include a nonionic surfactant represented by the general formula (ii):

$$R^7\text{-}C_6H_4\text{-O-}A^2\text{-H} \qquad \text{(ii)}$$

wherein $R^7$ is a linear or branched alkyl group having 4 to 12 carbon atoms, and $A^2$ is a polyoxyalkylene chain. Specific examples of the nonionic surfactant include Triton(R) X-100 (trade name, manufactured by Dow Chemical Co., Ltd.).

The polyoxyalkylene chain of $A^2$ may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically supplied, or a broader or bimodal distribution which may be obtained by blending. When the average number of repeating oxypropylene groups is more than 0, the oxyethylene

groups and oxypropylene groups in the polyoxyalkylene chain may be arranged in blocks or randomly. From the viewpoint of viscosity and precipitation stability of the composition, a polyoxyalkylene chain in which the average number of repeating oxyethylene groups is 7 to 12 and the average number of repeating oxypropylene groups is 0 to 2 is preferred. In particular, when $A^2$ has 0.5 to 1.5 oxypropylene groups on average, low foaming properties are good, which is preferred.

More preferably, $R^7$ is a primary or secondary alkyl group, and is more preferably (R')(R")HC-, wherein R' and R" are the same or different linear, branched, or cyclic alkyl groups, and the total amount of carbon atoms is at least 5, preferably 7 to 17. Preferably, at least one of R' and R" is a branched or cyclic hydrocarbon group.

Examples of the nonionic surfactant also include polyol compounds. Specific examples thereof include those described in International Publication No. WO 2011/014715. Typical examples of the polyol compound include compounds having one or more sugar units as polyol units. The sugar units may be modified to contain at least one long chain. Examples of suitable polyol compounds containing at least one long chain moiety include alkyl glycosides, modified alkyl glycosides, sugar esters, and combinations thereof. Examples of the sugars include, but are not limited to, monosaccharides, oligosaccharides, and sorbitanes. Examples of monosaccharides include pentoses and hexoses. Typical examples of monosaccharides include ribose, glucose, galactose, mannose, fructose, arabinose, and xylose. Examples of oligosaccharides include oligomers of 2 to 10 of the same or different monosaccharides. Examples of oligosaccharides include, but are not limited to, saccharose, maltose, lactose, raffinose, and isomaltose.

Typically, sugars suitable for use as the polyol compound include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to the carbon ring atoms. Typically, the sugars have been modified in that one or more of the hydrogen atoms of a hydroxy group (and/or hydroxyalkyl group) bonded to the carbon ring atoms has been substituted by the long chain residues such that an ether or ester bond is created between the long chain residue and the sugar moiety. The sugar-based polyol may contain a single sugar unit or a plurality of sugar units. The single sugar unit or the plurality of sugar units may be modified with long chain moieties as described above. Specific examples of sugar-based polyol compounds include glycosides, sugar esters, sorbitan esters, and mixtures and combinations thereof.

A preferred type of polyol compounds are alkyl or modified alkyl glucosides. This type of surfactants contains at least one glucose moiety. Examples of alkyl or modified alkyl glucosides include compounds represented by the formula:

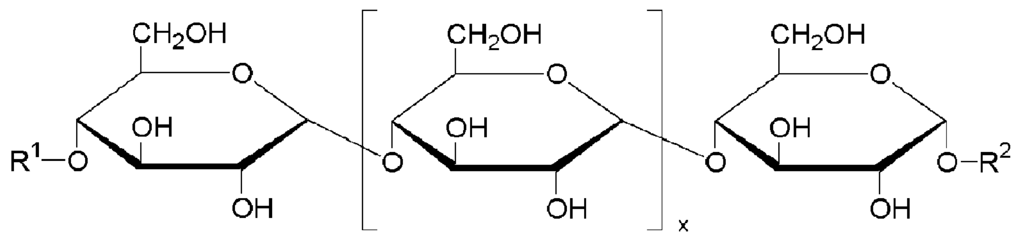

wherein x represents 0, 1, 2, 3, 4, or 5 and $R^1$ and $R^2$ each independently represent H or a long chain unit containing at least 6 carbon atoms, with the proviso that at least one of $R^1$ or $R^2$ is not H. Typical examples of $R^1$ and $R^2$ include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. It is understood that the above formula represents specific examples of alkyl poly glucosides showing glucose in its pyranose form but other sugars or the same sugars but in different enantiomeric or diastereomeric forms may also be used.

Alkyl glucosides are obtainable by, for example, acid-catalyzed reactions of glucose, starch, or n-butyl glucoside with aliphatic alcohols, which typically yields a mixture of various alkyl glucosides (Alkylpolygylcoside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic(R) R series and tridecyl alcohol alkoxylates supplied from BASF as Iconol(R) TDA series.

The nonionic surfactant is preferably at least one selected from the group consisting of a nonionic surfactant represented by the general formula (i) and a nonionic surfactant represented by the general formula (ii), and more preferably a nonionic surfactant represented by the general formula (i).

Preferably, the nonionic surfactant does not contain an aromatic moiety.

In the polymerization, a compound having a functional group capable of reacting by radical polymerization and

a hydrophilic group may be used together with the polymer (1). As the compound having a functional group capable of reacting by radical polymerization and a hydrophilic group, the same compound as a modifying monomer (A), which will be described later, can be used.

In the polymerization, in addition to the polymer (1) and other compounds having a surfactant function used as necessary, an additive may also be used to stabilize the compounds. Examples of the additive include a buffer, a pH adjuster, a stabilizing aid, and a dispersion stabilizer.

The stabilizing aid is preferably paraffin wax, fluorine-containing oil, a fluorine-containing solvent, silicone oil, or the like. The stabilizing aids may be used alone or in combination of two or more. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. It is desirable that the stabilizing aid is sufficiently hydrophobic so that the stabilizing aid is completely separated from the aqueous dispersion, after polymerization, and does not serve as a contaminating component.

The polymerization is performed by charging a polymerization reactor with an aqueous medium, the polymer (1), monomers, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the components such as the monomers, the polymerization initiator, a chain transfer agent, and the polymer (1) may additionally be added depending on the purpose. The polymer (1) may be added after the polymerization reaction is initiated.

The polymerization is usually performed at a polymerization temperature of 5 to 120°C and a polymerization pressure of 0.05 to 10 MPaG. The polymerization temperature and the polymerization pressure are determined as appropriate in accordance with the types of the monomers used, the target molecular weight of the fluoropolymer, and the reaction rate.

The polymerization initiator may be any polymerization initiator capable of generating radicals within the polymerization temperature range, and known oil-soluble and/or water-soluble polymerization initiators may be used. The polymerization initiator may be combined with a reducing agent, for example, to form a redox agent, which initiates the polymerization. The concentration of the polymerization initiator is appropriately determined depending on the types of the monomers, the target molecular weight of the fluoropolymer, and the reaction rate.

The polymerization initiator to be used may be an oil-soluble radical polymerization initiator, a water-soluble radical polymerization initiator, or an azo compound.

The oil-soluble radical polymerization initiator may be a known oil-soluble peroxide, and representative examples thereof include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluorohexanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples thereof include ammonium salts, potassium salts, and sodium salts of persulfuric acid, perboric acid, perchloric acid, perphosphoric acid, and percarbonic acid, organic peroxides such as disuccinic acid peroxide and diglutaric acid peroxide, t-butyl permaleate, and t-butyl hydroperoxide. A reducing agent such as a sulfite may be contained together, and the amount thereof to be used may be 0.1 to 20 times the amount of the peroxide.

For example, in a case where the polymerization is performed at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate, potassium persulfate, and sodium persulfate. Examples of the sulfites include sodium sulfite and ammonium sulfite. In order to increase the decomposition rate of the initiator, the combination of the redox initiator may preferably contain a copper salt or an iron salt. An example of the copper salt is copper(II) sulfate and an example of the iron salt is iron(II) sulfate.

Examples of the redox initiator include potassium permanganate/oxalic acid, ammonium persulfate/bisulfite/iron

sulfate, manganese triacetate/oxalic acid, ammonium cerium nitrate/oxalic acid, and bromate/bisulfite, and potassium permanganate/oxalic acid is preferred. In the case of using a redox initiator, either an oxidizing agent or a reducing agent may be charged into a polymerization tank in advance, followed by adding the other continuously or intermittently thereto to initiate the polymerization. For example, in the case of using potassium permanganate/oxalic acid, preferably, oxalic acid is charged into a polymerization tank and potassium permanganate is continuously added thereto.

The polymerization initiator may be added in any amount, and the initiator in an amount that does not significantly decrease the polymerization rate (e.g., concentration of several ppm in water) or more may be added at once in the initial stage of polymerization, or may be added successively or continuously. The upper limit thereof falls within a range where the reaction temperature is allowed to increase while the polymerization reaction heat is removed through the device surfaces. The upper limit thereof is more preferably within a range where the polymerization reaction heat can be removed through the device surfaces.

The aqueous medium is a reaction medium in which the polymerization is performed, and means a liquid containing water. The aqueous medium may be any medium containing water, and it may be one containing water and, for example, any of fluorine-free organic solvents such as alcohols, ethers, and ketones, and/or fluorine-containing organic solvents having a boiling point of 40°C or lower.

In the polymerization, known chain transfer agents, radical scavengers, and decomposers may be added to adjust the polymerization rate and the molecular weight depending on the purpose.

Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the general formula:

$$R^aI_xBr_y$$

wherein x and y are each an integer of 0 to 2 and satisfy $1 \leq x + y \leq 2$; and $R^a$ is a saturated or unsaturated fluorohydrocarbon or chlorofluorohydrocarbon group having 1 to 16 carbon atoms, or a hydrocarbon group having 1 to 3 carbon atoms, each of which optionally contains an oxygen atom. By using a bromine compound or an iodine compound, iodine or bromine is introduced into the polymer, and serves as a crosslinking point.

Examples of the bromine compound or iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Of these, 1,4-diiodoperfluorobutane, 1,6-diiodoperfluorohexane, and 2-iodoperfluoropropane are preferably used from the viewpoints of polymerization reactivity, crosslinkability, availability, and the like.

The amount of the chain transfer agent used is usually 1 to 50,000 ppm by mass, preferably 1 to 20,000 ppm by mass, based on the total amount of the fluoromonomer fed.

The chain transfer agent may be added to the reaction vessel at once before initiation of the polymerization, may be added at once after initiation of the polymerization, may be added in multiple portions during the polymerization, or may be added continuously during the polymerization.

The polymerization initiator used may be an organic peroxide such as a persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Further, during the polymerization, a radical scavenger such as hydroquinone or catechol may be added or a decomposer for peroxides such as ammonium sulfite may be added to adjust the radical concentration in the system.

In the polymerization, the fluoropolymer may be obtained by polymerizing the perfluoromonomer in the aqueous medium in the presence of the polymer (1) to produce an aqueous dispersion of fluoropolymer particles, and by seed-polymerizing the perfluoromonomer to the fluoropolymer particles in the aqueous dispersion of the fluoropolymer particles.

The polymerization is preferably one in which the perfluoromonomer is polymerized substantially in the absence

of a fluorine-containing surfactant (except for the compound having a functional group capable of reacting by radical polymerization and a hydrophilic group). Conventionally, fluorine-containing surfactants have been used for the polymerization of perfluoromonomers in an aqueous medium, but the production method of the present disclosure allows for obtaining a fluoropolymer even without using the fluorine-containing surfactants.

In the present disclosure, the expression "substantially in the absence of a fluorine-containing surfactant" means that the amount of the fluorine-containing surfactant is 10 ppm by mass or less based on the aqueous medium. The amount of the fluorine-containing surfactant based on the aqueous medium is preferably 1 ppm by mass or less, more preferably 100 ppb by mass or less, still more preferably 10 ppb by mass or less, and further preferably 1 ppb by mass or less.

Examples of the fluorine-containing surfactant include anionic fluorine-containing surfactants. The anionic fluorine-containing surfactant may be, for example, a fluorine atom-containing surfactant having 20 or less carbon atoms in total in the portion excluding the anionic group.

The fluorine-containing surfactant may also be a surfactant containing fluorine having a molecular weight of 1,000 or less, preferably 800 or less, in the anionic moiety.

The "anionic moiety" means the portion of the fluorine-containing surfactant excluding the cation. For example, in the case of $F(CF_2)_{n1}COOM$ represented by the formula (I) described later, the anionic moiety is the "$F(CF_2)_{n1}COO$" portion.

Examples of the fluorine-containing surfactant also include fluorine-containing surfactants having a Log POW of 3.5 or less. The Log POW is a partition coefficient between 1-octanol and water, which is represented by Log P (wherein P represents the ratio between the concentration of the fluorine-containing surfactant in octanol and the concentration of the fluorine-containing surfactant in water in a phase-separated octanol/water (1:1) liquid mixture containing the fluorine-containing surfactant).

The Log POW is determined as follows. Specifically, HPLC is performed on standard substances (heptanoic acid, octanoic acid, nonanoic acid, and decanoic acid) each having a known octanol/water partition coefficient using TOSOH ODS-120T column (φ4.6 mm × 250 mm, Tosoh Corp.) as a column and acetonitrile/0.6% by mass $HClO_4$ aqueous solution =1/1 (vol/vol %) as an eluent at a flow rate of 1.0 ml/min, a sample amount of 300 μL, and a column temperature of 40°C; with a detection light of UV 210 nm. For each standard substance, a calibration curve is drawn with respect to the elution time and the known octanol/water partition coefficient. Based on the calibration curve, Log POW is calculated from the elution time of the sample liquid in HPLC.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of H are replaced by F; the alkylene group optionally containing one or more ether bonds in which some of H are replaced by Cl; and Y° is an anionic group.

The anionic group Y° may be -COOM, $-SO_2M$, or $-SO_3M$, and may be -COOM or $-SO_3M$.

M is H, a metal atom, $NR^7_4$, imidazolium optionally having a substituent, pyridinium optionally having a substituent, or phosphonium optionally having a substituent, wherein $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

$Rf^{n0}$ may be one in which 50% or more of H has been replaced by fluorine.

Examples of the compound represented by the general formula ($N^0$) include:

a compound represented by the following general formula ($N^1$):

$X^{n0}$-$(CF_2)_{m1}$-$Y^0$ $(N^1)$

wherein $X^{n0}$ is H, Cl, or F; m1 is an integer of 3 to 15; and Y° is as defined above;
a compound represented by the following general formula ($N^2$):

$Rf^{n1}$-O-$(CF(CF_3)CF_2O)_{m2}CFX^{n1}$-$Y^0$ $(N^2)$

wherein $Rf^{n1}$ is a perfluoroalkyl group having 1 to 5 carbon atoms; m2 is an integer of 0 to 3; $X^{n1}$ is F or $CF_3$; and Y° is as defined above;
a compound represented by the following general formula ($N^3$):

$Rf^{n2}(CH_2)_{m3}$-$(Rf^{n3})_q$-$Y^0$ $(N^3)$

wherein $Rf^{n2}$ is a partially or fully fluorinated alkyl group having 1 to 13 carbon atoms and optionally containing an ether bond; m3 is an integer of 1 to 3; $Rf^{n3}$ is a linear or branched perfluoroalkylene group having 1 to 3 carbon atoms; q is 0 or 1; and $Y^0$ is as defined above;
a compound represented by the following general formula ($N^4$):

$Rf^{n4}$-O-$(CY^{n1}Y^{n2})_pCF_2$-$Y^0$ $(N^4)$

wherein $Rf^{n4}$ is a linear or branched partially or fully fluorinated alkyl group having 1 to 12 carbon atoms and optionally containing an ether bond and/or a chlorine atom; and $Y^{n1}$ and $Y^{n2}$ are the same or different and are each H or F; p is 0 or 1; and $Y^0$ is as defined above; and
a compound represented by the general formula ($N^5$):

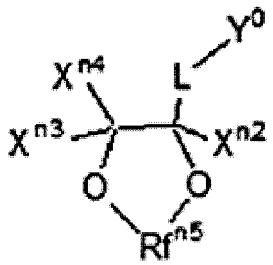

$(N^5)$

wherein $X^{n2}$, $X^{n3}$, and $X^{n4}$ may be the same or different and are each H, F, or a linear or branched partially or fully fluorinated alkyl group having 1 to 6 carbon atoms and optionally containing an ether bond; $Rf^{n5}$ is a linear or branched partially or fully fluorinated alkylene group having 1 to 3 carbon atoms and optionally containing an ether bond; L is a linking group; and Y° is as defined above, provided that the total number of carbon atoms in $X^{n2}$, $X^{n3}$, $X^{n4}$, and $Rf^{n5}$ is 18 or less.

More specific examples of the compound represented by the general formula ($N^0$) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

$F(CF_2)_{n1}COOM$ (I)

wherein n1 is an integer of 3 to 14; and M is H, a metal atom, $NR^7_4$, imidazolium optionally having a substituent, pyridinium optionally having a substituent, or phosphonium optionally having a substituent, wherein $R^7$ is H or an organic group.

The ω-H perfluorocarboxylic acid (II) is represented by the following general formula (II):

$$H(CF_2)_{n2}COOM \qquad (II)$$

wherein n2 is an integer of 4 to 15; and M is as defined above.

The perfluoroethercarboxylic acid (III) is represented by the following general formula (III):

$$Rf^1\text{-}O\text{-}(CF(CF_3)CF_2O)_{n3}CF(CF_3)COOM \qquad (III)$$

wherein $Rf^1$ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

$$Rf^2(CH_2)_{n4}Rf^3COOM \qquad (IV)$$

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$$Rf^4\text{-}O\text{-}CY^1Y^2CF_2\text{-}COOM \qquad (V)$$

wherein $Rf^4$ is a linear or branched partially or fully fluorinated alkyl group having 1 to 12 carbon atoms and optionally containing an ether bond and/or a chlorine atom; $Y^1$ and $Y^2$ are the same or different and are each H or F; and M is as defined above.

The perfluoroalkylsulfonic acid (VI) is represented by the following general formula (VI):

$$F(CF_2)_{n5}SO_3M \qquad (VI)$$

wherein n5 is an integer of 3 to 14; and M is as defined above.

The ω-H perfluorosulfonic acid (VII) is represented by the following general formula (VII):

$$H(CF_2)_{n6}SO_3M \qquad (VII)$$

wherein n6 is an integer of 4 to 14; and M is as defined above.

The perfluoroalkylalkylenesulfonic acid (VIII) is represented by the following general formula (VIII):

$$Rf^5(CH_2)_{n7}SO_3M \qquad (VIII)$$

wherein $Rf^5$ is a perfluoroalkyl group having 1 to 13 carbon atoms; n7 is an integer of 1 to 3; and M is as defined above.

The alkylalkylenecarboxylic acid (IX) is represented by the following general formula (IX):

$$Rf^6(CH_2)_{n8}COOM \qquad (IX)$$

wherein $Rf^6$ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

$$Rf^7\text{-}O\text{-}Rf^8\text{-}O\text{-}CF_2\text{-}COOM \qquad (X)$$

wherein $Rf^7$ is a linear or branched partially or fully fluorinated alkyl group having 1 to 6 carbon atoms and optionally containing an ether bond and/or a chlorine atom; $Rf^8$ is a linear or branched partially or fully fluorinated alkyl group having 1 to 6 carbon atoms; and M is as defined above.

The alkoxyfluorosulfonic acid (XI) is represented by the following general formula (XI):

$$Rf^9\text{-}O\text{-}CY^1Y^2CF_2\text{-}SO_3M \qquad (XI)$$

wherein $Rf^9$ is a linear or branched partially or fully fluorinated alkyl group having 1 to 12 carbon atoms and optionally containing an ether bond and optionally containing chlorine; $Y^1$ and $Y^2$ are the same or different and are each H or F; and M is as defined above.

The compound (XII) is represented by the following general formula (XII):

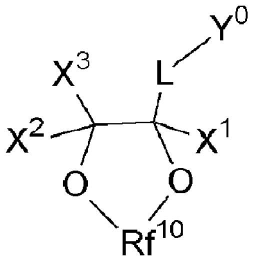

(X I I)

wherein $X^1$, $X^2$, and $X^3$ may be the same or different and are H, F, and a linear or branched partially or fully fluorinated alkyl group having 1 to 6 carbon atoms and optionally containing an ether bond; $Rf^{10}$ is a perfluoroalkylene group having 1 to 3 carbon atoms; L is a linking group; and Y° is an anionic group.

Y° may be -COOM, $-SO_2M$, or $-SO_3M$, and may be $-SO_3M$ or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

$$Rf^{11}\text{-O-}(CF_2CF(CF_3)O)_{n9}(CF_2O)_{n10}CF_2COOM \quad (XIII)$$

wherein $Rf^{11}$ is a fluoroalkyl group having 1 to 5 carbon atoms and containing chlorine; n9 is an integer of 0 to 3; n10 is an integer of 0 to 3; and M is as defined above. An example of the compound (XIII) is $CF_2ClO(CF_2CF(CF_3)O)_{n9}(CF_2O)_{n10}CF_2COONH_4$ (a mixture having an average molecular weight of 750, n9 and n10 in the formula are as described above).

As mentioned above, examples of the anionic fluorine-containing surfactant include a carboxylic acid-based surfactant and a sulfonic acid-based surfactant.

The fluorine-containing surfactant may be one type of fluorine-containing surfactant or it may be a mixture containing two or more types of fluorine-containing surfactants.

Examples of the fluorine-containing surfactant include compounds represented by the formulas below. The fluorine-containing surfactant may be a mixture of these compounds. In one embodiment of the polymerization, the fluoromonomer is polymerized substantially in the absence of the compounds represented by the following formulas:

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$, and

$CF_2ClCF(CF_3)OCF_2CF(CF_3)OCF_2COOM$,

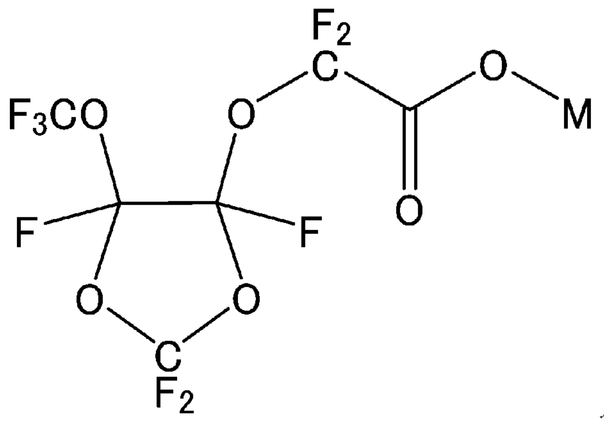

wherein, in each formula, M is H, a metal atom, $NR^7_4$, imidazolium optionally having a substituent, pyridinium optionally having a substituent, or phosphonium optionally having a substituent; and $R^7$ is H or an organic group.

By the polymerization, an aqueous dispersion containing the fluoropolymer can be obtained. The fluoropolymer is usually at a concentration of 8 to 50% by mass in the aqueous dispersion obtained by the polymerization. In the aqueous dispersion, the lower limit of the concentration of the fluoropolymer is preferably 10% by mass, and more preferably 15% by mass, while the upper limit thereof is preferably 40% by mass, and more preferably 35% by mass.

The content of the fluoropolymer in the aqueous dispersion is a value obtained by drying 1 g of the aqueous dispersion in an air dryer at 150°C for 60 minutes, measuring the mass of the non-volatile matter, and calculating the percentage of the mass of the non-volatile matter based on the mass of the aqueous dispersion (1 g).

<Fluoropolymer>

According to the first production method of the present disclosure, there is obtained a fluoropolymer in which the content of a polymerized unit derived from a perfluoromonomer in the fluoropolymer is 90 mol% or more based on all polymerized units of the fluoropolymer. The fluoropolymer in which the content of a polymerized unit derived from a perfluoromonomer is 90 mol% or more does not include a partially fluorinated elastomer.

It is preferable that the fluoropolymer has an ion exchange rate (IXR) of higher than 53. The preferred fluoropolymer has either no ionic groups at all or a limited number of ionic groups resulting in an ion exchange rate higher than about 100. The preferred ion exchange rate of the fluoropolymer is preferably 1,000 or more, more preferably 2,000 or more, and still more preferably 5,000 or more.

The fluorine substitution percentage of the fluoropolymer obtained by the first production method of the present disclosure is preferably 90 to 100% by mass, and more preferably 95% by mass or more. The fluoropolymer may be a perfluororesin or a perfluoroelastomer.

The fluorine substitution percentage can be calculated by the following equation.

Fluorine substitution percentage (%) = (number of fluorine atoms bonded to carbon atoms constituting fluoropolymer) / ((number of hydrogen atoms bonded to carbon atoms constituting fluoropolymer) + (number of fluorine atoms and chlorine atoms bonded to carbon atoms constituting fluoropolymer)) × 100

Examples of the fluoropolymer obtained by the first production method of the present disclosure include a polytetrafluoroethylene (PTFE); a melt-fabricable fluororesin such as a TFE/HFP copolymer (FEP), a TFE/perfluoro(alkyl vinyl ether) copolymer (PFA, MFA, etc.), a TFE/perfluoro(alkyl allyl ether) copolymer, and an electrolyte polymer precursor; and a perfluoroelastomer.

Of these, the fluoropolymer is preferably at least one selected from the group consisting of a PTFE and a perfluoroelastomer.

The fluoropolymer may have a core-shell structure. An example of the fluoropolymer having a core-shell structure is a PTFE including a core of a high-molecular-weight PTFE and a shell of a lower-molecular-weight PTFE or a modified PTFE in the particle. An example of such a PTFE is the PTFE described in National Publication of International Patent Application No. 2005-527652.

The core-shell structure may have the following structures.

Core: TFE homopolymer Shell: TFE homopolymer
Core: modified PTFE Shell: TFE homopolymer
Core: modified PTFE Shell: modified PTFE
Core: TFE homopolymer Shell: modified PTFE
Core: low-molecular-weight PTFE Shell: high-molecular-weight PTFE
Core: high-molecular-weight PTFE Shell: low-molecular-weight PTFE

In the fluoropolymer having the core-shell structure, the lower limit of the proportion of the core is preferably 0.5% by mass, more preferably 1.0% by mass, still more preferably 3.0% by mass, particularly preferably 5.0% by mass, and most preferably 10.0% by mass. The upper limit of the proportion of the core is preferably 99.5% by mass, more preferably 99.0% by mass, still more preferably 98.0% by mass, further preferably 97.0% by mass, particularly preferably 95.0% by mass, and most preferably 90.0% by mass.

In the fluoropolymer having the core-shell structure, the lower limit of the proportion of the shell is preferably 0.5% by mass, more preferably 1.0% by mass, still more preferably 3.0% by mass, particularly preferably 5.0% by mass, and most preferably 10.0% by mass. The upper limit of the proportion of the shell is preferably 99.5% by mass, more preferably 99.0% by mass, still more preferably 98.0% by mass, further preferably 97.0% by mass, particularly preferably 95.0% by mass, and most preferably 90.0% by mass.

In the fluoropolymer having the core-shell structure, the core or the shell may be composed of two or more layers. For example, the fluoropolymer may have a trilayer structure including a core center portion of a modified PTFE, a core outer layer portion of a TFE homopolymer, and a shell of a modified PTFE.

Examples of the fluoropolymer having a core-shell structure also include those in which a single particle of the fluoropolymer has a plurality of cores.

The above-mentioned (I) PTFE, (II) melt-fabricable fluororesin, and (III) perfluoroelastomer suitably produced by the production method of the present disclosure are preferably produced in the following manner.

(I) PTFE

In the first production method of the present disclosure, by polymerizing TFE as the perfluoromonomer, a PTFE (TFE polymer) can be produced as the fluoropolymer. The PTFE is suitably a non melt-processible PTFE.

In the production method of the present disclosure, polymerization of TFE is usually performed at a polymerization temperature of 10 to 150°C and a polymerization pressure of 0.05 to 5 MPaG. For example, the polymerization temperature is more preferably 30°C or higher, and still more preferably 50°C or higher. Further, the polymerization temperature is more preferably 120°C or lower, and still more preferably 100°C or lower. Further, the polymerization pressure is more preferably 0.3 MPaG or higher, still more preferably 0.5 MPaG or higher, and more preferably 5.0 MPaG or lower, and still more preferably 3.0 MPaG or lower. In particular, from the viewpoint of improving the yield of fluoropolymer, the polymerization pressure is preferably 1.0 MPaG or higher, more preferably 1.2 MPaG or higher, still more preferably 1.5 MPaG or higher, and more preferably 2.0 MPaG or higher.

In an embodiment, the polymerization reaction is initiated by charging pure water into a pressure-resistant reaction vessel equipped with a stirrer, deoxidizing the system, charging TFE, increasing the temperature to a predetermined level, and adding a polymerization initiator. When the pressure decreases as the reaction progresses, additional TFE is fed continuously or intermittently to maintain the initial pressure. When the amount of TFE fed reaches a predetermined level, feeding is stopped, and then TFE in the reaction vessel is purged and the temperature is returned to room temperature, whereby the reaction is completed. Additional TFE may be added continuously or intermittently to prevent pressure drop.

In production of the TFE polymer (PTFE), various known modifying monomers may be used in combination. The TFE polymer in the present disclosure is a concept that encompasses not only a TFE homopolymer but also a non

melt-processible copolymer of TFE and a modifying monomer (hereinafter, referred to as a "modified PTFE").

The modifying monomer may be any modifying monomer copolymerizable with TFE, and examples thereof include a fluoromonomer and a non-fluoromonomer. Further, one or more kinds of the modifying monomers may be used.

An example of the non-fluoromonomer is, but not limited to, a monomer represented by the general formula:

$$CH_2=CR^{Q1}-LR^{Q2}$$

wherein $R^{Q1}$ represents a hydrogen atom or an alkyl group; L represents a single bond, -CO-O-*, -O-CO-*, or -O-; * represents a bond position with $R^{Q2}$; and $R^{Q2}$ represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Of these, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, a perfluoro unsaturated compound represented by the following general formula (A):

$$CF_2=CF-ORf \qquad (A)$$

wherein Rf represents a perfluoroorganic group. The "perfluoroorganic group" in the present disclosure, means an organic group in which all hydrogen atoms bonded to the carbon atoms are replaced by fluorine atoms. The perfluoroorganic group optionally has ether oxygen.

Examples of the perfluorovinyl ether include a perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include: those represented by the general formula (A) in which Rf is a perfluoro(alkoxyalkyl) group having 4 to 9 carbon atoms; those in which Rf is a group represented by the following formula:

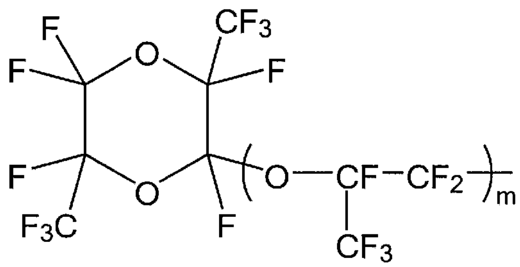

wherein m represents 0 or an integer of 1 to 4; and those in which Rf is a group represented by the following formula:

$$CF_3CF_2CF_2-(O-CF(CF_3)-CF_2)_n-$$

wherein n represents an integer of 1 to 4.

Examples of the hydrogen-containing fluoroolefin include $CH_2=CF_2$, $CFH=CH_2$, $CFH=CF_2$, $CH_2=CFCF_3$, $CH_2=CHCF_3$, $CHF=CHCF_3$ (E isomer), and $CHF=CHCF_3$ (Z isomer).

Examples of the (perfluoroalkyl)ethylene (PFAE) include, but are not limited to, (perfluorobutyl)ethylene (PFBE) and (perfluorohexyl)ethylene.

An example of the perfluoroallyl ether is a fluoromonomer represented by the general formula:

$$CF_2=CF-CF_2-ORf$$

wherein Rf represents a perfluoroorganic group.

Rf in the above general formula is the same as Rf in the general formula (A). Rf is preferably a perfluoroalkyl

group having 1 to 10 carbon atoms or a perfluoroalkoxyalkyl group having 1 to 10 carbon atoms. The perfluoroallyl ether is preferably at least one selected from the group consisting of $CF_2$=CF-$CF_2$-O-$CF_3$, $CF_2$=CF-$CF_2$-O-$C_2F_5$, $CF_2$=CF-$CF_2$-O-$C_3F_7$, and $CF_2$=CF-$CF_2$-O-$C_4F_9$, more preferably at least one selected from the group consisting of $CF_2$=CF-$CF_2$-O-$C_2F_5$, $CF_2$=CF-$CF_2$-O-$C_3F_7$, and $CF_2$=CF-$CF_2$-O-$C_4F_9$, and still more preferably $CF_2$=CF-$CF_2$-O-$CF_2CF_2CF_3$.

The modifying monomer is also preferably exemplified by a modifying monomer (3) having a monomer reactivity ratio of 0.1 to 8. The presence of the modifying monomer (3) makes it possible to obtain PTFE particles having a small particle size, and to thereby obtain an aqueous dispersion having high dispersion stability.

Here, the monomer reactivity ratio in copolymerization with TFE is a value obtained by dividing the rate constant in the case that propagating radicals react with TFE by the rate constant in the case that the propagating radicals react with modifying monomers, in the case that the propagating radicals are less than the repeating unit derived from TFE. A smaller monomer reactivity ratio indicates higher reactivity of the modifying monomers with TFE. The monomer reactivity ratio can be determined by copolymerizing TFE with the modifying monomers, determining the compositional features in the polymer formed immediately after initiation, and calculating the monomer reactivity ratio by Fineman-Ross equation.

The copolymerization is performed by, using 3,600 g of deionized degassed water, 1,000 ppm by mass of ammonium perfluorooctanoate based on the water, and 100 g of paraffin wax contained in an autoclave made of stainless steel with an internal volume of 6.0 L at a pressure of 0.78 MPaG and a temperature of 70°C. A modifying monomer in an amount of 0.05 g, 0.1 g, 0.2 g, 0.5 g, or 1.0 g is added into the reactor, and then 0.072 g of ammonium persulfate (20 ppm by mass based on the water) is added thereto. To maintain the polymerization pressure at 0.78 MPaG, TFE is continuously fed thereinto. When the charged amount of TFE reaches 1,000 g, stirring is stopped and the pressure is released until the pressure in the reactor decreases to the atmospheric pressure. After cooling, the paraffin wax is separated to obtain an aqueous dispersion containing the produced polymer. The aqueous dispersion is stirred so that the resulting polymer coagulates, and the polymer is dried at 150°C. The compositional features in the resulting polymer are calculated by appropriate combination of NMR, FT-IR, elemental analysis, and X-ray fluorescence analysis depending on the types of the monomers.

The modifying monomer (3) having a monomer reactivity ratio of 0.1 to 8 is preferably at least one selected from the group consisting of modifying monomers represented by the formulas (3a) to (3d):

$CH_2$=CH-$Rf^1$ (3a)

wherein $Rf^1$ is a perfluoroalkyl group having 1 to 10 carbon atoms;

$CF_2$=CF-O-$Rf^2$ (3b)

wherein $Rf^2$ is a perfluoroalkyl group having 1 to 2 carbon atoms;

$CF_2$=CF-O-$(CF_2)_n$CF=$CF_2$ (3c)

wherein n is 1 or 2; and

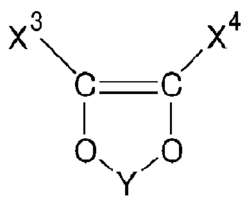

(3d)

wherein $X^3$ and $X^4$ are each F, Cl, or a methoxy group; and Y is represented by the formula Y1 or Y2;

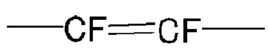

(Y1)

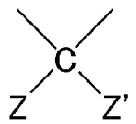

(Y2)

in the formula Y2, Z and Z' are each F or a fluorinated alkyl group having 1 to 3 carbon atoms.

The content of the modifying monomer (3) unit is preferably in the range of 0.00001 to 1.0% by mass based on all polymerized units in PTFE. The lower limit thereof is more preferably 0.0001% by mass, more preferably 0.0005% by mass, still more preferably 0.001% by mass, further preferably 0.005% by mass. The upper limit is, in the preferred order, 0.90% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer is preferably at least one selected from the group consisting of hexafluoropropylene, chlorotrifluoroethylene, vinylidene fluoride, perfluoro(alkyl vinyl ethers), (perfluoroalkyl)ethylenes, ethylene, and modifying monomers having a functional group capable of reacting by radical polymerization and a hydrophilic group, in view of obtaining an aqueous dispersion with a small average primary particle size of a primary particle, a small aspect ratio of primary particles, and excellent stability. The use of the modifying monomer allows for obtaining an aqueous dispersion of PTFE with a smaller average primary particle size, a small aspect ratio of primary particles, and excellent dispersion stability, and it is possible to obtain aqueous dispersion with a small amount of uncoagulated polymer.

From the viewpoint of reactivity with TFE, the modifying monomer preferably contains at least one selected from the group consisting of hexafluoropropylene, perfluoro(alkyl vinyl ether), and (perfluoroalkyl)ethylene.

More preferably, the modifying monomer contains at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene.

The total amount of the hexafluoropropylene unit, the perfluoro(alkyl vinyl ether) unit, and the (perfluoroalkyl)ethylene unit is preferably in the range of 0.00001 to 1% by mass based on all polymerized units in PTFE. The lower limit of the total amount thereof is more preferably 0.0001% by mass, more preferably 0.0005% by mass, still more preferably 0.001% by mass, and further preferably 0.005% by mass. The upper limit is, in the preferred order, 0.80% by mass, 0.70% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer preferably includes a modifying monomer having a functional group capable of reacting by radical polymerization and a hydrophilic group (hereinafter, referred to as a "modifying monomer (A)").

The presence of the modifying monomer (A) makes it possible to obtain PTFE particles having a small primary particle size, and to thereby obtain an aqueous dispersion having high dispersion stability. Also, the amount of uncoagulated polymer can be reduced. Furthermore, the aspect ratio of the primary particles can be made smaller.

The amount of the modifying monomer (A) used is preferably an amount greater than the amount equivalent to 0.1 ppm by mass of the aqueous medium, more preferably an amount greater than 0.5 ppm by mass, still more preferably an amount greater than 1.0 ppm by mass, further preferably 5 ppm by mass or more, and particularly preferably 10 ppm by mass or more. When the amount of the modifying monomer (A) used is too small, the average primary particle size of PTFE obtained may not be small enough.

The amount of the modifying monomer (A) used may be within the above range, but for example, the upper limit can be set to 5,000 ppm by mass. In the production method, the modifying monomer (A) may also be added into the system during the reaction in order to improve the stability of the aqueous dispersion during or after the reaction.

Since the modifying monomer (A) is highly water-soluble, even if the unreacted modifying monomer (A) remains in the aqueous dispersion, it can be easily removed by the concentration step or the coagulation and washing steps.

The modifying monomer (A) is incorporated in the produced polymer in the process of polymerization, but since the concentration of the modifying monomer (A) in the polymerization system itself is low and the amount incorporated into the polymer is small, there is no problem of the heat resistance of PTFE being degraded or coloring after sintering.

Examples of the hydrophilic group in the modifying monomer (A) include $-NH_2$, $-PO_3M$, $-OPO_3M$, $-SO_3M$, $-OSO_3M$, and - COOM, wherein M represents H, a metal atom, $NR^{7y}{}_4$, imidazolium optionally having a substituent, pyridinium optionally having a substituent, or phosphonium optionally having a substituent, wherein $R^{7y}$ is H or an organic group, and may be the same or different, and any two thereof may be bonded to each other to form a ring. Of these, the hydrophilic group is preferably - $SO_3M$ or -COOM. The organic group in $R^{7y}$ is preferably an alkyl group. $R^{7y}$ is preferably H or a $C_{1-10}$ organic group, more preferably H or a $C_{1-4}$ organic group, and still more preferably H or a $C_{1-4}$ alkyl group.

Examples of the metal atom include monovalent and divalent metal atoms, alkali metals (Group 1) and alkaline earth metals (Group 2), and preferred is Na, K, or Li.

Examples of the "functional group capable of reacting by radical polymerization" in the modifying monomer (A) include groups having an ethylenically unsaturated bond, such as a vinyl group or an allyl group. The group having an ethylenically unsaturated bond can be represented by the following formula:

$$CX^eX^g=CX^fR-$$

wherein $X^e$, $X^f$, and $X^g$ are each independently F, Cl, H, $CF_3$, $CF_2H$, $CFH_2$, or $CH_3$; and R is a linking group. Examples of the linking group of R include a linking group as $R^a$ described later. Preferred are groups having an unsaturated bond,

such as $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, and $-O-CF_2-CF=CF_2$.

Since the modifying monomer (A) has a functional group capable of reacting by radical polymerization, it is presumed that, when used in the polymerization, it reacts with the fluorine-containing monomer in the initial stage of the polymerization reaction to form particles that have a hydrophilic group derived from the modifying monomer (A) and are highly stable. Thus, polymerization in the presence of the modifying monomer (A) is considered to increase the number of particles.

The polymerization may be carried out in the presence of one kind of the modifying monomer (A), or in the presence of two or more kinds thereof.

In the polymerization, a compound having an unsaturated bond can be used as the modifying monomer (A).

The modifying monomer (A) is preferably a compound represented by the general formula (4):

$$CX^iX^k=CX^jR^a-(CZ^1Z^2)_k-Y^3 \qquad (4)$$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1.

Examples of the hydrophilic group include $-NH_2$, $-PO_3M$, $-OPO_3M$, $-SO_3M$, $-OSO_3M$, and -COOM, wherein M represents H, a metal atom, $NR^{7y}_4$, imidazolium optionally having a substituent, pyridinium optionally having a substituent, or phosphonium optionally having a substituent, wherein $R^{7y}$ is H or an organic group, and may be the same or different, and any two thereof may be bonded to each other to form a ring. Of these, the hydrophilic group is preferably $-SO_3M$ or -COOM. The organic group in $R^{7y}$ is preferably an alkyl group. $R^{7y}$ is preferably H or a $C_{1-10}$ organic group, more preferably H or a $C_{1-4}$ organic group, and still more preferably H or a $C_{1-4}$ alkyl group. Examples of the metal atom include monovalent and divalent metal atoms, alkali metals (Group 1) and alkaline earth metals (Group 2), and preferred is Na, K, or Li.

The use of the modifying monomer (A) allows for obtaining an aqueous dispersion having a smaller average primary particle size and superior stability. Also, the aspect ratio of the primary particles can be made smaller.

$R^a$ is a linking group. In the present disclosure, the term "linking group" refers to a divalent linking group. The linking group may be a single bond and preferably contains at least one carbon atom, and the number of carbon atoms may be 2 or more, 4 or more, 8 or more, 10 or more, or 20 or more. The upper limit thereof is not limited, and may be 100 or less, and may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas and carbamates. The linking group may be free from carbon atoms and may be a catenary heteroatom such as oxygen, sulfur, or nitrogen.

$R^a$ is preferably a catenary heteroatom such as oxygen, sulfur, or nitrogen, or a divalent organic group.

When $R^a$ is a divalent organic group, the hydrogen atom bonded to the carbon atom may be replaced by a halogen other than fluorine, such as chlorine, and may or may not contain a double bond. Further, $R^a$ may be linear or branched, and may be cyclic or acyclic. $R^a$ may also contain a functional group (e.g., ester, ether, ketone, amine, halide, etc.).

$R^a$ may also be a fluorine-free divalent organic group or a partially fluorinated or perfluorinated divalent organic group.

$R^a$ may be, for example, a hydrocarbon group in which a fluorine atom is not bonded to a carbon atom, a hydrocarbon group in which some of the hydrogen atoms bonded to a carbon atom are replaced by fluorine atoms, a hydrocarbon group in which all of the hydrogen atoms bonded to the carbon atoms are replaced by fluorine atoms, -(C=O)-, -(C=O)-O-, or a hydrocarbon group containing an ether bond, and these groups optionally contain an oxygen atom, optionally contain a double bond, and optionally contain a functional group.

$R^a$ is preferably -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced by fluorine.

$R^a$ is preferably at least one selected from $-(CH_2)_a-$, $-(CF_2)_a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, $-(C=O)-$, $-(C=O)-O-$, $-(C=O)-(CH_2)_a-$, $-(C=O)-(CF_2)_a-$, $-(C=O)-O-(CH_2)_a-$, $-(C=O)-O-(CF_2)_a-$, $-(C=O)-[(CH_2)_a-O]_b-$, $-(C=O)-[(CF_2)_a-O]_b-$, $-(C=O)-O[(CH_2)_a-O]_b-$, $-(C=O)-O[(CF_2)_a-O]_b-$, $-(C=O)-O[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)_a-O-(CF_2)_b-$, $-(C=O)-O-(CH_2)_a-O-(CH_2)_b-$, $-(C=O)-O-(CF_2)_a-O-(CF_2)_b-$, $-(C=O)-O-C_6H_4-$, and combinations thereof.

In the formula, a, b, c, and d are independently at least 1 or more. a, b, c and d may independently be 2 or

more, 3 or more, 4 or more, 10 or more, or 20 or more. The upper limits of a, b, c, and d are 100, for example.

Specific examples suitable for $R^a$ include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $- CF_2-O-CF(CF_3)CF_2-O-$, $-CF_2-O-CF(CF_3)CH_2-$, $-(C=O)-$, $-(C=O)-O-$, $- (C=O)-(CH_2)-$, $-(C=O)-(CF_2)-$, $-(C=O)-O-(CH_2)-$, $-(C=O)-O-(CF_2)-$, $- (C=O)-[(CH_2)_2-O]_n-$, $-(C=O)-[(CF_2)_2-O]_n-$, $-(C=O)-O[(CH_2)_2-O]_n-$, $- (C=O)-O[(CF_2)_2-O]_n-$, $-(C=O)-O[(CH_2)_2-O]_n-(CH_2)-$, $-(C=O)-[(CF_2)_2-O]_n-(CF_2)-$, $-(C=O)-(CH_2)_2-O-(CH_2)-$, $-(C=O)-(CF_2)_2-O-(CF_2)-$, $- (C=O)-O-(CH_2)_2-O-(CH_2)-$, $-(C=O)-O-(CF_2)_2-O-(CF_2)-$, and $-(C=O)-O-C_6H_4-$. In particular, preferred for $R^a$ among these is $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, $-CF_2-O-CF(CF_3)CF_2-O-$, $-(C=O)-$, $-(C=O)-O-$, $-(C=O)-(CH_2)-$, $-(C=O)-O-(CH_2)-$, $-(C=O)-O[(CH_2)_2-O]_n-$, $-(C=O)-O[(CH_2)_2-O]_n-(CH_2)-$, $- (C=O)-(CH_2)_2-O-(CH_2)-$, or $-(O=O)-O-C_6H_4-$.

In the formula, n is an integer of 1 to 10.

$-R^a-(CZ^1Z^2)_k-$ in the general formula (4) is preferably $- CF_2-O-CF_2-$, $-CF_2-O-CF(CF_3)-$, $-CF_2-O-C(CF_3)_2-$, $-CF_2-O-CF_2-CF_2-$, $- CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $- CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, $-CF_2-O-CF(CF_3)CF_2-O-C(CF_3)_2-$, $-(C=O)-$, $-(C=O)-O-$, $-(C=O)-(CH_2)-$, $- (C=O)-(CF_2)-$, $-(C=O)-O-(CH_2)-$, $-(C=O)-O-(CF_2)-$, $-(C=O)-[(CH_2)_2-O]_n-(CH_2)-$, $-(C=O)-[(CF_2)_2-O]_n-(CF_2)-$, $-(O=O)-[(CH_2)_2-O]_n-(CH_2)-(CH_2)-$, $-(C=O)-[(CF_2)_2-O]_n-(CF_2)-(CF_2)-$, $-(C=O)-O[(CH_2)_2-O]_n-(CF_2)-$, $-(C=O)-O[(CH_2)_2-O]_n-(CH_2)-(CH_2)-$, $-(C=O)-O[(CF_2)_2-O]_n-(CF_2)-$, $-(C=O)-O[(CF_2)_2-O]_n-(CF_2)-(CF_2)-$, $-(C=O)-(CH_2)_2-O-(CH_2)-(CH_2)-(C=O)-(CF_2)_2-O-(CF_2)-(CF_2)-$, $-(O=O)-O-(CH_2)_2-O-(CH_2)-(CH_2)-$, $-(C=O)-O-(CF_2)_2-O-(CF_2)-(CF_2)-$, $-(C=O)-(CH_2)_2-O-(CH_2)-C(CF_3)_2-$, $-(C=O)-O-(CF_2)_2-O-(CF_2)-C(CF_3)_2-$, or $-(C=O)-O-C_6H_4-C(CF_3)_2-$, and is more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, $-CF_2-O-CF(CF_3)CF_2-O-CF(CF_3)-$, $-(C=O)-$, $- (C=O)-O-(CH_2)-$, $-(C=O)-O-(CH_2)-(CH_2)-$, $-(C=O)-(CH_2)_2-O]_n-(CH_2)-(CH_2)-$, $-(C=O)-O-(CH_2)_2-O-(CH_2)-C(CF_3)_2-$, or $-(C=O)-O-C_6H_4-C(CF_3)_2-$.

In the formula, n is an integer of 1 to 10.

Specific examples of the compound represented by the general formula (4) include compounds represented by the following formulas:

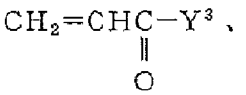、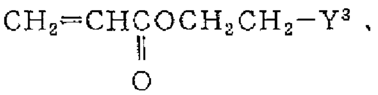、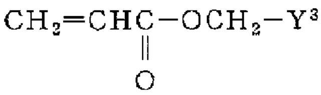、

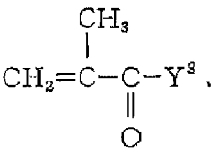、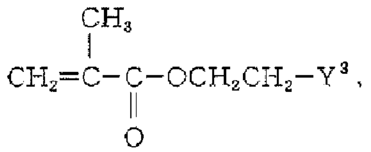、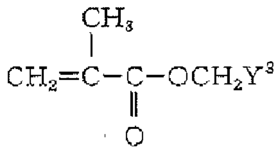,

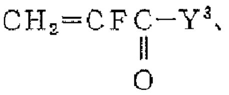、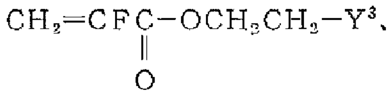、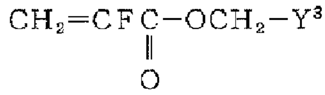、

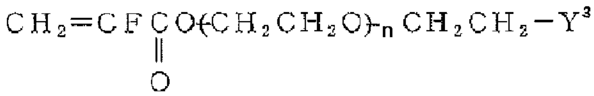,

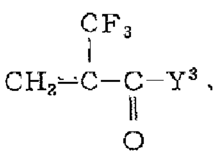、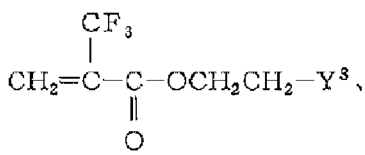、

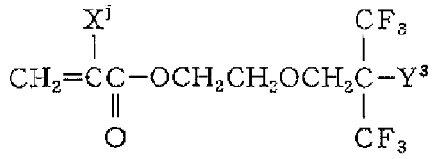 (i)、

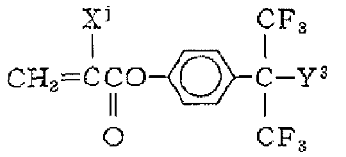 (ii)

wherein $X^j$ and $Y^3$ are as described above; and n is an integer of 1 to 10.

$R^a$ is preferably a divalent group represented by the general formula (r1):

$$-(C{=}O)_h-(O)_i-CF_2-O-(CX^6{}_2)_e-\{O-CF(CF_3)\}_f-(O)_g- \qquad (r1)$$

wherein $X^6$ is each independently H, F, or $CF_3$; e is an integer of 0 to 3; f is an integer of 0 to 3; g is 0 or 1; h is 0 or 1; and i is 0 or 1, and is also preferably a divalent group represented by the general formula (r2):

$$-(C{=}O)_h-(O)_i-CF_2-O-(CX^7{}_2)_e-(O)_g- \qquad (r2)$$

wherein $X^7$ is each independently H, F, or $CF_3$; e is an integer of 0 to 3; g is 0 or 1; h is 0 or 1; and i is 0 or 1.

$-R^a-(CZ^1Z^2)_k-$ in the general formula (4) is also preferably a divalent group represented by the following formula (t1):

$$-(C{=}O)_h-(O)_i-CF_2-O-(CX^6{}_2)_e-\{O-CF(CF_3)\}_f-(O)_g-CZ^1Z^2- \qquad (t1)$$

wherein $X^6$ is each independently H, F, or $CF_3$; e is an integer of 0 to 3; f is an integer of 0 to 3; g is 0 or 1; h is 0 or 1; i is 0 or 1; and $Z^1$ and $Z^2$ are each independently F or $CF_3$, and is more preferably a group in which one of $Z^1$ and $Z^2$ is F and the other is $CF_3$ in the formula (t1).

Also, in the general formula (4), $-R^a-(CZ^1Z^2)_k-$ is preferably a divalent group represented by the following formula (t2):

$$-(C{=}O)_h-(O)_1-CF_2-O-(CX^7{}_2)_e-(O)_g-CZ^1Z^2- \qquad (t2)$$

wherein $X^7$ is each independently H, F, or $CF_3$; e is an integer of 0 to 3; g is 0 or 1; h is 0 or 1; i is 0 or 1; and $Z^1$ and $Z^2$ are each independently F, or $CF_3$, and is more preferably a group in which one of $Z^1$ and $Z^2$ is F and the other is $CF_3$ in the formula (t2).

The compound represented by the general formula (4) also preferably has a C-F bond and does not have a C-H bond, in the portion excluding the hydrophilic group ($Y^3$). In other words, in the general formula (4), $X^i$, $X^j$, and $X^k$ are all F, and $R^a$ is preferably a perfluoroalkylene group having 1 or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by the general formula (4) may be partially fluorinated. In other words, the compound represented by the general formula (4) also preferably has at least one hydrogen atom bonded to a carbon atom and at least one fluorine atom bonded to a carbon atom, in the portion excluding the hydrophilic group ($Y^3$).

The compound represented by the general formula (4) is also preferably a compound represented by the following formula (4a):

$$CF_2{=}CF-O-Rf^0-Y^3 \qquad (4a)$$

wherein $Y^3$ is a hydrophilic group; and $Rf^0$ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by the general formula (4) is also preferably a compound represented by the following formula (4b):

$CH_2=CH-O-Rf^0-Y^3$ (4b)

wherein $Y^3$ is a hydrophilic group; and $Rf^0$ is a perfluorinated divalent linking group as defined in the formula (4a).

In the general formula (4), $Y^3$ is preferably $-OSO_3M$. Examples of the compound represented by the general formula (4) when $Y^3$ is $-OSO_3M$ include $CF_2=CF(OCF_2CF_2CH_2OSO_3M)$, $CH_2=CH((CF_2)_4CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH((CF_2)_4CH_2OSO_3M)$, $CF_2=CF(OCF_2CF_2SO_2N(CH_3)CH_2CH_2OSO_3M)$, $CH_2=CH(CF_2CF_2CH_2OSO_3M)$, and $CF_2=CF(OCF_2CF_2CF_2CF_2SO_2N(CH_3)CH_2CH_2OSO_3M)$. In the formula, M is as described above.

In the general formula (4), $Y^3$ is preferably $-SO_3M$. Examples of the compound represented by the general formula (4) when $Y^3$ is $-SO_3M$ include $CF_2=CF(OCF_2CF_2SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(CF_2CF_2SO_3M)$, $CF_2=CF(OCF_2CF(CF_3)OCF_2CF_2CF_2CF_2SO_3M)$, $CH_2=CH((CF_2)_4SO_3M)$, and $CH_2=CH((CF_2)_3SO_3M)$. In the formula, M is as described above.

In the general formula (4), $Y^3$ is preferably -COOM. Examples of the compound represented by the general formula (4) when $Y^3$ is -COOM include $CF_2=CF(OCF_2CF_2COOM)$, $CF_2=CF(OCF_2CF_2CF_2COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$ (n is greater than 1), $CH_2=CH((CF_2)_4COOM)$, $CH_2=CH(CF_2CF_2COOM)$, $CH_2=CH((CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COOM)$, $CF_2=CF(OCF_2CF(CF_3)OCF_2CF_2CF_2CF_2SO_2NR'CH_2COOM)$, $CH_2=CH((CF_2)_4SO_2NR'CH_2COOM)$, $CH_2=CH(CF_2CF_2SO_2NR'CH_2COOM)$, and $CH_2=CH((CF_2)_3SO_2NR'CH_2COOM)$. In the formula, R' is H or a $C_{1-4}$ alkyl group, and M is as described above.

In the general formula (4), $Y^3$ is preferably $-OPO_3M$ or $-OP(O)(OM)_2$. Examples of the compound represented by the general formula (4) when $Y^3$ is $-OPO_3M$ or $-OP(O)(OM)_2$ include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(CF_2CF_2CH_2OP(O)(OM)_2$, $CH_2=CH((CF_2)_4CH_2OP(O)(OM)_2)$, and $CH_2=CH((CF_2)_3CH_2OP(O)(OM)_2)$. In the formula, M is as described above.

In the general formula (4), $Y^3$ is preferably $-PO_3M$ or $-P(O)(OM)_2$. Examples of the compound represented by the general formula (4) when $Y^3$ is $-PO_3M$ or $-P(O)(OM)_2$ include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(O)(OM)_2)$, $CH_2=CH(CF_2CF_2P(O)(OM)_2)$, $CH_2=CH((CF_2)_4P(O)(OM)_2)$, and $CH_2=CH((CF_2)_3P(O)(OM)_2)$, wherein M is as described above.

The compound represented by the general formula (4) is preferably at least one selected from the group consisting of: a compound represented by the general formula (5):

$CX_2=CY(-CZ_2-O-Rf-Y^3)$ (5)

wherein X is the same or different and is -H or -F; Y is -H, - F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above; a compound represented by the general formula (6):

$CX_2=CY(-O-Rf-Y^3)$ (6)

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above; and a compound represented by the general formula (7):

$CX_2=CY(-Rf-Y^3)$ (7)

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above.

The fluorine-containing alkylene group having 2 to 100 carbon atoms and having an ether bond is an alkylene group which does not include a structure in which an oxygen atom is an end and contains an ether bond between carbon atoms.

In the general formula (5), each X is -H or -F. X may be both -F, or at least one thereof may be -H. For example, one thereof may be -F and the other may be -H, or both may be -H.

In the general formula (5), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or $-CF_3$, and more preferably -F.

In the general formula (5), Z is the same or different and is -H, -F, an alkyl group, or a fluoroalkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Z is preferably -H, -F, or $-CF_3$, and more preferably -F.

In the general formula (5), at least one of X, Y, and Z preferably contains a fluorine atom. For example, X, Y, and Z may be -H, -F, and -F, respectively.

In the general formula (5), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group also preferably has 30 or less carbon atoms, more preferably 20 or less carbon atoms, and still more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The fluorine-containing alkylene group having an ether bond preferably has 60 or less carbon atoms, more preferably 30 or less carbon atoms, and still more preferably 12 or less carbon atoms.

It is also preferable that the fluorine-containing alkylene group having an ether bond is a divalent group represented by the following formula:

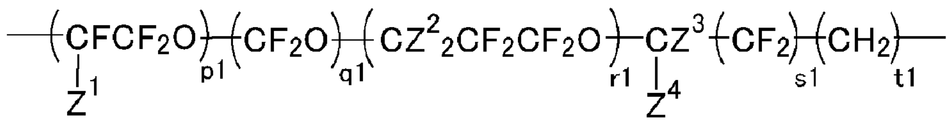

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (where n is an integer of 1 to 10), $-CF(CF_3)CF_2-O-CF(CF_3)CH_2-$, $-(CF(CF_3)CF_2-O)_n-CF(CF_3)CH_2-$ (where n is an integer of 1 to 10), $-CH_2CF_2CF_2O-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In the general formula (5), $Y^3$ is preferably -COOM, $-SO_3M$, or $-OSO_3M$, wherein M is H, a metal atom, $NR^{7y}_4$, imidazolium optionally having a substituent, pyridinium optionally having a substituent, or phosphonium optionally having a substituent, wherein $R^{7y}$ is H or an organic group, and may be the same or different, and any two thereof may be bonded to each other to form a ring.

The organic group in $R^{7y}$ is preferably an alkyl group.

$R^{7y}$ is preferably H or a $C_{1-10}$ organic group, more preferably H or a $C_{1-4}$ organic group, and still more preferably H or a $C_{1-4}$ alkyl group.

Examples of the metal atom include alkali metals (Group 1) and alkaline earth metals (Group 2), and preferred is Na, K, or Li.

M is preferably -H, a metal atom, or $-NR^7_4$, more preferably -H, an alkali metal (Group 1), an alkaline earth metal (Group 2), or $-NR^7_4$, still more preferably -H, -Na, -K, -Li, or $-NH_4$, further preferably -H, -Na, -K, or $-NH_4$, particularly preferably -H, -Na or $-NH_4$, and most preferably -H, or $-NH_4$.

$Y^3$ is preferably -COOM or $-SO_3M$, and more preferably -COOM.

The compound represented by the general formula (5) is preferably a compound (5a) represented by the general formula (5a) :

$$CH_2=CF(-CF_2-O-Rf-Y^3) \qquad (5a)$$

wherein Rf and $Y^3$ are as described above.

Specific examples of the compound represented by the general formula (5a) include a compound represented by the following formula:

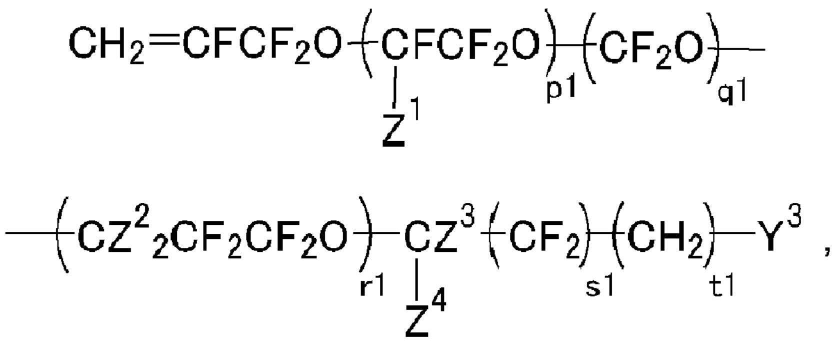

wherein $Z^1$ is F or $CF_3$; $Z^2$ and $Z^3$ are each H or F; $Z^4$ is H, F, or $CF_3$; p1 + q1 + r1 is an integer of 0 to 10; s1 is 0 or 1; t1 is an integer of 0 to 5; and $Y^3$ is as described above, with the proviso that when $Z^3$ and $Z^4$ are both H, p1 + q1 + r1 + s1 is not 0. More specific preferred examples thereof include:

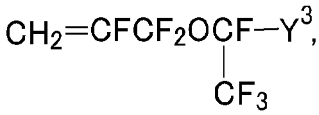, 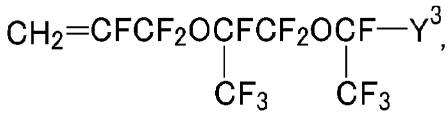,

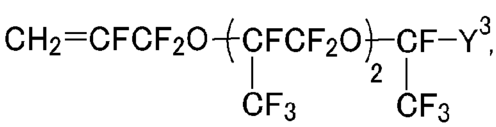, 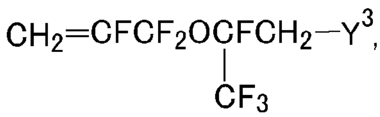,

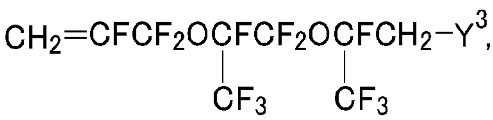, 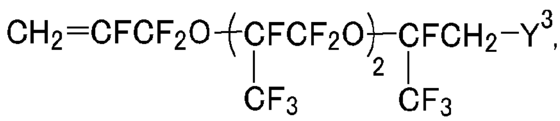,

$CH_2=CFCF_2OCH_2CF_2-Y^3$, $CH_2=CFCF_2O(CH_2CF_2CF_2O)CH_2CF_2-Y^3$,

$CH_2=CFCF_2OCH_2CF_2CH_2-Y^3$,

$CH_2=CFCF_2O(CH_2CF_2CF_2O)CH_2CF_2CH_2-Y^3$,

$CH_2=CFCF_2OCF_2CF_2-Y^3$, $CH_2=CFCF_2O(CF_2CF_2CF_2O)CF_2CF_2-Y^3$,

$CH_2=CFCF_2OCF_2CF_2CH_2-Y^3$,

$CH_2=CFCF_2O(CF_2CF_2CF_2O)CF_2CF_2CH_2-Y^3$,

$CH_2=CFCF_2OCF_2-Y^3$, $CH_2=CFCF_2O(CF_2CF_2O)CF_2-Y^3$,

$CH_2=CFCF_2OCF_2CH_2-Y^3$,

$CH_2=CFCF_2O(CF_2CF_2O)CF_2CH_2-Y^3$,

Of these, preferred are:

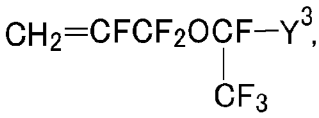
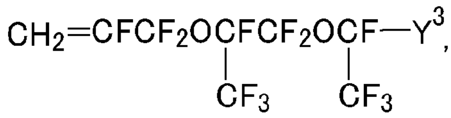

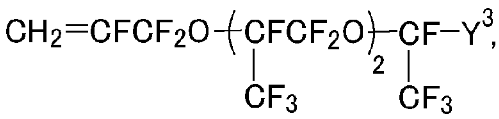
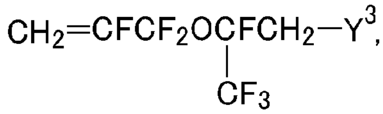

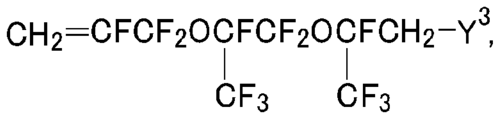
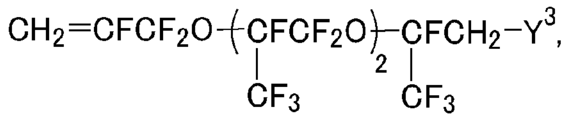

.

In the compound represented by the general formula (5a), $Y^3$ in the formula (5a) is preferably -COOM. Specifically, the compound represented by the general formula (5a) is preferably at least one selected from the group consisting of $CH_2$=$CFCF_2OCF(CF_3)COOM$ and $CH_2$=$CFCF_2OCF(CF_3)CF_2OCF(CF_3)COOM$ (wherein M is as defined above), and more preferably $CH_2$=$CFCF_2OCF(CF_3)COOM$.

The compound represented by the general formula (5) is preferably a compound (5b) represented by the general formula (5b) :

$CX^2{}_2$=$CFCF_2$-O-$(CF(CF_3)CF_2O)_{n5}$-$CF(CF_3)$-$Y^3$ (5b)

wherein each $X^2$ is the same, and each represent F or H; n5 represents 0 or an integer of 1 to 10; and $Y^3$ is as defined above.

In the formula (5b), n5 is preferably 0 or an integer of 1 to 5, more preferably 0, 1, or 2, and still more preferably 0 or 1 from the viewpoint of stability of the resulting aqueous dispersion. $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the compound represented by the formula (5b) include $CH_2$=$CFCF_2OCF(CF_3)COOM$ and $CH_2$=$CFCF_2OCF(CF_3)CF_2OCF(CF_3)COOM$, wherein M is as defined above.

Examples of the compound represented by the general formula (5) further include a compound represented by the general formula (5c):

$CF_2$=$CFCF_2$-O-Rf-$Y^3$ (5c)

wherein Rf and $Y^3$ are as described above.

More specific examples thereof include:

$CF_2$=$CFCF_2OCF_2CF_2CF_2$-$Y^3$,

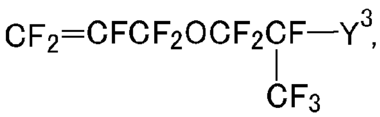

$CF_2$=$CFCF_2OCF_2CF_2CF_2CH_2$-$Y^3$,

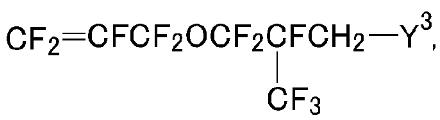

and the like.

In the general formula (6), each X is -H or -F. X may be both -F, or at least one thereof may be -H. For example, one thereof may be -F and the other may be -H, or both may be -H.

In the general formula (6), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or $-CF_3$, and more preferably -F.

In the general formula (6), at least one of X and Y preferably contains a fluorine atom. For example, X, Y, and Z may be -H, -F, and -F, respectively.

In the general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group also preferably has 30 or less carbon atoms, more preferably 20 or less carbon atoms, and still more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $- CF(CF_3)-$, $-CF(CF_3)CF_2-$, and $-CF(CF_3)CH_2-$. The fluorine-containing alkylene group is preferably a perfluoroalkylene group.

In the general formula (6), $Y^3$ is preferably -COOM, $- SO_3M$, or $-OSO_3M$, wherein M is H, a metal atom, $NR^{7y}{}_4$, imidazolium optionally having a substituent, pyridinium optionally having a substituent, or phosphonium optionally having a substituent, where $R^{7y}$ is H or an organic group, and may be the same or different, and any two thereof may be bonded to each other to form a ring.

The organic group of $R^{7y}$ is preferably an alkyl group. $R^{7y}$ is preferably H or a $C_{1-10}$ organic group, more preferably H or a $C_{1-4}$ organic group, and still more preferably H or a $C_{1-4}$ alkyl group.

Examples of the metal atom include alkali metals (Group 1) and alkaline earth metals (Group 2), and preferred is Na, K, or Li.

M is preferably -H, a metal atom, or $-NR^7{}_4$, more preferably -H, an alkali metal (Group 1), an alkaline earth metal (Group 2), or $-NR^7{}_4$, still more preferably -H, -Na, -K, - Li, or $-NH_4$, further preferably -H, -Na, -K, or $-NH_4$, particularly preferably -H, -Na or $-NH_4$, and most preferably - H, or $-NH_4$.

$Y^3$ is preferably -COOM or $-SO_3M$.

The compound represented by the general formula (6) is preferably at least one selected from the group consisting of compounds represented by the general formulas (6a), (6b), (6c), (6d), and (6e) :

$$CF_2=CF-O-(CF_2)_{n1}-Y^3 \qquad (6a)$$

wherein n1 represents an integer of 1 to 10, and $Y^3$ is as defined above;

$$CF_2=CF-O-(CF_2C(CF_3)F)_{n2}-Y^3 \qquad (6b)$$

wherein n2 represents an integer of 1 to 5, and $Y^3$ is as defined above;

$$CF_2=CF-O-(CFX^1)_{n3}-Y^3 \qquad (6c)$$

wherein $X^1$ represents F or $CF_3$; n3 represents an integer of 1 to 10; and $Y^3$ is as defined above;

$$CF_2=CF-O-(CF_2CFX^1O)_{n4}-(CF_2)_{n6}-Y^3 \qquad (6d)$$

wherein n4 represents an integer of 1 to 10, n6 represents an integer of 1 to 3, and $Y^3$ and $X^1$ are as defined above; and

$$CF_2=CF-O-(CF_2CF_2CFX^1O)_{n5}-CF_2CF_2CF_2-Y^3 \qquad (6e)$$

wherein n5 represents an integer of 0 to 10, and $Y^3$ and $X^1$ are as defined above.

In the formula (6a), n1 is preferably an integer of 5 or less, and more preferably an integer of 2 or less. $Y^3$ is preferably -COOM or $-SO_3M$ from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the compound represented by the formula (6a) include $CF_2$=CF-O-$CF_2$COOM, $CF_2$=CF($OCF_2CF_2$COOM), $CF_2$=CF($OCF_2CF_2CF_2$COOM), $CF_2$=CF-O-$CF_2SO_3$M, $CF_2$=CF($OCF_2CF_2SO_3$M), and $CF_2$=CF($OCF_2CF_2CF_2SO_3$M), wherein M is as defined above.

In the formula (6b), n2 is preferably an integer of 3 or less from the viewpoint of stability of the resulting aqueous dispersion, $Y^3$ is preferably -COOM or -$SO_3$M from the viewpoint of obtaining appropriate water-solubility and stability of the aqueous dispersion, and M is preferably H or $NH_4$ from the viewpoint of being less likely to remain as impurities and improving the heat resistance of the resulting molded body.

In the formula (6c), n3 is preferably an integer of 5 or less from the viewpoint of water-solubility, $Y^3$ is preferably - COOM or -$SO_3$M from the viewpoint of obtaining appropriate water-solubility and stability of the aqueous dispersion, and M is preferably H or $NH_4$ from the viewpoint of improving dispersion stability.

In the formula (6d), $X^1$ is preferably -$CF_3$ from the viewpoint of stability of the aqueous dispersion, n4 is preferably an integer of 5 or less from the viewpoint of water-solubility, $Y^3$ is preferably -COOM or -$SO_3$M from the viewpoint of obtaining appropriate water-solubility and stability of the aqueous dispersion, and M is preferably H or $NH_4$.

Examples of the compound represented by the formula (6d) include $CF_2$=CFO$CF_2$CF($CF_3$)O$CF_2CF_2$COOM, $CF_2$=CFO$CF_2$CF($CF_3$)O$CF_2$COOM, $CF_2$=CFO$CF_2$CF($CF_3$)O$CF_2CF_2CF_2$COOM, $CF_2$=CFO$CF_2$CF($CF_3$)O$CF_2CF_2SO_3$M, $CF_2$=CFO$CF_2$CF($CF_3$)O$CF_2SO_3$M, and $CF_2$=CFO$CF_2$CF($CF_3$)O$CF_2CF_2CF_2SO_3$M, wherein M represents H, $NH_4$, or an alkali metal.

In the general formula (6e), n5 is preferably an integer of 5 or less from the viewpoint of water-solubility, $Y^3$ is preferably -COOM or -$SO_3$M from the viewpoint of obtaining appropriate water-solubility and stability of the aqueous dispersion, and M is preferably H or $NH_4$.

Examples of the compound represented by the general formula (6e) include $CF_2$=CFO$CF_2CF_2CF_2$COOM and $CF_2$=CFO$CF_2CF_2CF_2SO_3$M, wherein M represents H, $NH_4$, or an alkali metal.

In the general formula (7), Rf is preferably a fluorine-containing alkylene group having 1 to 40 carbon atoms. In the general formula (7), at least one of X and Y preferably contains a fluorine atom.

The compound represented by the general formula (7) is preferably at least one selected from the group consisting of: a compound represented by the general formula (7a):

$$CF_2=CF-(CF_2)_{n1}-Y^3 \qquad (7a)$$

wherein n1 represents an integer of 1 to 10; and $Y^3$ is as defined above; and a compound represented by the general formula (7b):

$$CF_2=CF-(CF_2C(CF_3)F)_{n2}-Y^3 \qquad (7b)$$

wherein n2 represents an integer of 1 to 5; and $Y^3$ is as defined above.

$Y^3$ is preferably -$SO_3$M or -COOM, and M is preferably H, a metal atom, $NR^{7y}{}_4$, imidazolium optionally having a substituent, pyridinium optionally having a substituent, or phosphonium optionally having a substituent. $R^{7y}$ represents H or an organic group.

In the formula (7a), n1 is preferably an integer of 5 or less, and more preferably an integer of 2 or less. $Y^3$ is preferably -COOM or -$SO_3$M from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the compound represented by the formula (7a) include $CF_2$=CF$CF_2$COOM and $CF_2$=CF$CF_2SO_3$M, wherein M is as defined above.

In the formula (7b), n2 is preferably an integer of 3 or less from the viewpoint of stability of the resulting aqueous dispersion, $Y^3$ is preferably -COOM or -$SO_3$M from the viewpoint of obtaining appropriate water-solubility and stability of the aqueous dispersion, and M is preferably H or $NH_4$ from the viewpoint of being less likely to remain as impurities and improving the heat resistance of the resulting molded body.

The modifying monomer preferably includes the modifying monomer (A), preferably includes at least one selected from the group consisting of compounds represented by the general formula (5a), the general formula (5c), the general formula (6a), the general formula (6b), the general formula (6c), and the general formula (6d), and more preferably includes the compound represented by the general formula (5a) or the general formula (5c).

When the modifying monomer (A) is used as the modifying monomer, the content of the modifying monomer (A) unit is preferably in the range of 0.00001 to 1.0% by mass based on all polymerized units in the TFE polymer (PTFE). The lower limit thereof is more preferably 0.0001% by mass, more preferably 0.0005% by mass, still more preferably 0.001% by mass, further preferably 0.005% by mass. The upper limit is, in the preferred order, 0.90% by mass, 0.50% by mass, 0.40% by mass, 0.30% by mass, 0.20% by mass, 0.15% by mass, 0.10% by mass, 0.08% by mass, 0.05% by mass, or 0.01% by mass.

In production of the TFE polymer, the polymer (1) can be used within the use range described for the production method of the present disclosure. The concentration of the polymer (1) is not limited as long as it is within the above range. Too large an amount of the polymer (1) added causes generation of needle-shaped particles having a large aspect ratio and gelling of the aqueous dispersion, impairing the stability. The lower limit of the amount of the polymer (1) used is preferably 0.0001% by mass, more preferably 0.001% by mass, still more preferably 0.01% by mass, and particularly preferably 0.02% by mass, based on the aqueous medium. The upper limit of the amount of the polymer (1) used is preferably 10% by mass and more preferably 5% by mass, based on the aqueous medium.

The polymer (1) may be added to the reaction vessel at once before initiation of the polymerization, may be added at once after initiation of the polymerization, may be added in multiple portions during the polymerization, or may be added continuously during the polymerization.

In production of the TFE polymer, the polymerization initiator used may be an organic peroxide such as a persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Further, during the polymerization, a radical scavenger such as hydroquinone or catechol may be added or a decomposer for peroxides such as ammonium sulfite may be added to adjust the radical concentration in the system.

The redox polymerization initiator is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate and potassium persulfate. Examples of the sulfites include sodium sulfite and ammonium sulfite. In order to increase the decomposition rate of the initiator, the combination of the redox initiator may preferably contain a copper salt or an iron salt. An example of the copper salt is copper(II) sulfate and an example of the iron salt is iron(II) sulfate.

Examples of the redox initiator include potassium permanganate/oxalic acid, ammonium persulfate/bisulfite/iron sulfate, manganese triacetate/oxalic acid, ammonium cerium nitrate/oxalic acid, and bromate/bisulfite, and potassium permanganate/oxalic acid is preferred. In the case of using a redox initiator, either an oxidizing agent or a reducing agent may be charged into a polymerization tank in advance, followed by adding the other continuously or intermittently thereto to initiate the polymerization. For example, in the case of using potassium permanganate/oxalic acid, preferably, oxalic acid is charged into a polymerization tank and potassium permanganate is continuously added thereto.

In the production of the TFE polymer, a known chain transfer agent may be used. Examples thereof include saturated hydrocarbons such as methane, ethane, propane, and butane, halogenated hydrocarbons such as chloromethane, dichloromethane, and difluoroethane, alcohols such as methanol, ethanol, and isopropanol, and hydrogen. The chain transfer agent is preferably one in a gas state at a normal temperature and normal pressure.

The amount of the chain transfer agent used is usually 1 to 10,000 ppm by mass, preferably 1 to 5,000 ppm by mass, based on the total amount of TFE fed.

In production of the TFE polymer, a saturated hydrocarbon that is substantially inert to the reaction, that is in a liquid state under the reaction conditions, and that has 12 or more carbon atoms may be used as a dispersion stabilizer for the reaction system in an amount of 2 to 10 parts by mass based on 100 parts by mass of the aqueous medium. Ammonium carbonate, ammonium phosphate, or the like may be added as a buffer to adjust the pH during the reaction.

At completion of the polymerization of TFE, a polymerization dispersion having a solid concentration of 1.0 to 50% by mass and an average primary particle size of 50 to 500 nm can be obtained.

The lower limit of the solid concentration is preferably 5% by mass and more preferably 8% by mass. The upper limit thereof may be, but is not limited to, 40% by mass or 35% by mass.

The lower limit of the average primary particle size is preferably 100 nm and more preferably 150 nm. The upper limit thereof is preferably 400 nm and more preferably 350 nm.

The average primary particle size can be measured by dynamic light scattering. The average primary particle size may be measured by preparing an aqueous dispersion with a solid concentration being adjusted to 1.0% by mass and using dynamic light scattering at 25°C with 70 measurement processes, wherein the solvent (water) has a refractive index of 1.3328 and the solvent (water) has a viscosity of 0.8878 mPa·s. For the dynamic light scattering, ELSZ-1000S (manufactured by Otsuka Electronics Co., Ltd.) may be used, for example.

Also, the average primary particle size can be determined by measuring the transmittance of projected light at 550 nm to the unit length of an aqueous dispersion having a solid concentration adjusted to 0.15% by mass, as well as the number-reference length average primary particle size determined by measuring the Feret diameter with a transmission electron microscope image, to prepare a calibration curve, and determining the particle size from the measured transmittance of projected light of 550 nm of each sample using the calibration curve.

Fine powder can be produced by coagulating the aqueous dispersion of the TFE polymer. The aqueous dispersion of the TFE polymer can be formed into fine powder through coagulation, washing, and drying. The resulting fine powder may be used for various applications. Coagulation of the aqueous dispersion of the TFE polymer is usually performed by diluting the aqueous dispersion obtained by polymerization for polymer latex, for example, with water to

a polymer concentration of 5 to 20% by mass, optionally adjusting the pH to a neutral or alkaline, and stirring the polymer more vigorously than during the reaction in a vessel equipped with a stirrer. The coagulation may be performed under stirring while adding a water-soluble organic compound such as methanol or acetone, an inorganic salt such as potassium nitrate or ammonium carbonate, or an inorganic acid such as hydrochloric acid, sulfuric acid, or nitric acid as a coagulating agent. The coagulation may be continuously performed using a device such as an inline mixer.

From the viewpoint of productivity, the concentration of the non-agglomerated TFE polymer in the discharge water generated by the agglomeration is preferably low, more preferably less than 0.4% by mass, and particularly preferably less than 0.3% by mass.

Pigment-containing or filler-containing TFE polymer fine powder in which pigments and fillers are uniformly mixed can be obtained by adding pigments for coloring and various fillers for improving mechanical properties before or during the coagulation.

The wet powder obtained by coagulating the TFE polymer in the aqueous dispersion is usually dried by means of vacuum, high-frequency waves, hot air, or the like while keeping the wet powder in a state in which the wet powder is less fluidized, preferably in a stationary state. Friction between the powder particles especially at high temperature usually has unfavorable effects on the TFE polymer in the form of fine powder. This is because the particles made of such a TFE polymer are easily formed into fibrils even with a small shearing force and lose its original, stable particulate structure.

The drying is performed at a drying temperature of 10 to 300°C, preferably 100 to 300°C.

The TFE polymer in the aqueous dispersion may be coagulated using an acid with no metal elements, or coagulated by stirring, and the coagulated TFE polymer may be washed with a liquid medium with a reduced content of metal elements. Furthermore, the washed TFE polymer may be dried. By such a production method, it is possible to produce a TFE polymer with a metal content of 10 ppm by mass or less in the TFE polymer. The liquid medium is preferably water, and still more preferably ultrapure water. The metal content of the liquid medium is preferably 2 ppm by mass or less, more preferably 1 ppm by mass or less, and still more preferably 0.5 ppm by mass or less.

The resulting fine powder of the TFE polymer is preferred for molding, and suitable applications thereof include tubes for hydraulic systems or fuel systems of aircraft or automobiles, flexible hoses for chemicals or vapors, and electric wire coating.

The aqueous dispersion of the TFE polymer is preferably mixed with a nonionic surfactant to stabilize and further concentrate the aqueous dispersion, and then further mixed with, depending on its purpose, an organic or inorganic filler to form a composition and used in a variety of applications. The composition, when applied to a metal or ceramic substrate, can provide a coating surface having non-stickiness, a low coefficient of friction, and excellent gloss, smoothness, abrasion resistance, weather resistance, and heat resistance, which is suitable for coating of rolls and cooking utensils and impregnation of glass cloth.

The aqueous dispersion may also be used to prepare an organosol of the TFE polymer. The organosol may contain the TFE polymer and an organic solvent, and examples of the organic solvent include ether-based solvents, ketone-based solvents, alcohol-based solvents, amide-based solvents, ester-based solvents, aliphatic hydrocarbon-based solvents, aromatic hydrocarbon-based solvents, and halogenated hydrocarbon-based solvents. Preferably used are N-methyl-2-pyrrolidone and dimethylacetamide. The organosol may be prepared by the method described in International Publication No. WO 2012/002038, for example.

The aqueous dispersion of the TFE polymer or the fine powder of the TFE polymer is also preferably used as a processing aid. When used as a processing aid, the aqueous dispersion or the fine powder is mixed with a host polymer, for example, to improve the melt strength of the host polymer in melt fabrication and to improve the mechanical strength, electric properties, incombustibility, anti-drop performance during combustion, and slidability of the resulting polymer.

The aqueous dispersion of the TFE polymer or the fine powder of the TFE polymer is also preferably used as a binder for batteries or used for dustproof applications.

The aqueous dispersion of the TFE polymer or the fine powder of the TFE polymer is also preferably combined with a resin other than the TFE polymer to form a processing aid before use. The aqueous dispersion or fine powder is suitable as a raw material of the PTFEs described in, for example, Japanese Patent Laid-Open No. 11-49912, U.S. Patent No. 5,804,654, Japanese Patent Laid-Open No. 11-29679, and Japanese Patent Laid-Open No. 2003-2980. Processing aids containing the aqueous dispersion or the fine powder are not inferior in any way to the processing aids described in the publications.

The aqueous dispersion of the TFE polymer is also preferably mixed with an aqueous dispersion of a melt-fabricable fluororesin so that the components coagulate to form co-coagulated powder. The co-coagulated powder is suitable as a processing aid.

Examples of the melt-fabricable fluororesin include FEP, PFA, TFE/perfluoroallyl ether copolymers, ETFE, and ethylene/TFE/HFP copolymers (EFEP), of which PFA or FEP is preferred.

The aqueous dispersion also preferably contains a melt-fabricable fluororesin. Examples of the melt-fabricable fluororesin include FEP, PFA, TFE/perfluoroallyl ether copolymers, ETFE, and EFEP. The aqueous dispersion containing

the melt-fabricable fluororesin may be used as a coating material. The melt-fabricable fluororesin enables sufficient fusion of the TFE polymer particles, improving the film-formability and providing the resulting film with gloss.

The fluorine-free resin to which the co-coagulated powder is added may be in the form of powder, pellets, or emulsion. In order to achieve sufficient mixing of the resins, the addition is preferably performed by a known method such as extrusion kneading or roll kneading under a shearing force.

The aqueous dispersion of the TFE polymer is also preferably used as a dust suppression treatment agent. The dust suppression treatment agent may be used in a method for suppressing dust from a dust-generating substance by mixing the dust suppression treatment agent with the dust-generating substance and subjecting the mixture to a compression-shear action at a temperature of 20 to 200°C to fibrillate the TFE polymer, for example, the methods described in Japanese Patent No. 2,827,152 and Japanese Patent No. 2,538,783.

The aqueous dispersion of the TFE polymer can suitably be used for the dust suppression treatment agent composition described in International Publication No. WO 2007/004250, and can also suitably be used for the method of dust suppression treatment described in International Publication No. WO 2007/000812.

The dust control treatment agent is suitably used for dust suppression treatment in the fields of building-products, soil stabilizers, solidifying materials, fertilizers, landfill of incineration ash and harmful substance, and explosion proof equipment, cosmetics, and sands for pet excretion represented by cat sand.

The aqueous dispersion of the TFE polymer is also preferably used as a raw material for producing TFE polymer fibers by a dispersion spinning method. The dispersion spinning method is a method in which the aqueous dispersion of the TFE polymer and an aqueous dispersion of a matrix polymer are mixed and the mixture is extruded to form an intermediate fiber structure, and then the intermediate fiber structure is fired to decompose the matrix polymer and sinter the TFE polymer particles, thereby providing TFE polymer fibers.

The high-molecular-weight PTFE powder obtained by polymerization has stretchability and non melt processability, and is also useful as a raw material for a stretched body (porous body).

When the stretched body is in the form of a film (PTFE stretched film or PTFE porous film), the stretched body can be formed by stretching by a known PTFE stretching method. Stretching allows easy formation of fibrils of PTFE, resulting in a high-molecular-weight PTFE porous body (film) including nodes and fibers.

Preferably, roll-stretching a sheet-shaped or rod-shaped paste extrudate in an extruding direction can provide a uniaxially stretched film.

Further stretching in a transverse direction using a tenter, for example, can provide a biaxially stretched film. Prebaking treatment is also preferably performed before stretching.

This PTFE stretched body is a porous body having a high porosity, and can suitably be used as a filter material for a variety of microfiltration filters such as air filters and chemical filters and a support member for polymer electrolyte films.

The PTFE stretched body is also useful as a material of products used in the fields of textiles, of medical treatment, of electrochemistry, of sealants, of air filters, of ventilation/internal pressure adjustment, of liquid filters, and of consumer goods.

The following provides examples of specific applications.

- Electrochemical field

Examples of the applications in this field include prepregs for dielectric materials, EMI-shielding materials, and heat conductive materials. More specifically, examples thereof include printed circuit boards, electromagnetic interference shielding materials, insulating heat conductive materials, and insulating materials.

- Sealant field

Examples of the applications in this field include gaskets, packings, pump diaphragms, pump tubes, and sealants for aircraft.

- Air filter field

Examples of the applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), adsorbent-attached filters (for HDD embedment), adsorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

- Ventilation/internal pressure adjustment field

Examples of the applications in this field include materials for freeze drying such as vessels for freeze drying, ventilation materials for automobiles for electronic circuits and lamps, applications relating to vessels such as vessel caps, protective ventilation for electronic devices, including small devices such as tablet terminals and mobile phone terminals, and ventilation for medical treatment.

- Liquid filter field

Examples of the applications in this field include liquid filters for semiconductors (for production of semiconductors), hydrophilic PTFE filters (for production of semiconductors), filters for chemicals (for chemical treatment), filters for pure water production lines (for production of pure water), and back-washing liquid filters (for treatment of industrial discharge water).

- Consumer goods field

Examples of the applications in this field include clothes, cable guides (movable wires for motorcycles), clothes for motor cyclists, cast liners (medical supporters), filters for cleaners, bagpipes (musical instrument), cables (signal cables for guitars, etc.), and strings (for string instrument).

- Textile field

Examples of the applications in this field include PTFE fibers (fiber materials), machine threads (textiles), weaving yarns (textiles), and ropes.

- Medical treatment field

Examples of the applications in this field include implants (stretched articles), artificial blood vessels, catheters, general surgical operations (tissue reinforcing materials), products for head and neck (dura mater alternatives), oral health (tissue regenerative medicine), and orthopedics (bandages).

By the production method of the present disclosure, a low-molecular-weight PTFE may also be produced.

The low-molecular-weight PTFE may be produced by polymerization, or may be produced by reducing the molecular weight of a high-molecular-weight PTFE obtained by polymerization by a known method (e.g., thermolysis, radiolysis) .

A low-molecular-weight PTFE having a molecular weight of 600,000 or less (also referred to as PTFE micropowder) has excellent chemical stability and a very low surface energy, and is less likely to generate fibrils, and is therefore suitably used as an additive for improving the lubricity and the texture of the coating surface in production of plastics, inks, cosmetics, coating materials, greases, parts of office automation equipment, and toners (e.g., see Japanese Patent Laid-Open No. 10-147617) .

A low-molecular-weight PTFE may also be obtained by dispersing a polymerization initiator and the polymer (1) in an aqueous medium in the presence of a chain transfer agent, and then polymerizing TFE alone or TFE and a monomer copolymerizable with TFE. In this case, the chain transfer agent is preferably at least one selected from the group consisting of alkanes having 2 to 4 carbon atoms. Specifically, the chain transfer agent is more preferably methane, ethane, propane, butane, or isobutane, and still more preferably ethane or propane. In this case, the amount of the chain transfer agent is preferably 10 ppm by mass or more or more than 10 ppm by mass based on the aqueous medium.

In the case of using the low-molecular-weight PTFE obtained by the polymerization in the form of powder, the powder particles may be obtained by coagulating the aqueous dispersion.

In the present disclosure the high-molecular-weight PTFE is preferably non melt-processible and fibrillatable. On the other hand, the low-molecular-weight PTFE is preferably melt-fabricable and non-fibrillatable.

The term "non melt-processible" means a feature of polymer that the melt flow rate thereof cannot be measured at a temperature higher than the crystal melting point in conformity with ASTM D 1238 and D 2116.

The presence or absence of the fibrillation ability can be determined by "paste extrusion", a representative method of molding a "high-molecular-weight PTFE powder" which is a powder of a TFE polymer. Usually, the high-molecular-weight PTFE can be paste-extruded when it is fibrillatable. When a non-fired molded product obtained by paste extrusion shows substantially no strength or elongation (for example, when it shows an elongation of 0% and is broken when stretched), it can be regarded as non-fibrillatable.

The high-molecular-weight PTFE preferably has a standard specific gravity (SSG) of 2.130 to 2.280. The standard specific gravity is determined by the water replacement method in conformity with ASTM D 792 using a sample

molded in conformity with ASTM D4895-89. In the present disclosure, the "high-molecular-weight" means that the standard specific gravity is within the above range.

The low-molecular-weight PTFE has a melt viscosity at 380°C of 1 $\times$ $10^2$ to 7 $\times$ $10^5$ Pa·s. In the present disclosure, the "low-molecular-weight" means that the melt viscosity is within the above range. The melt viscosity is a value measured in conformity with ASTM D 1238, using a flow tester (manufactured by Shimadzu Corporation) and a 2φ-8 L die, by keeping 2 g of the sample that has been heated in advance at 380°C for 5 minutes, at the above temperature under a load of 0.7 MPa.

The high-molecular-weight PTFE has a melt viscosity significantly higher than that of the low-molecular-weight PTFE, and the melt viscosity thereof is difficult to measure accurately. The melt viscosity of the low-molecular-weight PTFE is measurable, but the low-molecular-weight PTFE has difficulty in providing a molded article to be used in measurement of the standard specific gravity. Thus, it is difficult to measure its accurate standard specific gravity. Accordingly, in the present disclosure, the standard specific gravity is used as an index of the molecular weight of the high-molecular-weight PTFE, while the melt viscosity is used as an index of the molecular weight of the low-molecular-weight PTFE. It should be noted that there is no known measuring method for directly specifying the molecular weight of either the high-molecular-weight PTFE or the low-molecular-weight PTFE.

The high-molecular-weight PTFE preferably has a peak temperature of 333 to 347°C, more preferably 335 to 345°C. The low-molecular-weight PTFE preferably has a peak temperature of 322 to 333°C, more preferably 324 to 332°C. The peak temperature can be specified as the temperature corresponding to the maximum value appearing in the differential thermal (DTA) curve obtained by increasing the temperature of PTFE without a history of being heated to a temperature of 300°C or higher at 10°C/min using TG/DTA (simultaneous thermogravimetric analyzer).

The peak temperature of the PTFE may be 322 to 347°C.

When the PTFE is a high-molecular-weight PTFE, the upper limit of the peak temperature of the PTFE may be 347°C or lower, 346°C or lower, 345°C or lower, 344°C or lower, 343°C or lower, 342°C or lower, 341°C or lower, or 340°C or lower.

When the PTFE is a high-molecular-weight PTFE, the lower limit of the peak temperature of the PTFE may be 333°C or higher, or 335°C or higher.

When the PTFE is a low-molecular-weight PTFE, the upper limit of the peak temperature of the PTFE may be 333°C or lower, or 332°C or lower.

When the PTFE is a low-molecular-weight PTFE, the lower limit of the peak temperature of the PTFE may be 322°C or higher, or 324°C or higher.

The average primary particle size of primary particles of the low-molecular-weight PTFE is preferably 10 to 200 nm, and it is more preferably 20 nm or more, more preferably 150 nm or less, still more preferably 140 nm or less, and particularly preferably 90 nm or less. A relatively small average primary particle size of primary particles can be obtained by, for example, adding a modifying monomer to the polymerization system at the initial stage of TFE polymerization.

The average primary particle size of primary particles of the low-molecular-weight PTFE can be measured by dynamic light scattering. It may be measured by first preparing a low-molecular-weight PTFE aqueous dispersion having a polymer solid concentration adjusted to about 1.0% by mass, and then using dynamic light scattering at a measurement temperature of 25°C with 70 times of measurement processes, wherein the solvent (water) has a refractive index of 1.3328 and the solvent (water) has a viscosity of 0.8878 mPa·s. In the dynamic light scattering, ELSZ-1000S (manufactured by Otsuka Electronics Co., Ltd.) may be used, for example.

Preferably, the high-molecular-weight PTFE has at least one endothermic peak in a range of 333 to 347°C on a heat-of-fusion curve with a temperature-increasing rate of 10°C/min using a differential scanning calorimeter (DSC) for a PTFE which has never been heated up to 300°C or higher, and has an enthalpy of fusion of 52 mJ/mg or higher at 290 to 350°C calculated from the heat-of-fusion curve. The PTFE has an enthalpy of fusion of more preferably 55 mJ/mg or higher, and still more preferably 58 mJ/mg or higher.

The PTFE fine powder obtained by the above may also be used to produce unsintered tape (green tape).

(II) Melt-fabricable fluororesins

In the first production method of the present disclosure, by polymerizing a perfluoromonomer such as TFE, a melt-fabricable fluororesin can be produced as the fluoropolymer, such as a TFE/HFP copolymer (FEP), a TFE/perfluoro(alkyl vinyl ether) copolymer (PFA, MFA, etc.), a TFE/perfluoro(alkyl allyl ether) copolymer, and an electrolyte polymer precursor.

(1) In the production method of the present disclosure, the polymerization for a FEP is preferably performed at a polymerization temperature of 10 to 150°C and a polymerization pressure of 0.3 to 6.0 MPaG.

The FEP preferably has a monomer composition ratio (% by mass) of TFE:HFP = (60 to 95):(5 to 40), more

preferably (85 to 92): (8 to 15).

In addition to TFE and HFP, another monomer copolymerizable with these monomers may be polymerized to obtain a copolymer of TFE, HFP, and the other monomer as the FEP. Examples of the other monomer include the above-mentioned fluorine-containing monomers (except for TFE and HFP) and fluorine-free monomers. As the other monomer, one type or multiple types can be used. The other monomer is preferably a perfluoro(alkyl vinyl ether). The content of the other monomer unit in the FEP may be 0.1 to 2% by mass based on all monomer units.

In the polymerization for the FEP, the polymer (1) can be used within the use range of the production method of the present disclosure, and is usually added in an amount of 0.0001 to 10% by mass based on 100% by mass of the aqueous medium.

In the polymerization for the FEP, the chain transfer agent used is preferably cyclohexane, methanol, ethanol, propanol, ethane, propane, butane, pentane, hexane, carbon tetrachloride, chloroform, methylene chloride, methyl chloride, or the like, and the pH buffer used is preferably ammonium carbonate, disodium hydrogen phosphate, or the like.

In the production method of the present disclosure, the aqueous dispersion of FEP obtained may optionally be subjected to post-treatment such as concentration, and then the concentrate may be dried and powdered, and the powder may be melt-extruded into pellets. The aqueous medium in the FEP aqueous dispersion may optionally contain an additive such as a nonionic surfactant and may contain a water-soluble organic solvent such as a water-soluble alcohol or may be free from a water-soluble organic solvent.

The melt extrusion may be performed under any appropriately set extrusion conditions usually capable of providing pellets.

In the production method of the present disclosure, the obtained FEP may contain an end group such as $-CF_3$ or $-CF_2H$ on at least one of the polymer main chain and a polymer side chain, but it is preferable that the content of thermally unstable groups such as -COOH, $-CH_2OH$, -COF,-CF=CF-, $-CONH_2$, or $-COOCH_3$ (hereinafter, referred to as an "unstable end group") is low or absent.

The unstable end group is chemically unstable, and thus not only reduces the heat resistance of the resin but also causes increase in the attenuation of the resulting electric wire.

The production method of the present disclosure is preferably performed in such a way that a polymer in which the total number of unstable end groups and $-CF_2H$ end groups at the completion of the polymerization is 50 or less per $1 \times 10^6$ carbon atoms is produced. The number of such groups is more preferably less than 20, still more preferably 5 or less, per $1 \times 10^6$ carbon atoms. There may also be neither unstable end groups nor $-CF_2H$ end groups, i.e. all end groups may be $-CF_3$ end groups.

The unstable end groups and the $-CF_2H$ end groups may be fluorinated and converted into the $-CF_3$ end groups and thereby stabilized. Examples of the fluorination method include, but not limited to, methods of exposing the polymer to a fluorine radical source that generates fluorine radicals under fluorination conditions. Examples of the fluorine radical source include fluorine gas, $CoF_3$, $AgF_2$, $UF_6$, $OF_2$, $N_2F_2$, $CF_3OF$, and halogen fluorides such as $IF_5$ and $ClF_3$. Of these, preferred is a method of bringing fluorine gas and the FEP obtained by the production method of the present disclosure into direct contact with each other. In order to control the reaction, the contact is preferably performed using a diluted fluorine gas having a fluorine gas concentration of 10 to 50% by mass. The diluted fluorine gas is obtainable by diluting fluorine gas with an inert gas such as nitrogen gas or argon gas. The fluorine gas treatment may be performed at a temperature of 100 to 250°C. The treatment temperature is not limited to this range and may be appropriately set in accordance with the situation. The fluorine gas treatment is preferably performed by feeding a diluted fluorine gas into the reactor continuously or intermittently. This fluorination may be performed on dry powder after the polymerization or on melt-extruded pellets.

The FEP obtained by the production method of the present disclosure has good moldability and is less likely to cause molding defects, as well as has properties such as heat resistance, chemical resistance, solvent resistance, insulation, and electric properties.

The FEP powder may be produced by a method of drying the FEP obtained by the above-mentioned production method of the present disclosure to powder the FEP.

The powder may be fluorinated. The fluorinated powder may be produced by a method of feeding a fluorine gas to the powder obtained by the above-described method for producing a powder to fluorinate the powder to obtain a fluorinated powder.

The FEP pellets may be produced by a method of pelletizing FEP obtained by the above-mentioned production method of the present disclosure.

The pellets may be fluorinated. The fluorinated pellets may be produced by a method of feeding a fluorine gas to the pellets obtained by the above-described method for producing pellets to fluorinate the pellets to obtain fluorinated pellets.

Thus, this FEP may be used in production of a variety of molded articles such as coating materials for electric wires, foamed electric wires, cables, and wires, tubes, films, sheets, and filaments.

(2) In the production method of the present disclosure, the polymerization for a TFE/perfluoro(alkyl vinyl ether)

copolymer such as PFA or MFA and a TFE/perfluoro(alkyl allyl ether) copolymer is usually preferably carried out at a polymerization temperature of 10 to 100°C and a polymerization pressure of 0.3 to 6.0 MPaG.

The TFE/perfluoro(alkyl vinyl ether) copolymer preferably has a monomer composition ratio (mol%) of TFE:perfluoro(alkyl vinyl ether) = (90 to 99.7):(0.3 to 10), more preferably (97 to 99):(1 to 3). The perfluoro(alkyl vinyl ether) used is preferably one represented by the formula: $CF_2$=$CFORf^4$, wherein $Rf^4$ is a perfluoroalkyl group having 1 to 6 carbon atoms.

In addition to TFE and the perfluoro(alkyl vinyl ether), another monomer copolymerizable with these monomers may be polymerized to obtain a copolymer of TFE, the perfluoro(alkyl vinyl ether), and the other monomer as the TFE/perfluoro(alkyl vinyl ether) copolymer. Examples of the other monomer include the above-mentioned fluorine-containing monomers (except for TFE and the perfluoro(alkyl vinyl ether)) and fluorine-free monomers. As the other monomer, one type or multiple types can be used. The content of the other monomer unit in the TFE/perfluoro(alkyl vinyl ether) copolymer may be 0.1 to 2% by mass based on all monomer units.

The TFE/perfluoro(alkyl allyl ether) copolymer preferably has a monomer composition ratio (mol%) of TFE:perfluoro(alkyl allyl ether) = (90 to 99.7):(0.3 to 10), more preferably (97 to 99):(1 to 3). The perfluoro(alkyl allyl ether) used is preferably one represented by the formula: $CF_2$=$CFCF_2ORf^4$, wherein $Rf^4$ is a perfluoroalkyl group having 1 to 6 carbon atoms.

In addition to TFE and the perfluoro(alkyl allyl ether), another monomer copolymerizable with these monomers may be polymerized to obtain a copolymer of TFE, the perfluoro(alkyl allyl ether), and the other monomer as the TFE/perfluoro(alkyl allyl ether) copolymer. Examples of the other monomer include the above-mentioned fluorine-containing monomers (except for TFE and the perfluoro(alkyl allyl ether)) and fluorine-free monomers. As the other monomer, one type or multiple types can be used. The content of the other monomer unit in the TFE/perfluoro(alkyl allyl ether) copolymer may be 0.1 to 2% by mass based on all monomer units.

In the polymerization for the TFE/perfluoro(alkyl vinyl ether) copolymer and the TFE/perfluoro(alkyl allyl ether) copolymer, the polymer (1) may be used within the use range of the production method of the present disclosure, and is usually preferably added in an amount of 0.0001 to 10% by mass based on 100% by mass of the aqueous medium.

In the polymerization for the TFE/perfluoro(alkyl vinyl ether) copolymer and the TFE/perfluoro(alkyl allyl ether) copolymer, the chain transfer agent used is preferably cyclohexane, methanol, ethanol, propanol, propane, butane, pentane, hexane, carbon tetrachloride, chloroform, methylene chloride, methyl chloride, methane, ethane, or the like, and the pH buffer used is preferably ammonium carbonate, disodium hydrogen phosphate, or the like.

The aqueous dispersion of the TFE/perfluoro(alkyl vinyl ether) copolymer such as PFA or MFA and the TFE/perfluoro(alkyl allyl ether) copolymer obtained by the production method of the present disclosure may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant and may contain a water-soluble organic solvent such as a water-soluble alcohol or may be free from a water-soluble organic solvent.

The melt extrusion may be performed under any appropriately set extrusion conditions usually capable of providing pellets.

In order to improve the heat resistance of the copolymer and to reinforce a chemical permeation suppression effect of a molded article, the copolymer is preferably subjected to a fluorine gas treatment.

The fluorine gas treatment is performed by bringing fluorine gas into contact with the copolymer. However, since the reaction with fluorine is extremely exothermic, it is preferable to dilute fluorine with an inert gas such as nitrogen. The amount of fluorine in the fluorine gas/inert gas mixture is 1 to 100% by mass, preferably 10 to 25% by mass. The treatment temperature is 150 to 250°C, preferably 200 to 250°C and the fluorine gas treatment duration is 3 to 16 hours, preferably 4 to 12 hours. The fluorine gas treatment is performed at a gas pressure in the range of 1 to 10 atm, preferably atmospheric pressure. In the case of using a reactor at atmospheric pressure, the fluorine gas/inert gas mixture may be continuously passed through the reactor. This results in conversion of unstable ends of the copolymer into - $CF_3$ ends, thermally stabilizing the copolymer.

The copolymer and the composition thereof may be molded by compression molding, transfer molding, extrusion molding, injection molding, blow molding, or the like as in the case of conventional PFA.

Such a molding technique can provide a desired molded article. Examples of the molded article include sheets, films, packings, round bars, square bars, pipes, tubes, round tanks, square tanks, tanks, wafer carriers, wafer boxes, beakers, filter housings, flowmeters, pumps, valves, cocks, connectors, nuts, electric wires, and heat-resistant electric wires.

Preferred among these are tubes, pipes, tanks, connectors, and the like to be used for a variety of chemical reaction devices, semiconductor manufacturing devices, and acidic or alkaline chemical feeding devices each requiring chemical impermeability.

The aqueous dispersion of the TFE/perfluoro(alkyl vinyl ether) copolymer such as PFA or MFA and the

TFE/perfluoro(alkyl allyl ether) copolymer may also be appropriately mixed with a nonionic surfactant, and

optionally polyethersulfone, polyamide-imide, and/or polyimide, and metal powder are dissolved or dispersed in an organic solvent. Thereby, a primer composition can be obtained. This primer composition may be used for a method of applying a fluororesin to a metal surface. The method includes applying the primer composition to a metal surface, applying a melt-fabricable fluororesin composition to the resulting primer layer, and firing the melt-fabricable fluororesin composition layer together with the primer layer.

(4) The production method of the present disclosure may be used to produce an electrolyte polymer precursor. In the production method of the present disclosure, the polymerization for the electrolyte polymer precursor is preferably performed at a polymerization temperature of 10 to 100°C and a polymerization pressure of 0.1 to 2.0 MPaG. The electrolyte polymer precursor contains a monomer containing a functional group represented by $-SO_2X^{151}$, $-COZ^{151}$, or $-POZ^{152}Z^{153}$ ($X^{151}$, $Z^{151}$, $Z^{152}$, and $Z^{153}$ are as described later), and can be converted into an ion-exchangeable polymer through a hydrolysis treatment.

An example of the monomer to be used for the electrolyte polymer precursor is a fluorine-containing monomer represented by the general formula (150):

$$CF_2=CF-O-(CF_2CFY^{151}-O)_n-(CFY^{152})_m-A^{151}$$

wherein $Y^{151}$ represents a fluorine atom, a chlorine atom, a - $SO_2F$ group, or a perfluoroalkyl group; the perfluoroalkyl group optionally containing ether oxygen and a $-SO_2F$ group; n represents an integer of 0 to 3; n $Y^{151}$s are the same as or different from each other; $Y^{152}$ represents a fluorine atom, a chlorine atom, or a $-SO_2F$ group; m represents an integer of 1 to 5; m $Y^{152}$s are the same as or different from each other; $A^{151}$ represents $-SO_2X^{151}$, $-COZ^{151}$, or $-POZ^{152}Z^{153}$; $X^{151}$ represents F, Cl, Br, I, $-OR^{151}$, or $-NR^{152}R^{153}$; $Z^{151}$, $Z^{152}$, and $Z^{153}$ are the same as or different from each other, and each represent $-NR^{154}R^{155}$ or - $OR^{156}$; $R^{151}$, $R^{152}$, $R^{153}$, $R^{154}$, $R^{155}$, and $R^{156}$ are the same as or different from each other, and each represent H, ammonium, an alkali metal, or an alkyl group, aryl group, or sulfonyl-containing group optionally containing a fluorine atom. Examples of the monomer to be used for the electrolyte polymer precursor also include the compound containing two fluorosulfonyl groups described in International Publication No. WO 2007/013532 and the perfluoromonomer having a $-SO_2F$ group and a dioxolane ring described in International Publication No. WO 2014/175123. The electrolyte polymer precursor preferably has a monomer composition ratio (mol%) of TFE:vinyl ether = (50 to 99):(50 to 1), more preferably TFE:vinyl ether = (50 to 93): (50 to 7).

The electrolyte polymer precursor may be modified with a third monomer within a range of 0 to 20% by mass of all monomers. Examples of the third monomer include CTFE, vinylidene fluoride, perfluoroalkyl vinyl ether, and perfluorobutenyl vinyl ether; cyclic monomers such as perfluoro-2,2-dimethyl-1,3-dioxolane and perfluoro-2-methylene-4-methyl-1,3-dioxole; multifunctional monomers such as divinylbenzene.

The electrolyte polymer precursor thereby obtained may be molded into a film, followed by hydrolysis using an alkali solution and a treatment using a mineral acid, and thereby used as a polymer electrolyte film for fuel cells, electrolysis devices, redox flow batteries, and the like.

The electrolyte polymer precursor may be hydrolyzed using an alkali solution while the dispersed state thereof is maintained, thereby providing an electrolyte polymer dispersion.

This dispersion may be then heated up to 120°C or higher in a pressurized vessel and thereby dissolved in, for example, a solvent mixture of water and an alcohol, i.e., converted into a solution state.

The solution thereby obtained may be used as a binder for electrodes. Also, the solution may be combined with a variety of additives and cast to form a film, and the film may be used for antifouling films, organic actuators, or the like.

The powder of the melt-fabricable fluororesin is suitably used as a powdery coating material. When applied to a substrate, the powdery coating material made of the melt-fabricable fluororesin powder can provide a film having a smooth surface. The melt-fabricable fluororesin powder having an average particle size of 1 μm or greater and smaller than 100 μm is particularly suitable as a powdery coating material used for electrostatic coating. The melt-fabricable fluororesin powder having an average particle size of 100 μm or greater and 1,000 μm or smaller is particularly suitable as a powdery coating material used for rotational coating or rotational molding.

The melt-fabricable fluororesin powder can be produced by a method of drying the melt-fabricable fluororesin obtained by the above-mentioned production method of the present disclosure to powder the melt-fabricable fluororesin. The method for producing the melt-fabricable fluororesin powder is also one aspect of the present disclosure.

(III) Perfluoroelastomer

In the first production method of the present disclosure, by polymerizing a perfluoromonomer such as TFE, a perfluoroelastomer can be produced as the fluoropolymer.

The perfluoromonomer used in the polymerization for the perfluoroelastomer is preferably at least one selected from the group consisting of:

tetrafluoroethylene (TFE);
hexafluoropropylene (HFP);
a fluoromonomer represented by the general formula: $CF_2$=CF-ORf$^{13}$,
wherein Rf$^{13}$ represents a perfluoroalkyl group having 1 to 8 carbon atoms;
a fluoromonomer represented by the general formula:

$$CF_2=CFOCF_2ORf^{14},$$

wherein Rf$^{14}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms; and
a fluoromonomer represented by the general formula:

$$CF_2=CFO(CF_2CF(Y^{15})O)_m(CF_2)_nF,$$

wherein Y$^{15}$ represents a fluorine atom or a trifluoromethyl group, m is an integer of 1 to 4, and n is an integer of 1 to 4 .

Also, in the polymerization of the perfluoromonomer, a monomer that provides a crosslinking site may be polymerized together with the perfluoromonomer.

The polymerization of the perfluoromonomer may be carried out in the presence of a polymerization initiator. The polymerization initiator is as mentioned above. The amount of the polymerization initiator added is preferably 0.0001 to 10% by mass, and more preferably 0.01 to 5% by mass, based on 100% by mass of the perfluoromonomer. When the amount of the polymerization initiator added in the polymerization (the amount present) is within the above range, the polymerization reaction of the perfluoromonomer progresses smoothly and the perfluoroelastomer can be produced efficiently. When the amount of the polymerization initiator added is too small, a sufficient polymerization rate cannot be obtained or a sufficient yield cannot be obtained.

The polymerization of the perfluoromonomer may be carried out in the presence of a pH adjuster. By carrying out the polymerization in the presence of a pH adjuster, a sufficient number of perfluoroelastomer particles can be generated at a sufficient polymerization rate while further suppressing the adhesion of the perfluoroelastomer to the polymerization tank. The pH adjuster may be added before the initiation of polymerization or may be added after the initiation of polymerization.

Examples of the pH adjuster include aqueous ammonia, sodium hydroxide, potassium hydroxide, sodium carbonate, potassium carbonate, ammonium carbonate, sodium hydrogen carbonate, potassium hydrogen carbonate, ammonium hydrogen carbonate, sodium phosphate, potassium phosphate, sodium hydrogen phosphate, sodium dihydrogen phosphate, potassium hydrogen phosphate, potassium dihydrogen phosphate, sodium citrate, potassium citrate, ammonium citrate, sodium gluconate, potassium gluconate, and ammonium gluconate.

The perfluoroelastomer is preferably at least one selected from the group consisting of perfluoroelastomers containing TFE, such as a copolymer containing TFE and a fluoromonomer represented by the general formula (160), (130), or (140) and a copolymer containing TFE, a fluoromonomer represented by the general formula (160), (130), or (140), and a monomer that provides a crosslinking site.

In the case of the TFE/PMVE copolymer, the composition ratio thereof is preferably 45 to 90/10 to 55 (mol%), more preferably 55 to 80/20 to 45, still more preferably 55 to 70/30 to 45, and most preferably 56 to 69.5/30.5 to 44.

In the case of the copolymer of TFE, PMVE, and a monomer that provides a crosslinking site, the composition ratio thereof is preferably 45 to 89.9/10 to 54.9/0.01 to 4 (mol%), more preferably 55 to 77.9/20 to 49.9/0.1 to 3.5, still more preferably 55 to 69.8/30 to 44.8/0.2 to 3, and most preferably 55.3 to 69.5/30.3 to 44.5/0.2 to 2.8.

In the case of the copolymer of TFE and a fluoromonomer represented by the general formula (160), (130), or (140) having 4 to 12 carbon atoms, the composition ratio thereof is preferably 50 to 90/10 to 50 (mol%), more preferably 60 to 88/12 to 40, still more preferably 65 to 85/15 to 35, and most preferably 66 to 84/16 to 34.

In the case of the copolymer of TFE, a fluoromonomer represented by the general formula (160), (130), or (140) having 4 to 12 carbon atoms, and a monomer that provides a crosslinking site, the composition ratio thereof is preferably 50 to 89.9/10 to 49.9/0.01 to 4 (mol%), more preferably 60 to 87.9/12 to 39.9/0.1 to 3.5, still more preferably 65 to 84.8/15 to 34.8/0.2 to 3, and most preferably 66 to 84.3/15.5 to 33.8/0.2 to 2.8.

When these copolymers have compositional features outside these ranges, the properties as a rubber elastic body are lost, and the properties tend to be close to those of a resin.

The perfluoroelastomer is preferably at least one selected from the group consisting of copolymers of TFE, a fluoromonomer represented by the general formula (140), and a fluoromonomer that provides a crosslinking site, copolymers of TFE and a perfluorovinyl ether represented by the general formula (140), copolymers of TFE and a fluoromonomer represented by the general formula (160), and copolymers of TFE, a fluoromonomer represented by the general

formula (160), and a monomer that provides a crosslinking site.

Examples of the perfluoroelastomer further include the perfluoroelastomers described in documents such as International Publication No. WO 97/24381, Japanese Patent Publication No. 61-57324, Japanese Patent Publication No. 04-81608, and Japanese Patent Publication No. 05-13961.

From the viewpoint of achieving an excellent compression set characteristics at high temperature, the perfluoroelastomer preferably has a glass transition temperature of -70°C or higher, more preferably -60°C or higher, and still more preferably -50°C or higher. From the viewpoint of achieving good cold resistance, the glass transition temperature is preferably 5°C or lower, more preferably 0°C or lower, and still more preferably -3°C or lower.

The glass transition temperature can be determined as follows. Specifically, using a differential scanning calorimeter (DSC822e, manufactured by Mettler-Toledo International Inc.), 10 mg of a sample is heated at a rate of 10°C/min to give a DSC curve, and the point at which the maximum value in the differential curve of the DSC curve at the secondary transition is read as the glass transition temperature.

The perfluoroelastomer preferably has a Mooney viscosity ML (1 + 20) at 170°C of 30 or more, more preferably 40 or more, and still more preferably 50 or more, from the viewpoint of good heat resistance. Also, it preferably has a Mooney viscosity of 150 or less, more preferably 120 or less, and still more preferably 110 or less, from the viewpoint of good processability.

The perfluoroelastomer preferably has a Mooney viscosity ML (1 + 20) at 140°C of 30 or more, more preferably 40 or more, and still more preferably 50 or more, from the viewpoint of good heat resistance. Also, it preferably has a Mooney viscosity of 180 or less, more preferably 150 or less, and still more preferably 110 or less, from the viewpoint of good processability.

The perfluoroelastomer preferably has a Mooney viscosity ML (1 + 10) at 100°C of 10 or more, more preferably 20 or more, and still more preferably 30 or more, from the viewpoint of good heat resistance. Also, it preferably has a Mooney viscosity of 120 or less, more preferably 100 or less, and still more preferably 80 or less, from the viewpoint of good processability.

The Mooney viscosity can be measured in accordance with JIS K6300 at 170°C, 140°C, or 100°C, using a Mooney viscometer MV2000E model manufactured by ALPHA TECHNOLOGIES.

According to the first production method of the present disclosure, an aqueous dispersion of the perfluoroelastomer can be obtained as the fluoropolymer. The resulting perfluoroelastomer aqueous dispersion preferably has a solid concentration (perfluoroelastomer content) of 10 to 50% by mass, more preferably 15 to 40% by mass, and still more preferably 20 to 30% by mass, at the completion of polymerization.

The solid concentration (perfluoroelastomer content) of the perfluoroelastomer aqueous dispersion can be specified by drying 1 g of the aqueous dispersion at a condition of 150°C for 60 minutes, measuring the mass of the non-volatile matter, and calculating the proportion of the mass of the non-volatile matter to the mass of the aqueous dispersion.

A treatment such as coagulation or heating may be performed on the aqueous dispersion of the perfluoroelastomer.

The coagulation can be carried out by adding a coagulating agent to the aqueous dispersion. Examples of the coagulating agent include acids such as hydrochloric acid, nitric acid, hydrofluoric acid, sulfuric acid, and trifluoroacetic acid, and it is preferably at least one selected from the group consisting of nitric acid and hydrochloric acid.

The coagulated perfluoroelastomer may be washed with water to remove a small amount of impurities such as a buffer and a salt present in the perfluoroelastomer, and then the washed perfluoroelastomer may be dried. The drying temperature is preferably 40 to 200°C, more preferably 50 to 180°C, and still more preferably 70 to 150°C.

Although the form of the perfluoroelastomer obtained after the coagulation is not limited, it may be gum, crumb, powder, pellet, or the like, and is preferably gum or crumb. The gum is a small particulate mass of the perfluoroelastomer. The crumb is an amorphous mass of the perfluoroelastomer resulting from fusion of particles that cannot maintain the form of small particles as gum at room temperature. The gum or crumb is suitably obtained by coagulation, drying, or the like by a conventionally known method from the aqueous dispersion obtained by the production method of the present disclosure.

In the production method of the present disclosure, the perfluoroelastomer in the aqueous dispersion may be coagulated using an acid with no metal elements, and the coagulated perfluoroelastomer may be washed with a liquid medium with a reduced content of metal elements. Furthermore, in the production method of the present disclosure, the washed perfluoroelastomer may be dried. By such a production method, it is possible to produce a perfluoroelastomer with a metal content of 10 ppm by mass or less in the perfluoroelastomer. The liquid medium is preferably water and still more preferably ultrapure water. The metal content in the liquid medium is preferably 2 ppm by mass or less, more preferably 1 ppm by mass or less, and still more preferably 0.5 ppm by mass or less. Also, in the production method of the present disclosure, the production method described in International Publication No. WO 2018/225586 may be used. According to such a production method, a perfluoroelastomer with a reduced metal content can be produced, and a perfluoroelastomer suitable for components of semiconductor manufacturing devices can be produced.

The polymer (1), decomposition products and by-products of the polymer (1) by-produced from the polymer (1), residual monomers, and the like may be collected from discharge water generated in the coagulation or the washing and/or from off gas generated in the drying, and then purified to reuse the polymer (1), the decomposition products and by-products of the polymer (1) by-produced from the polymer (1), the residual monomers, and the like. Although the method for carrying out the collection and purification is not limited, it may be carried out by a known method. For example, it can be performed by the method described in National Publication of International Patent Application No. 2011-520020.

In the production method of the present disclosure, when the fluoropolymer is subjected to coagulation, washing, drying, or the like, discharge water or off gas is generated. The polymer (1), decomposition products and by-products of the polymer (1) by-produced from the polymer (1), residual monomers, and the like may be collected from discharge water generated in the coagulation or the washing and/or from off gas generated in the drying, and then purified to reuse the polymer (1), the decomposition products and by-products of the polymer (1) by-produced from the polymer (1), the residual monomers, and the like. Although the method for carrying out the collection and purification is not limited, it may be carried out by a known method. For example, it may be performed by the method described in National Publication of International Patent Application No. 2011-520020. Examples thereof further include the methods described in U.S. Patent Application Publication No. 2007/15937, U.S. Patent Application Publication No. 2007/25902, and U.S. Patent Application Publication No. 2007/27251. Specific examples of the methods are as follows.

An example of the method of collecting the polymer (1), the decomposition products and by-products of the polymer (1) by-produced from the polymer (1), the residual monomers, and the like from discharge water is a method in which the discharge water is brought into contact with adsorbent particles formed of ion exchange resin, activated carbon, silica gel, clay, zeolite, or the like, so that the particles are allowed to adsorb the polymer (1) and the others, and then the discharge water and the adsorbent particles are separated. Incinerating the adsorbent particles having adsorbed the polymer (1) and the others can prevent emission of the polymer (1) and the others into the environment.

Alternatively, the polymer (1) and the others may be removed and eluted by a known method from the ion exchange resin particles having adsorbed the polymer (1) and the others, and collected. For example, in the case of using anion exchange resin particles as the ion exchange resin particles, the polymer (1) and the others can be eluted by bringing a mineral acid into contact with an anion exchange resin. When a water-soluble organic solvent is added to the resulting eluate, the mixture is usually separated into two phases. Since the lower phase contains the polymer (1) and the others, it is possible to collect the polymer (1) and the others by collecting and neutralizing the lower phase. Examples of the water-soluble organic solvent include polar solvents such as alcohols, ketones, and ethers.

Other methods of collecting the polymer (1) and the others from ion exchange resin particles include a method of using an ammonium salt and a water-soluble organic solvent and a method of using an alcohol and, if necessary, an acid. In the latter method, ester derivatives of the polymer (1) and the others are generated, and thus, they can easily be separated from the alcohol by distillation.

When the discharge water contains fluoropolymer particles and other solids, they are preferably removed before the discharge water and the adsorbent particles are brought into contact with each other. Examples of methods of removing the fluoropolymer particles and other solids include a method of adding an aluminum salt, for example, to deposit these components, and then separating the discharge water and the deposits, and an electrocoagulation method. The components may also be removed by a mechanical method, and examples thereof include a crossflow filtration method, a depth filtration method, and a precoat filtration method.

From the viewpoint of productivity, the discharge water preferably contains the fluoropolymer in a non-agglomerated form in a low concentration, more preferably less than 0.4% by mass, and particularly preferably less than 0.3% by mass.

An example of the method of collecting the polymer (1) and the others from the off gas is a method in which a scrubber is brought into contact with deionized water, an alkaline aqueous solution, an organic solvent such as a glycol ether solvent, or the like to provide a scrubber solution containing the polymer (1) and the others. When the alkaline aqueous solution used is a highly concentrated alkaline aqueous solution, the scrubber solution can be collected in a state where the polymer (1) and the others are phase-separated, and thus the polymer (1) and the others can be easily collected and reused. Examples of the alkali compound include alkali metal hydroxides and quaternary ammonium salts.

The scrubber solution containing the polymer (1) and the others may be concentrated using a reverse osmosis membrane, for example. The concentrated scrubber solution usually contains fluoride ions. Still, the fluoride ions may be removed by adding alumina after the concentration so that the polymer (1) and the others can easily be reused. Alternatively, the scrubber solution may be brought into contact with adsorbent particles so that the adsorbent particles can adsorb the polymer (1) and the others, and thereby the polymer (1) and the others may be collected by the aforementioned method.

The polymer (1) and the others collected by any of the methods may be reused in the production of fluoropolymer.

The production method of the present disclosure is a method for producing a PTFE, the method comprising polymerizing TFE in an aqueous medium to obtain a PTFE, wherein the PTFE is a high-molecular-weight PTFE, a

polymer (1) is a polymer of a monomer (1) represented by the general formula (1), in which the content of a dimer and a trimer of the monomer (1) in the polymer (1) is 1.0% by mass or less based on the polymer (1) (hereinafter, this may be referred to as a second production method of the present disclosure).

Since the second production method of the present disclosure comprises polymerizing TFE in the presence of a polymer (1), it is possible to produce a PTFE that is substantially free from the dimer and the trimer of the monomer constituting the polymer (1). Also, according to the production method of the present disclosure, a PTFE having a high molecular weight can be obtained.

In the second production method of the present disclosure, as the polymer (1), a polymer (1) with a content of the polymerized unit (1) of 50% by mass or more may be used in the same manner as in the first production method of the present disclosure, or a polymer (1) with a content of the polymerized unit (1) of less than 50% by mass may be used.

In the polymer (1) used in the second production method of the present disclosure, the content of the polymerized unit (1) is, in the preferred order, 1.0% by mass or more, 3.0% by mass or more, 5.0% by mass or more, 10% by mass or more, 20% by mass or more, 30% by mass or more, 40% by mass or more, 50% by mass or more, 60% by mass or more, 70% by mass or more, 80% by mass or more, or 90% by mass or more based on all polymerized units. It is particularly preferable that the content of the polymerized unit (1) is substantially 100% by mass, and it is most preferable that the polymer (1) contains only the polymerized unit (1).

In the polymer (1) used in the second production method of the present disclosure, the content of the polymerized unit derived from the other monomer copolymerizable with the monomer (1) is, in the preferred order, 99.0% by mass or less, 97.0% by mass or less, 95.0% by mass or less, 90% by mass or less, 80% by mass or less, 70% by mass or less, 60% by mass or less, 50% by mass or less, 40% by mass or less, 30% by mass or less, 20% by mass or less, or 10% by mass or less, based on all polymerized units. It is particularly preferable that the content of the polymerized unit derived from the other monomer copolymerizable with the monomer (1) is substantially 0% by mass, and it is most preferable that the polymer (1) contains no polymerized unit derived from the other monomer.

The configuration of the polymer (1) used in the second production method of the present disclosure is the same as that of the polymer (1) used in the first production method of the present disclosure, except that the content of the polymerized unit (1) can be selected from a wide range.

It is preferable that the second production method of the present disclosure comprises polymerizing the monomer (1) to obtain a crude composition containing the polymer of the monomer (1) and removing the dimer and trimer of the monomer (1) contained in the crude composition from the crude composition to obtain the polymer (1) in which the content of the dimer and trimer of the monomer (1) is 1.0% by mass or less based on the polymer (1).

In the second production method of the present disclosure, in the case of carrying out polymerization of the monomer (1) and the other monomer copolymerizable with the monomer (1) when obtaining the crude composition, in the resulting crude composition, a dimer and trimer constituted by the polymerized unit (1) derived from the monomer (1) and the polymerized unit derived from the other monomer copolymerizable with the monomer (1) are usually contained. By removing the dimer and trimer constituted by the polymerized unit (1) and the polymerized unit derived from the other monomer contained in the crude composition from the crude composition, the polymer (1) may be obtained in which the content of the dimer and trimer constituted by the polymerized unit (1) and the polymerized unit derived from the other monomer is 1.0% by mass or less based on the polymer (1).

Polymerization of the monomer (1) can be carried out by the method described in the first production method of the present disclosure.

In the second production method of the present disclosure, it is preferable that the polymerization of the monomer (1) is carried out in the aqueous medium substantially in the absence of a fluorine-containing surfactant (except for the monomer (1)).

The fluorine-containing surfactant is as described above.

After the polymerization of the monomer (1), the dimer and trimer of the monomer (1) contained in the crude composition obtained by the polymerization of the monomer (1) are removed from the crude composition. The means of removing the dimer and trimer is as mentioned above.

Also, a fraction having a molecular weight of 3,000 or less, a fraction having a molecular weight of 2,000 or less, a fraction having a molecular weight of 1,500 or less, and a fraction having a molecular weight of 1,000 or less can be removed by appropriately selecting the means of removing the dimer and trimer.

The polymerization of TFE can be carried out by the above-mentioned method. Along with TFE, a modifying monomer may also be polymerized, as mentioned above.

The present disclosure also relates to a composition comprising a polymer (1) and a fluoropolymer, wherein the fluoropolymer contains a polymerized unit derived from a perfluoromonomer, and the content of the polymerized unit derived from the perfluoromonomer in the fluoropolymer is 90 mol% or more based on all polymerized units of the fluoropolymer, the polymer (1) is a polymer of a monomer (1) represented by the general formula (1), a polymerized unit (1) derived from the monomer (1) in the polymer (1) is 50% by mass or more based on all polymerized units of the polymer (1), and the content of a dimer and a trimer of the monomer (1) in the polymer (1) is 1.0% by mass or less based

on the polymer (1) (hereinafter, this may be referred to as a first composition of the present disclosure).

The first composition of the present disclosure can be produced by the first production method of the present disclosure.

The form of the first composition of the present disclosure is not limited, but it may be in the form of, for example, an aqueous dispersion, coagulated product, dried product, gum, crumb, powder, pellets, or the like. The aqueous dispersion refers to a dispersion system in which the aqueous medium is the dispersion medium and the fluoropolymer is the dispersoid. The above aqueous medium is not limited as long as it is a liquid containing water, and it may be one containing, in addition to water, an organic solvent such as an alcohol, an ether, a ketone, and a paraffin wax.

The first composition of the present disclosure may be a fluoropolymer aqueous dispersion in which primary particles of the fluoropolymer are dispersed in the aqueous medium. The aqueous dispersion may be any of an aqueous dispersion obtained by the polymerization mentioned above, a dispersion obtained by concentrating this aqueous dispersion or subjecting the aqueous dispersion to dispersion stabilization treatment, and an aqueous dispersion obtained by dispersing powder of the fluoropolymer into an aqueous medium in the presence of the surfactant. The composition of the present disclosure may also be fluoropolymer powder. The fluoropolymer powder is obtained by, for example, coagulating the fluoropolymer in the fluoropolymer aqueous dispersion by a known method.

The content of the polymer (1) in the composition is preferably 0.001% by mass or more, more preferably 0.005% by mass or more, still more preferably 0.01% by mass or more, particularly preferably 0.05% by mass or more, and most preferably 0.10% by mass or more, based on the fluoropolymer. Also, the content of the polymer (1) in the composition is preferably 10% by mass or less, more preferably 5.0% by mass or less, still more preferably 2.0% by mass or less, particularly preferably 1.0% by mass or less, and most preferably 0.50% by mass or less, based on the fluoropolymer.

The content of the polymer (1) can be determined by solid-state NMR measurement.

Also, International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2006/119224, International Publication No. WO 2013/085864, International Publication No. WO 2012/082707, International Publication No. WO 2012/082703, International Publication No. WO 2012/082454, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like describe methods for measuring the content of the respective polymers described therein. The methods for measuring the respective polymers described therein can be used as the method for measuring the content of the polymer (1).

Also, when the fluoropolymer is a perfluoroelastomer, the content of the polymer (1) may be measured by the following method. It can be measured by a method in which the composition is mixed with a solvent that dissolves the perfluoroelastomer, deionized water is added to the obtained mixed solution to extract the polymer (1) from the obtained mixed solution, the upper phase (aqueous phase) containing the polymer (1) is collected, and the mass of the residue (polymer (1)) obtained by heating and drying the collected upper phase is measured to calculate the content of the polymer (1).

As the solvent that dissolves the perfluoroelastomer, a perhalo solvent in which all of the hydrogen atoms are replaced by halogen atoms is preferable, and in particular, a perfluoro solvent in which all of the hydrogen atoms are replaced by fluorine atoms is preferable. Specific examples of the perfluoro solvent include perfluoro tertiary amines such as perfluorotri-n-butylamine and perfluorotriethylamine, perfluorinated tetrahydrofuran, perfluorobenzene, Fluorinert FC-77 (manufactured by 3M Company), Demnum Solvent (manufactured by Daikin Industries, Ltd., main component: $C_6F_{14}$), R-318 (manufactured by Daikin Industries, Ltd., main component: $C_4F_8Cl_2$), and Fluorinert FC-43 (manufactured by 3M Company, main component: $(C_4F_9)_3N$), and among these, perfluorotri-n-butylamine and Fluorinert FC-77 are preferable from the viewpoint of handling properties.

Also, as the solvent that dissolves the perfluoroelastomer, various fluorine-containing solvents are preferably used in addition to those exemplified above, and specific examples thereof include perfluoroalkanes, HFCs (hydrofluorocarbons), HFEs (hydrofluoroethers), and HCFCs (hydrochlorofluorocarbons). Specifically, mention may be made of HFE-7100 (manufactured by 3M Company, main component: $C_4F_9OCH_3$), HFE-7200 (manufactured by 3M Company, main component: $C_4F_9OC_2H_5$), and Vertrel XF (manufactured by The Chemours Company, main component: $C_5H_2F_{10}$).

In the first composition of the present disclosure, it is preferable that the content of the dimer and trimer of the monomer (1) in the polymer (1) is 1.0% by mass or less based on the polymer (1). The content of the dimer and trimer in the first composition of the present disclosure is preferably 0.1% by mass or less, more preferably 0.01% by mass or less, still more preferably 0.001% by mass or less, and particularly preferably 0.0001% by mass or less, based on the polymer (1).

In the first composition of the present disclosure, it is preferable that the content of a dimer and a trimer constituted by the polymerized unit (1) derived from the monomer (1) and the polymerized unit derived from the other monomer copolymerizable with the monomer (1) in the polymer (1) is 1.0% by mass or less based on the polymer (1). The content of the dimer and trimer constituted by the polymerized unit (1) and the polymerized unit derived from the other monomer in the first composition of the present disclosure is preferably 0.1% by mass or less, more preferably 0.01% by mass or less, still more preferably 0.001% by mass or less, and particularly preferably 0.0001% by mass or less, based on the polymer (1).

The content of the dimer and trimer in the first composition of the present disclosure can be measured by a method that is the same as that for the content of the dimer and trimer in the polymer (1).

The polymer (1) in the first composition of the present disclosure may contain a fraction having a molecular weight of 3,000 or less, a fraction having a molecular weight of 2,000 or less, a fraction having a molecular weight of 1,500 or less, or a fraction having a molecular weight of 1,000 or less in the same content as for the polymer (1) used in the first production method of the present disclosure, or may be free from them.

The polymer (1) in the first composition of the present disclosure may have the same configuration as that of the polymer (1) used in the first production method of the present disclosure.

The fluoropolymer in the first composition of the present disclosure contains a polymerized unit derived from a perfluoromonomer, and the content of the polymerized unit derived from the perfluoromonomer in the fluoropolymer is 90 mol% or more based on all polymerized units of the fluoropolymer. The fluoropolymer in the first composition of the present disclosure may have the same configuration as that of the fluoropolymer obtained by the first production method of the present disclosure. The fluoropolymer in the first composition of the present disclosure may be, for example, a PTFE or a perfluoroelastomer. The PTFE may be a TFE homopolymer containing only the TFE unit, or a modified PTFE containing the TFE unit and a modifying monomer unit.

When the fluoropolymer is a PTFE or a perfluoroelastomer, it is preferable that the first composition of the present disclosure contain little or no metal components. The metal content in the composition is preferably 10 ppm by mass or less, more preferably 7 ppm by mass or less, still more preferably 5 ppm by mass or less, and particularly preferably 1 ppm by mass or less. The composition with a reduced metal content may be a coagulated product or a dried product. The coagulated product is obtained by coagulating the fluoropolymer in the aqueous dispersion, and the dried product is obtained by drying the coagulated product.

The metal content in the composition can be determined by placing the composition in a platinum crucible, washing it with diluted nitric acid and ultrapure water, ashing it with a burner and an electric furnace, heating and decomposing it with sulfuric acid and hydrofluoric acid, dissolving it in diluted nitric acid to prepare a solution for measurement, measuring the contents of 30 metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb, Bi, and Th) for the obtained solution for measurement by using an ICP mass spectrometer (Agilent 8800, manufactured by Agilent Technologies), and summing the respective measured values.

When the fluoropolymer is a perfluoroelastomer, the first composition of the present disclosure can further contain a curing agent (cross-linking agent), a filler, and the like. Examples of the curing agent include polyols, polyamines, organic peroxides, organotins, bis(aminophenol)tetraamine, and bis(thioaminophenol).

It is preferable that the composition of a perfluoroelastomer of the present disclosure contains at least one selected from the group consisting of an inorganic nitride, an organotin compound, an ammonia-generating compound, and a cross-linking agent.

Examples of the cross-linking agent include cross-linking agents used in peroxide crosslinking, polyol crosslinking, polyamine crosslinking, triazine crosslinking, oxazole crosslinking, imidazole crosslinking, and thiazole crosslinking.

From the viewpoint of heat resistance, steam resistance, amine resistance, and good crosslinkability, 2,2-bis[3-amino-4-(N-phenylamino)phenyl]hexafluoropropane (AFTA-Ph) is preferred as the cross-linking agent.

The content of the cross-linking agent is preferably 0.05 to 10 parts by mass, and more preferably 0.5 to 5 parts by mass, based on 100 parts by mass of the perfluoroelastomer.

Examples of the filler include organic fillers made of engineering plastics such as polyarylate, polysulfone, polyethersulfone, polyphenylene sulfide, polyoxybenzoate, and polytetrafluoroethylene powder; metal oxide fillers such as aluminum oxide, silicon oxide, yttrium oxide, and titanium oxide; metal carbide fillers such as silicon carbide and aluminum carbide, and metal nitride fillers such as silicon nitride and aluminum nitride; and inorganic fillers such as aluminum fluoride, fluorocarbon, barium sulfate, carbon black, silica, clay, and talc.

The content of the filler is preferably 0.5 to 100 parts by mass, and more preferably 5 to 50 parts by mass, based on 100 parts by mass of the perfluoroelastomer.

Particularly, in a field where high purity and antistaining properties are not demanded, usual additives to be compounded into perfluoroelastomers if required, such as processing aids, plasticizers, and coloring agents, can be compounded, and one or more types of ordinary cross-linking agents or cross-linking aids different from those described above may also be compounded.

The present disclosure also relates to a composition comprising a polymer (1) and a PTFE, wherein the PTFE

is a high-molecular-weight PTFE, the polymer (1) is a polymer of a monomer (1) represented by the general formula (1), and the content of a dimer and a trimer of the monomer (1) in the polymer (1) is 1.0% by mass or less based on the polymer (1) (hereinafter, this may be referred to as a second composition of the present disclosure).

The second composition of the present disclosure can be produced by the second production method of the present disclosure.

The second composition of the present disclosure may be a PTFE aqueous dispersion in which primary particles of the PTFE are dispersed in the aqueous medium. The aqueous dispersion may be any of an aqueous dispersion obtained by the polymerization mentioned above, a dispersion obtained by concentrating this aqueous dispersion or subjecting the aqueous dispersion to dispersion stabilization treatment, and an aqueous dispersion obtained by dispersing powder of the PTFE into an aqueous medium in the presence of the surfactant. The composition of the present disclosure may also be PTFE powder. The PTFE powder is obtained by, for example, coagulation of the PTFE in a PTFE aqueous dispersion by a known method.

The content of the polymer (1) in the composition is preferably 0.001% by mass or more, more preferably 0.005% by mass or more, still more preferably 0.01% by mass or more, particularly preferably 0.05% by mass or more, and most preferably 0.10% by mass or more, based on the PTFE. Also, the content of the polymer (1) in the composition is preferably 10% by mass or less, more preferably 5.0% by mass or less, still more preferably 2.0% by mass or less, particularly preferably 1.0% by mass or less, and most preferably 0.50% by mass or less, based on the PTFE.

The content of the polymer (1) can be determined by solid-state NMR measurement.

In addition, International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2006/119224, International Publication No. WO 2013/085864, International Publication No. WO 2012/082707, International Publication No. WO 2012/082703, International Publication No. WO 2012/082454, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like describe methods for measuring the content of the respective polymers described therein. The methods for measuring the respective polymers described therein can be used as the method for measuring the content of the polymer (1).

In the second composition of the present disclosure, it is preferable that the content of the dimer and trimer of the monomer (1) in the polymer (1) is 1.0% by mass or less based on the polymer (1). The content of the dimer and trimer in the second composition of the present disclosure is preferably 0.1% by mass or less, more preferably 0.01% by mass or less, still more preferably 0.001% by mass or less, and particularly preferably 0.0001% by mass or less, based on the polymer (1).

In the second composition of the present disclosure, it is preferable that the content of a dimer and a trimer constituted by the polymerized unit (1) derived from the monomer (1) and the polymerized unit derived from the other monomer copolymerizable with the monomer (1) in the polymer (1) is 1.0% by mass or less based on the polymer (1). The content of the dimer and trimer constituted by the polymerized unit (1) and the polymerized unit derived from the other monomer in the second composition of the present disclosure is preferably 0.1% by mass or less, more preferably 0.01% by mass or less, still more preferably 0.001% by mass or less, and particularly preferably 0.0001% by mass or less, based on the polymer (1).

The content of the dimer and trimer in the second composition of the present disclosure can be measured by a method that is the same as that for the content of the dimer and trimer in the polymer (1).

The polymer (1) in the second composition of the present disclosure may contain a fraction having a molecular weight of 3,000 or less, a fraction having a molecular weight of 2,000 or less, a fraction having a molecular weight of 1,500 or less, or a fraction having a molecular weight of 1,000 or less in the same content as for the polymer (1) used in the second production method of the present disclosure.

The polymer (1) in the second composition of the present disclosure may have the same configuration as that of the polymer (1) used in the second production method of the present disclosure.

The PTFE in the second composition of the present disclosure may have the same configuration as that of the PTFE (high-molecular-weight PTFE) obtained by the second production method of the present disclosure. The PTFE may be a TFE homopolymer containing only the TFE unit, or a modified PTFE containing the TFE unit and a modifying monomer unit.

In the first composition of the present disclosure and the second composition of the present disclosure, the modified PTFE preferably has a content of a polymerized unit derived from the modifying monomer (hereinafter, also referred to as a "modifying monomer unit") in the range of 0.00001 to 1% by mass based on all polymerized units in the PTFE. The lower limit of the content of the modifying monomer unit is more preferably 0.0001% by mass, still more

preferably 0.001% by mass, and further preferably 0.005% by mass. The upper limit of the content of the modifying monomer unit is, in the preferred order, 0.80% by mass, 0.70% by mass, 0.50% by mass, 0.30% by mass, 0.20% by mass, 0.15% by mass, 0.10% by mass, or 0.05% by mass. In the present disclosure, the modifying monomer unit means a portion of the molecular structure of the PTFE as a part derived from the modifying monomer.

In the present disclosure, the content of each monomer unit constituting the PTFE can be calculated by combining NMR, FT-IR, elemental analysis, and fluorescent X-ray analysis as appropriate depending on the type of monomer. The content of each monomer unit constituting the PTFE can also be determined by calculation from the amount of the modifying monomer added for use in the polymerization.

When the modifying monomer contains the modifying monomer (A), the content of a polymerized unit derived from the modifying monomer (A) is preferably in the range of 0.00001 to 1.0% by mass based on all polymerized units in the PTFE. The lower limit thereof is more preferably 0.0001% by mass, more preferably 0.0005% by mass, still more preferably 0.001% by mass, further preferably 0.005% by mass. The upper limit is, in the preferred order, 0.90% by mass, 0.50% by mass, 0.40% by mass, 0.30% by mass, 0.20% by mass, 0.15% by mass, 0.10% by mass, 0.08% by mass, 0.05% by mass, or 0.01% by mass.

In the PTFE, the average primary particle size of primary particles is preferably 500 nm or less, more preferably 400 nm or less, and still more preferably 350 nm or less. According to the production method of the present disclosure, primary particles having a relatively small average primary particle size can be obtained. Also, an even smaller average primary particle size of primary particles can be obtained by, for example, adding a modifying monomer to the polymerization system at the initial stage of TFE polymerization. The lower limit of the average primary particle size may be, for example, but is not limited to, 50 nm or 100 nm. From the viewpoint of molecular weight, it is preferably 100 nm or more and still more preferably 150 nm or more.

The average primary particle size of primary particles of the PTFE can be measured by dynamic light scattering. It may be measured by first preparing a PTFE aqueous dispersion having a polymer solid concentration adjusted to about 1.0% by mass, and then using dynamic light scattering at a measurement temperature of 25°C with 70 times of measurement processes, wherein the solvent (water) has a refractive index of 1.3328 and the solvent (water) has a viscosity of 0.8878 mPa·s. In the dynamic light scattering, ELSZ-1000S (manufactured by Otsuka Electronics Co., Ltd.) may be used, for example.

It is preferable that the PTFE has an aspect ratio of less than 2.00. The aspect ratio is the aspect ratio of primary particles of the PTFE. The upper limit of the aspect ratio of primary particles of the PTFE is, in the preferred order, 1.90 or less, 1.80 or less, 1.70 or less, 1.60 or less, 1.50 or less, 1.45 or less, 1.40 or less, 1.35 or less, 1.30 or less, 1.20 or less, or 1.10 or less. According to the production method of the present disclosure, primary particles having a relatively small aspect ratio can be obtained. Also, an even smaller aspect ratio of primary particles can be obtained by, for example, adding a modifying monomer to the polymerization system at the initial stage of TFE polymerization.

In the case of measuring the aspect ratio of PTFE using an aqueous dispersion of the PTFE, it can be determined by preparing a PTFE aqueous dispersion having a polymer solid concentration adjusted to about 1.0% by mass and observing it by a scanning electron microscope (SEM), subjecting 400 or more randomly extracted particles to image processing, and obtaining the aspect ratio from the average of the ratios of the major axis to the minor axis thereof. In the case of measuring the aspect ratio of PTFE using PTFE powder, it can be determined by irradiating the PTFE powder with an electron beam, then adding it into an aqueous solution of a fluorine-containing surfactant, applying ultrasonic waves to redisperse it in the aqueous solution to thereby prepare a PTFE aqueous dispersion. The aspect ratio can be obtained by the method described above using the aqueous dispersion thus prepared.

In the PTFE, the standard specific gravity (SSG) is preferably 2.280 or less, more preferably 2.200 or less, still more preferably 2.190 or less, and further preferably 2.180 or less. It is also preferably 2.130 or more. The SSG is measured by the water replacement method in conformity with ASTM D 792 using a sample molded in conformity with ASTM D 4895-89.

The PTFE may have a thermal instability index (TII) of 20 or more. The thermal instability index (TII) of the PTFE can be adjusted within the above range by, for example, using the polymer (1) to produce the PTFE. The TII is preferably 25 or more, more preferably 30 or more, and still more preferably 35 or more. It is particularly preferably 40 or more. The TII is measured in conformity with ASTM D 4895-89.

The 0.1% mass loss temperature of the PTFE may be 400°C or lower. The 0.1% mass loss temperature of the PTFE can be adjusted within the above range by, for example, using the polymer (1) to produce the PTFE.

The 0.1% mass loss temperature can be measured by precisely weighing about 10 mg of PTFE powder without a history of being heated to a temperature of 300°C or higher, accommodating it in a dedicated aluminum pan, and using TG/DTA (simultaneous thermogravimetric analyzer). The 0.1% mass loss temperature can be specified as the temperature corresponding to the point where the aluminum pan is heated up in the temperature range from 25°C to 600°C at 10°C/min under an atmospheric atmosphere and the mass is reduced by 0.1% by mass.

The 1.0% mass loss temperature of the PTFE may be 492°C or lower. The 1.0% mass loss temperature of the PTFE can be adjusted within the above range by, for example, using the polymer (1) to produce the PTFE.

The 1.0% mass loss temperature can be measured by precisely weighing about 10 mg of PTFE powder without a history of being heated to a temperature of 300°C or higher, accommodating it in a dedicated aluminum pan, and using TG/DTA (simultaneous thermogravimetric analyzer). The 1.0% mass loss temperature can be specified as the temperature corresponding to the point where the aluminum pan is heated up in the temperature range from 25°C to 600°C at 10°C/min under an atmospheric atmosphere and the mass is reduced by 1.0% by mass.

The peak temperature of the PTFE is preferably 347°C or lower, more preferably 346°C or lower, and still more preferably 345°C or lower. The lower limit of the peak temperature of the PTFE may be 333°C or higher, or 335°C or higher.

The peak temperature of the PTFE can be measured by precisely weighing about 10 mg of PTFE powder without a history of being heated to a temperature of 300°C or higher, accommodating it in a dedicated aluminum pan, and using TG/DTA (simultaneous thermogravimetric analyzer). The peak temperature can be specified as the temperature corresponding to the maximum value appearing in the differential thermal (DTA) curve obtained by increasing the temperature of PTFE without a history of being heated to a temperature of 300°C or higher at 10°C/min using TG/DTA (simultaneous thermogravimetric analyzer).

In one embodiment, the first composition of the present disclosure and the second composition of the present disclosure contain a fluorine-containing surfactant. A composition containing a fluorine-containing surfactant has an advantage that it can be stably produced with high productivity using a fluorine-containing surfactant.

In one embodiment, the first composition of the present disclosure and the second composition of the present disclosure are substantially free from a fluorine-containing surfactant. In order to produce a composition substantially free from a fluorine-containing surfactant, the perfluoromonomer such as TFE needs to be polymerized without using a fluorine-containing surfactant, but the production method of the present disclosure, which uses the polymer (1), has enabled the production of such a composition.

In the present disclosure, the expression "substantially free from a fluorine-containing surfactant" means that the content of the fluorine-containing surfactant in the composition is 10 ppm by mass or less, and it is preferably 1 ppm by mass or less, more preferably 100 ppb by mass or less, still more preferably 10 ppb by mass or less, further preferably 1 ppb by mass or less, and particularly preferably the fluorine-containing surfactant is at or below the detection limit as measured by liquid chromatography-mass spectrometry (LC/MS).

The content of the fluorine-containing surfactant can be quantified by a known method. For example, it can be quantified by LC/MS analysis.

First, methanol is added to the composition for extraction, and the obtained extracted liquid is subjected to LC/MS analysis. In order to further increase the extraction efficiency, a treatment by Soxhlet extraction, ultrasonic treatment, or the like may be performed.

The molecular weight information is extracted from the obtained LC/MS spectrum to confirm agreement with the structural formula of the candidate fluorine-containing surfactant.

Thereafter, aqueous solutions having five or more different content levels of the confirmed fluorine-containing surfactant are prepared, and LC/MS analysis is performed on the aqueous solutions with the respective content levels, and the relationship between the content level and the area corresponding to that content level is plotted to draw a calibration curve.

Then, using the calibration curve, the area of the LC/MS chromatogram of the fluorine-containing surfactant in the extracted liquid can be converted to the content of the fluorine-containing surfactant.

The first composition of the present disclosure and the second composition of the present disclosure can be suitably utilized for the applications mentioned above.

Although the embodiments have been described above, it will be understood that a wide variety of modifications can be made in the form and details without departing from the spirit and scope of the claims.

## EXAMPLES

Hereinafter, the embodiments of the present disclosure will be described with reference to Examples, but the present disclosure is not limited solely to such Examples.

Each numerical value in Examples was measured by the following methods.

<Oxygen concentration in reactor>

The oxygen concentration during reaction was determined by measuring and analyzing the gas discharged out of the discharge gas line of a reactor in a $N_2$ flow, using a low concentration oxygen analyzer (trade name "PS-820-L", manufactured by Iijima Electronics Corporation).

<Method for measuring weight average molecular weight (Mw), number average molecular weight (Mn), and content of fraction having molecular weight of 3,000 or less>

The Mw and Mn of the polymer (such as the polymers K and L) were determined by performing measurement by gel permeation chromatography (GPC) using 1260 Infinity II manufactured by Agilent Technologies and using connected columns manufactured by Tosoh Corporation (one TSKgel G3000PW$_{XL}$ and one TSG gel GMPW$_{XL}$) while allowing a mixed solvent of a Tris buffer and acetonitrile (Tris buffer : acetonitrile = 8 : 2 (v/v)) to flow at a flow rate of 0.5 ml/min, and the molecular weights were calculated using monodisperse polyethylene oxide (PEO) and polyethylene glycol (PEG) as standards.
<Alternating ratio>
The alternating ratio was obtained by performing $^{19}$F-NMR measurement on the polymer and calculating the alternating ratio from the respective total integral values of two peaks (a peak appearing at -75 ppm to -80 ppmm and a peak appearing at -80 ppm to -84 ppm) derived from "$OCF_2$*" of $CF_2$=$CFOCF_2CF_2SO_3Na$ appearing in the NMR spectrum according to the following formula:

$$\text{Alternating ratio (\%)} \geq (b \times 2)/(a + b) \times 100$$

a: Total integral value of peak in -75 ppm to -80 ppmm area
b: Total integral value of peak in -80 ppm to -84 ppm area

The alternating ratio calculated as described above is the proportion of a polymerized unit adjacent to the polymerized unit derived from VdF among the polymerized units derived from $CF_2$=$CFOCF_2CF_2SO_3Na$ in the polymer.
The proportion of the carbon atom (C*), in the polymerized unit derived from VdF(C*$H_2$=$CF_2$), bonded to the carbon atom (C*) in the polymerized unit derived from $CF_2$=C*$FOCF_2CF_2SO_3Na$ is obtained by the following formula:

$$\text{Proportion (\%)} = (b \times 2)/(a + b) \times 100$$

The proportion of the carbon atoms (the carbon atom (C**) in the polymerized unit derived from C**$F_2$=C**$FOCF_2CF_2SO_3Na$ and the carbon atom (C**) in the polymerized unit derived from VdF($CH_2$=C**$F_2$)), other than the carbon atom (C*) in the polymerized unit derived from VdF(C*$H_2$=$CF_2$), bonded to the carbon atom (C*) in the polymerized unit derived from $CF_2$=C*$FOCF_2CF_2SO_3Na$ is obtained by the following formula:

$$\text{Proportion (\%)} = (a - b)/(a + b) \times 100$$

<Method for measuring content of dimer and trimer of monomer (such as monomers K and L) in polymer (such as polymers K and L)>

(1) Extraction from aqueous solution

The solids in the aqueous solution of the polymer were measured, and the aqueous solution in an amount corresponding to 0.2 g of the solids of the polymer was weighed. Then, water and methanol were added such that the volume ratio of water to methanol was 50/50 (% by volume) in combination with the water contained in the aqueous solution, and a mixed solution containing the polymer and water and methanol was obtained. Thereafter, filtration was carried out on the obtained mixed solution, using an ultrafiltration disc (cut-off molecular weight 3,000 Da), and the supernatant containing the polymer was collected as the extracted liquid.
Analysis of the extracted liquid was carried out using a liquid chromatograph mass spectrometer (Waters, LC-MS ACQUITY UPLC/TQD), and the chromatogram of the extracted liquid was obtained.
The content of the dimer and trimer of the monomer contained in the extracted liquid was determined by converting the peak integrated value derived from the dimer and trimer of the monomer appearing in the chromatogram of the extracted liquid into the content of the dimer and trimer of the monomer using the calibration curve of an analogous monomer.

(2) Calibration curve of monomer

Methanol standard solutions of the monomer with five known content levels of 1 ng/mL to 100 ng/mL were

prepared, and measurement was carried out using a liquid chromatograph mass spectrometer (Waters, LC-MS ACQUITY UPLC/TQD). The relationship between the respective monomer contents and the peak integrated values corresponding to those contents were plotted to prepare a calibration curve (first approximation) for each monomer. Next, the calibration curve (first approximation) for each monomer was used to prepare a calibration curve for the dimer and trimer of each monomer.

Measurement equipment configuration and LC-MS measurement conditions are below:

[Table 1]

Table 1

| | | | |
|---|---|---|---|
| LC unit | | | |
| Device | Acquity UPLC manufactured by Waters | | |
| Column | Acquity UPLC BEH C18 1.7 μm (2.1 × 50 mm) manufactured by Waters | | |
| Mobile phase | A $CH_3CN$ | | |
| | B 20mM $CH_3COONH_4/H_2O$ | | |
| | | 0 → 1.5 min | A:B = 10:90 |
| | | 1.5 → 8.5 min | A:B = 10:90 → A:B = 90: 10 Linear gradient |
| | | 8.5 → 10 min | A:B = 90:10 |
| flow rate | | 0.4mL/min | |
| Column temperature | 40°C | | |
| Sample injection volume | 5 μL | | |
| MS unit | | | |
| Device | TQ Detector | | |
| Measurement mode | MRM(Multiple Reaction Monitoring) | | |
| Ionization method | Electrospray ionization<br>SCAN | | |

The quantification limit in this measurement equipment configuration is 1 ng/mL.

<Content of modifying monomer unit>

In order to determine the content of the HFP unit, a thin film disk was prepared by subjecting the PTFE powder to press molding, and based on the infrared absorbance thereof obtained by FT-IR measurement of the thin film disk, the value obtained by multiplying the ratio of absorbance at 982 $cm^{-1}$ / absorbance at 935 $cm^{-1}$ by 0.3 was taken as the HFP unit content.

<Concentration of polymer (such as polymers K and L)>

In a vacuum dryer, about 1 g of the aqueous solution of the polymer was dried at a condition of 60°C for 60 minutes, the mass of the non-volatile matter was measured, and the proportion of the mass of the non-volatile matter to the mass of the polymer aqueous solution (1 g) was expressed by percentage and taken as the concentration of the polymer.

<Solid concentration of aqueous dispersion containing PTFE>

In an air dryer, 1 g of the aqueous dispersion was dried at a condition of 150°C for 60 minutes, and the proportion of the mass of the non-volatile matter to the mass of the aqueous dispersion (1 g) was expressed by percentage and taken as the solid concentration thereof.

<Average primary particle size>

A PTFE aqueous dispersion with the solid concentration being adjusted to about 1.0% by mass was prepared. The average primary particle size was measured from 70 measurement processes using ELSZ-1000S (manufactured by Otsuka Electronics Co., Ltd.) at 25°C. The refractive index of the solvent (water) was 1.3328 and the viscosity of the solvent (water) was 0.8878 mPa.s.

<Aspect ratio>

The aqueous dispersion was diluted to have a solid concentration of about 1% by mass and observed by a scanning electron microscope (SEM), and 400 or more randomly extracted particles were subjected to image processing, and the aspect ratio was obtained from the average of the ratios of the major axis to the minor axis thereof.

<Standard specific gravity (SSG)>

The SSG was measured by the water replacement method in conformity with ASTM D 792 using a sample molded in conformity with ASTM D4895-89.

<Peak temperature>

The peak temperature was measured by precisely weighing about 10 mg of PTFE powder without a history of being heated to a temperature of 300°C or higher, accommodating it in a dedicated aluminum pan, and using TG/DTA (simultaneous thermogravimetric analyzer). The aluminum pan was heated up in the temperature range from 25°C to 600°C at 10°C/min under an atmospheric atmosphere to obtain a differential thermal (DTA) curve, and the peak temperature was defined as the temperature corresponding to the maximum value in the obtained differential thermal (DTA) curve.

<Content of polymer (polymers K, L, and M) in PTFE powder>

The content of the polymer contained in the PTFE powder was determined from the spectrum obtained by solid-state $^{19}$F-MAS NMR measurement.

<Extrusion pressure>

The extrusion pressure was determined by the following method in accordance with the method described in Japanese Patent Laid-Open No. 2002-201217. To 100 g of the PTFE powder, 21.7 g of a lubricant (trade name: Isopar H(R), manufactured by Exxon) was added and mixed for 3 minutes in a glass bottle at room temperature. Then, the glass bottle was left to stand at room temperature (25°C) for at least 1 hour before extrusion to obtain a lubricated resin. The lubricated resin was paste-extruded at a reduction ratio of 100:1 at room temperature through an orifice (diameter 2.5 mm, land length 11 mm, entrance angle 30°) into a uniform beading (beading: extruded body). The extrusion speed, i.e., ram speed, was 20 inch/min (51 cm/min). The extrusion pressure was calculated by measuring the load when the extrusion load reached equilibrium in the paste extrusion and dividing the measured load by the cross-sectional area of the cylinder used in the paste extrusion.

<Stretching test>

The stretching test and the measurement of breaking strength A were carried out by the following methods in accordance with the methods described in Japanese Patent Laid-Open No. 2002-201217.

The beading obtained by the paste extrusion above was heated at 230°C for 30 minutes to remove the lubricant from the beading. Next, an appropriate length of the beading (an extruded body) was cut and clamped at each end leaving a space of 1.5 inch (38 mm) between clamps, and heated to 300°C in an air circulation furnace. Then, the clamps were moved apart from each other at a desired rate (a stretch rate) until the separation distance corresponds to a desired stretch (a total stretch) to perform the stretching test. This stretch method essentially followed the method described in U.S. Patent No. 4,576,869, except that the extrusion speed was different (51 cm/min instead of 84 cm/min). "Stretch" is an increase in length due to stretching, usually expressed as a ratio to the original length. In the stretch method, the stretch rate was 1,000%/sec, and the total stretch was 2,400%.

<Breaking strength A>

The stretched beading (those produced by stretching the beading) obtained in the stretching test above was clamped by movable jaws having a gauge length of 5.0 cm, and a tensile test was performed at 25°C at a rate of 300 mm/min, and the strength at the time of breaking was taken as breaking strength A.

<Stress relaxation time>

The stress relaxation time was determined by the following methods in accordance with the methods described in Japanese Patent Laid-Open No. 2002-201217.

Both ends of the stretched beading obtained in the stretching test above were tied to a fixture to form a tightly stretched beading sample having an overall length of 8 inches (20 cm). The fixture was placed in an oven through a (covered) slit on the side of the oven, while keeping the oven at 390°C. The time it takes for the beading sample to break after it was placed in the oven was determined as the stress relaxation time.

<Appearance of stretched body>

The appearance of the stretched beading (those produced by stretching the beadings) obtained in the stretching test above was visually observed and evaluated by the following criteria.

Uniform: Appearance of stretched beading was uniform.

Non-uniform: Appearance of stretched beading was not uniform, e.g., cracking, swelling, and coarseness and fineness were observed in the stretched beading.

Preparation Example 1 (preparation of polymer K)

To a reactor were added 170 g of sodium 1,1,2,2-tetrafluoro-2-((1,2,2-trifluorovinyl)oxy)ethane-1-sulfonate (monomer K), 340 g of water, and ammonium persulfate (APS) in an amount corresponding to 2.0 mol% based on the amount of the monomer K, and the mixture was stirred at 40°C for 72 hours in a N2 flow to thereby obtain a polymer K aqueous solution K-1 containing a polymer K, which is a homopolymer of the monomer K. The oxygen concentration in the reactor varied between 15 ppm by volume and 800 ppm by volume.

Water was added to the obtained polymer K aqueous solution K-1 to adjust the concentration of the polymer K to 3.8% by mass, and the solution was then brought into contact with an ultrafiltration membrane (cut-off molecular weight of 6,000 Da, made of polysulfone) at 25°C under a water pressure of 0.1 MPa to perform ultrafiltration. While pouring water as appropriate, the ultrafiltration was continued until a water filtrate of 4 times the volume of the aqueous solution was finally eluted to thereby obtain a polymer K aqueous solution K-2. The obtained aqueous solution had a concentration of 1.6% by mass.

The polymer K aqueous solution K-2 was analyzed. The obtained polymer K had a weight average molecular weight (Mw) of $1.0 \times 10^4$ and a number average molecular weight (Mn) of $0.8 \times 10^4$.

The content of the dimer and trimer of the monomer K in the polymer K aqueous solution K-2 was 0.1% by mass or less based on the polymer K. The content of the fraction having a molecular weight of 3,000 or less in the polymer K aqueous solution K-2 was 0.5% or less. When this aqueous solution was subjected to DLS analysis, it was not possible to measure the particle size.

Example 1

To a glass reactor equipped with a stirrer having an internal capacity of 1 L were added 496.17 g of deionized water, 30 g of paraffin wax, and 34.38 g of the polymer K aqueous solution K-2, and aqueous ammonia was added to adjust the pH to 10.6. Next, while the contents of the reactor were heated to 70°C and sucked, the reactor was purged with the TFE monomer to remove oxygen in the reactor. Thereafter, the contents were stirred. After adding 0.18 g of HFP into the reactor, the TFE monomer was added until the pressure reached 0.73 MPaG. 2.75 mg of ammonium persulfate (APS) initiator dissolved in 20 g of deionized water was injected into the reactor and the pressure in the reactor was adjusted to 0.83 MPaG. A drop in pressure occurred after injection of the initiator, indicating the initiation of polymerization. The TFE monomer was added to the reactor to maintain the pressure, and the polymerization was continued until about 60 g of the TFE monomer was consumed in the reaction. Then, the reactor was evacuated to normal pressure, and the contents were taken out from the reactor and cooled. The supernatant paraffin wax was removed from the PTFE aqueous dispersion.

The solid concentration in the obtained PTFE aqueous dispersion was 9.7% by mass, and the average primary particle size thereof was 184 nm.

The obtained PTFE aqueous dispersion was solidified under a high-speed stirring condition. The solidified wet powder was dried at 150°C for 18 hours. The results are shown in Table 2.

Example 2

Polymerization was carried out in the same manner as in Example 1 except that the amount of the polymer K aqueous solution K-2 was changed to 68.75 g, the amount of deionized water was changed to 462.35 g, the amount of HFP was changed to 0.54 g, and the polymerization was continued until about 140 g of the TFE monomer was consumed in the reaction. The solid concentration in the obtained PTFE aqueous dispersion was 20.3% by mass, and the average primary particle size thereof was 201 nm.

The obtained PTFE aqueous dispersion was diluted with deionized water to have a solid concentration of about 10% by mass and solidified under a high-speed stirring condition. The solidified wet powder was dried at 150°C for 18 hours. The results are shown in Table 2.

Example 3

To a SUS reactor equipped with a stirrer having an internal capacity of 6 L were added 3,107 g of deionized water, 104 g of paraffin wax, 448 g of the polymer K aqueous solution K-2, 10.74 g of an isopropanol aqueous solution having a concentration of 0.1% by mass, and 1.25 g of a Triton aqueous solution having a concentration of 0.1% by mass. Next, aqueous ammonia was added to adjust the pH to 9.0, and while the contents of the reactor were heated to 70°C and sucked, the reactor was purged with TFE to remove oxygen in the reactor, and the contents were stirred. After adding 7.68 g of HFP into the reactor, TFE was added until the pressure reached 0.73 MPaG. 17.9 mg of ammonium persulfate (APS) initiator dissolved in 20 g of deionized water was injected into the reactor and the pressure in the reactor was adjusted to 0.83 MPaG. A drop in pressure occurred after injection of the initiator, indicating the initiation of polymerization. TFE was added to the reactor to keep the pressure constant at 0.78 MPaG. At the time when the TFE consumed in the reaction reached about 180 g, the feeding of TFE and stirring were stopped.

Subsequently, the gas in the reactor was slowly released until the pressure in the reactor reached 0.02 MPaG. Thereafter, TFE was fed until the pressure in the reactor reached 0.78 MPaG, and stirring was started again, whereby the reaction was continued. At the time when the TFE consumed in the reaction reached about 540 g, 14.3 mg of hydroquinone dissolved in 20 g of deionized water was injected into the reactor, whereby the reaction was continued. At the time when the TFE consumed in the reaction reached about 1,250 g, the feeding of TFE was stopped and stirring was stopped, whereby the reaction was completed. Then, the reactor was evacuated to normal pressure, and the contents were taken out from the reactor and cooled. The supernatant paraffin wax was removed from the PTFE aqueous dispersion.

The solid concentration in the obtained PTFE aqueous dispersion was 27.5% by mass, and the average primary particle size thereof was 170 nm.

The obtained PTFE aqueous dispersion was diluted with deionized water to have a solid concentration of about 10% by mass and solidified under a high-speed stirring condition, and the solidified wet powder was dried at 210°C for 18 hours. Various physical properties of the obtained PTFE powder were measured. The results are shown in Table 2.

Also, the obtained PTFE aqueous dispersion was diluted with deionized water to have a solid concentration of about 10% by mass and solidified under a high-speed stirring condition, and the solidified wet powder was dried at 240°C for 18 hours. Various physical properties of the obtained PTFE powder were measured. The results are shown in Table 3.

Preparation Example 2

300 ml of Amberlite (IR120B(H)-HG) was measured into a container, washed with water until no coloration was observed, 500 ml of 1M-HCl was then added, and the mixture was stirred at room temperature for 1 hour. A column equipped with a cock was filled with Amberlite and water was poured through it until the acidity of the waste liquid became neutral. The polymer K aqueous solution K-2 obtained in Preparation Example 1 was fed into the column equipped with a cock and dropwise addition was started. After completion of the dropwise addition, water was allowed to flow until the dropping solution became neutral to obtain a polymer L aqueous solution L-1 containing a polymer L of 1,1,2,2-tetrafluoro-2-((1,2,2-trifluorovinyl)oxy)ethane-1-sulfonic acid (monomer L). The obtained aqueous solution had a concentration of 1.5% by mass.

The polymer L aqueous solution L-1 was analyzed. The polymer L had a weight average molecular weight (Mw) of $1.0 \times 10^4$ and a number average molecular weight (Mn) of $0.8 \times 10^4$.

The content of the dimer and trimer of the monomer L in the polymer L aqueous solution L-1 was 0.1% by mass or less based on the polymer L. The content of the fraction having a molecular weight of 3,000 or less in the polymer L aqueous solution L-1 was 0.5% or less. When subjecting this aqueous solution to DLS analysis, it was not possible to

measure the particle size.

Example 4

To a SUS reactor equipped with a stirrer having an internal capacity of 6 L were added 3,087 g of deionized water, 104 g of paraffin wax, 477 g of the polymer L aqueous solution L-1, and 3.58 g of an isopropanol aqueous solution having a concentration of 0.1% by mass. Then, aqueous ammonia was added to adjust the pH to 9.0, and while the contents of the reactor were heated to 70°C and sucked, the reactor was purged with TFE to remove oxygen in the reactor, and the contents were stirred. After adding 5.8 g of HFP into the reactor, TFE was added until the pressure reached 0.73 MPaG. 17.9 mg of ammonium persulfate (APS) initiator dissolved in 20 g of deionized water was injected into the reactor and the pressure in the reactor was adjusted to 0.83 MPaG. A drop in pressure occurred after injection of the initiator, indicating the initiation of polymerization. TFE was added to the reactor to keep the pressure constant at 0.78 MPaG. At the time when the TFE consumed in the reaction reached about 180 g, the feeding of TFE and stirring were stopped.

Subsequently, the gas in the reactor was slowly released until the pressure in the reactor reached 0.02 MPaG. Thereafter, TFE was fed until the pressure in the reactor reached 0.78 MPaG, and stirring was started again, whereby the reaction was continued. At the time when the TFE consumed in the reaction reached about 540 g, 14.3 mg of hydroquinone dissolved in 20 g of deionized water was injected into the reactor, whereby the reaction was continued. At the time when the TFE consumed in the reaction reached about 1,250 g, the feeding of TFE was stopped and stirring was stopped, whereby the reaction was completed. Then, the reactor was evacuated to normal pressure, and the contents were taken out from the reactor and cooled. The supernatant paraffin wax was removed from the PTFE aqueous dispersion.

The solid concentration in the obtained PTFE aqueous dispersion was 25.5% by mass, and the average primary particle size thereof was 182 nm.

The obtained PTFE aqueous dispersion was diluted with deionized water to have a solid concentration of about 10% by mass and solidified under a high-speed stirring condition, and the solidified wet powder was dried at 210°C for 18 hours. Various physical properties of the obtained PTFE powder were measured. The results are shown in Table 2.

Also, the obtained PTFE aqueous dispersion was diluted with deionized water to have a solid concentration of about 10% by mass and solidified under a high-speed stirring condition, and the solidified wet powder was dried at 240°C for 18 hours. Various physical properties of the obtained PTFE powder were measured. The results are shown in Table 3.

Preparation Example 3

To a reactor were added 6.8 g of the monomer K represented as sodium 1,1,2,2-tetrafluoro-2-((1,2,2-trifluorovinyl)oxy)ethane-1-sulfonate, 34 g of water, and ammonium persulfate (APS) in an amount corresponding to 1.5 mol% based on the amount of the monomer K, and after $N_2$ purging and degassing, 3.2 g of VdF was introduced, and the mixture was stirred at 60°C for 2 hours, with the reactor being hermetically sealed, to thereby obtain a polymer M aqueous solution M-1 containing a polymer M, which is a copolymer of the monomer K and VdF. The pressure inside the reactor increased to 0.30 MPaG after heating and decreased to 0.19 MPaG as the reaction progressed.

The obtained polymer M aqueous solution M-1 containing the polymer M was brought into contact with a dialysis membrane (cut-off molecular weight of 3,500 Da, made of cellulose) at room temperature to perform filtration, thereby obtaining a fluoropolymer aqueous solution. By performing dialysis membrane purification, a polymer M aqueous solution M-2 was obtained. The obtained aqueous solution had a concentration of 2.65% by mass.

When the polymer M aqueous solution M-2 obtained by performing dialysis was analyzed by NMR to examine the polymer composition features, the molar ratio of the polymerized unit derived from the monomer K to the polymerized unit derived from VdF contained in the polymer was 1.0/1.0. The alternating ratio of the polymerized unit derived from $CF_2=CFOCF_2CF_2SO_3Na$ to the polymerized unit derived from VdF in the polymer M was 76% or more.

The obtained polymer M had a weight average molecular weight (Mw) of $15.3 \times 10^4$ and a number average molecular weight (Mn) of $7.2 \times 10^4$. The content of the dimer and trimer of the monomer K in the aqueous solution obtained by performing dialysis was 0.1% by mass or less based on the polymer M. Also, the content of the dimer and trimer of the polymerized unit derived from the monomer K and the polymerized unit derived from VdF was 0.1% by mass or less based on the polymer M. The content of the fraction having a molecular weight of 3,000 or less in the aqueous solution obtained by performing dialysis was 0.1% by mass or less.

Example 5

To a glass reactor equipped with a stirrer having an internal capacity of 1 L were added 490 g of deionized water, 30 g of paraffin wax, and 41.5 g of the polymer M aqueous solution M-2. Furthermore, aqueous ammonia was

added to adjust the pH to 9.4. Next, while the contents of the reactor were heated to 70°C and sucked, the reactor was purged with the TFE monomer to remove oxygen in the reactor. After that, the contents were stirred. After adding 1.26 g of HFP into the reactor, the TFE monomer was added until the pressure reached 0.73 MPaG. 2.75 mg of ammonium persulfate (APS) initiator dissolved in 20 g of deionized water was injected into the reactor and the pressure in the reactor was adjusted to 0.83 MPaG. A drop in pressure occurred after injection of the initiator, indicating the initiation of polymerization. The TFE monomer was added to the reactor to keep the pressure constant at 0.78 MPaG. At the time when the TFE monomer consumed in the reaction reached about 30 g, the feeding of TFE monomer and stirring were stopped. Subsequently, the gas in the reactor was slowly released until the pressure in the reactor reached 0.02 MPaG. Thereafter, the TFE monomer was fed until the pressure in the reactor reached 0.78 MPaG, and stirring was started again, whereby the reaction was continued. At the time when the TFE monomer consumed in the reaction reached about 150 g, the feeding of TFE monomer was stopped and stirring was stopped, whereby the reaction was completed. Then, the reactor was evacuated to normal pressure, and the contents were taken out from the reactor and cooled. The supernatant paraffin wax was removed from the PTFE aqueous dispersion. The solid concentration in the obtained PTFE aqueous dispersion was 21.7% by mass, and the average primary particle size thereof was 204 nm.

The obtained PTFE aqueous dispersion was diluted with deionized water to have a solid concentration of about 10% by mass and solidified under a high-speed stirring condition. The solidified wet powder was dried at 210°C for 18 hours. The results are shown in Table 2.

[Table 2]

Table 2

| | | Example 1 | Example 2 | Example 3 | Example 4 | Example 5 |
|---|---|---|---|---|---|---|
| Modifying monomer type | | HFP | HFP | HFP | HFP | HFP |
| Modification amount | % by mass/ PTFE | 0.084 | 0.212 | 0.316 | 0.294 | 0.287 |
| Solid concentration | % by mass | 9.7 | 20.3 | 27.5 | 25.5 | 21.7 |
| Average primary particle size | nm | 184 | 201 | 170 | 182 | 204 |
| Standard specific gravity | - | 2.189 | 2.163 | 2.169 | 2.165 | 2.165 |
| Aspect ratio | - | 1.69 | 1.35 | 1.28 | 1.32 | 129 |
| Peak temperature | °C | 344 | 345 | 344 | 344 | 344 |
| Content of polymer K | % by mass | 0.93 | 0.79 | 0.53 | | |
| Content of polymer L | % by mass | | | | 0.58 | |
| Content of polymer M | % by mass | | | | | 0.72 |

[Table 3]

**Table 3**

| | | Example 3 | Example 4 |
|---|---|---|---|
| Extrusion pressure | MPa | 11.4 | 17.5 |
| Breaking strength A | N | 16.2 | 21.3 |
| Stress relaxation time | sec | 192 | 231 |
| Appearance of stretched body | - | Uniform | Uniform |

Next, the production method and composition of the perfluoroelastomer will be described with reference to Examples.

Each numerical value in these Examples was measured by the methods described above, unless otherwise noted. Values measured by methods other than those described above were measured by the following methods.

<Solid concentration of aqueous dispersion containing perfluoroelastomer>

In an air dryer, 1 g of the aqueous dispersion containing the perfluoroelastomer was dried at a condition of 150°C for 60 minutes, and the proportion of the mass of the non-volatile matter to the mass of the aqueous dispersion (1 g) was expressed by percentage and taken as the solid concentration thereof.

<Polymer adhesion rate>

The ratio of the mass of polymer adhered matter adhered to the polymerization tank after the completion of the polymerization to the total amount of polymer (perfluoroelastomer) after the completion of the polymerization (adhesion rate to the polymerization tank) was determined by the following equation:

polymer adhesion rate (% by mass) = mass of polymer adhered matter/mass of obtained polymer (including polymer adhered matter) × 100

mass of obtained polymer = mass of aqueous dispersion × solid concentration of aqueous dispersion (% by mass)/100 + mass of polymer adhered matter

The polymer adhered matter includes the polymer adhered to the inner walls of the polymerization tank and the inside of the polymerization tank such as stirring blades after the aqueous dispersion is drawn out of the polymerization tank after the completion of the polymerization, and the polymer that has been released from the aqueous dispersion due to agglomeration and is suspended or precipitated without being dispersed in the aqueous dispersion. The mass of the polymer adhered matter is the mass after drying and removing the moisture contained in the polymer adhered matter at 120°C.

<Compositional features of perfluoroelastomer>

Measurement was performed by $^{19}$F-NMR (solid-state NMR) and a Fourier transform infrared spectrophotometer (FT-IR).

<Glass transition temperature of perfluoroelastomer>

As for the glass transition temperature, by using a differential scanning calorimeter (manufactured by Mettler-Toledo, DSC822e) and increasing the temperature of 10 mg of the sample at 10°C/min, a DSC curve was obtained, and then the peak top temperature of the differential curve specified in JIS K6240 was taken as the glass transition temperature.

<Polymerization rate>

The polymerization rate was calculated by the following equation:

$$\text{polymerization rate} = \{\text{weight of aqueous dispersion} \times \text{solid concentration}/100\}/\{(\text{amount of pure water used in polymerization} + \text{amount of water contained in aqueous solution of polymer (1) used in polymerization}) \times \text{polymerization time}\}$$

The units for each amount in the equation are as follows.

weight of aqueous dispersion: g
solid concentration: % by mass
amount of pure water used in polymerization: kg
amount of water contained in aqueous solution of polymer (1) used in polymerization: kg
polymerization time: hour
polymerization rate: g/(hour × kg)

<Average particle size>

The average particle size of perfluoroelastomer particles in the aqueous dispersion (cumulant average size) was calculated by the cumulant method, using ELSZ-1000S (manufactured by Otsuka Electronics Co., Ltd.) and carrying out measurement by dynamic light scattering.

<Number of perfluoroelastomer particles in aqueous dispersion>

The number of perfluoroelastomer particles in the aqueous dispersion was calculated by the following equation:

$$\text{Number of polymer particles} = \left\{\frac{\text{Solid concentration of aqueous dispersion (mass\%)}}{100 - \textit{Solid concentration of aqueous dispersion (mass\%)}}\right\} \Big/ \left\{\frac{4}{3} \times 3.14 \times \left(\frac{\text{Average particle size (nm)}}{2} \times 10^{-9}\right)^3 \times \text{Specific gravity} \times 10^6\right\}$$

In the equation, the average particle size is the cumulant average size calculated by the method described above, the number of polymer particles (number of perfluoroelastomer particles) is the number of particles per 1 cc of water, and the specific gravity used was the measured value of the specific gravity of the perfluoroelastomer.

Example 6

To a stainless steel autoclave with an internal volume of 0.5 liters (made of SUS316, equipped with a FULLZONE type stirring blade and one baffle plate) without an ignition source were added 63.8 g of deionized water and 130.0 g of the polymer L aqueous solution L-1 (solid concentration: 1.5% by mass), aqueous ammonia was added to adjust the pH to 5.9, and the system was thoroughly purged with nitrogen gas, then degassed, and heated to 54°C while stirring at 1,000 rpm. Then, a mixed gas of tetrafluoroethylene (TFE) and perfluoromethyl vinyl ether (PMVE) (TFE/PMVE = 24/76 mol% ratio) was charged therein such that the internal pressure reached 0.83 MPa·G. Next, 0.259 g of $CF_2=CFOCF_2CF(CF_3)OCF_2CF_2CN$ (CNVE) was fed under nitrogen pressure along with 0.8 g of deionized water, and then 1.03 g of ammonium persulfate (APS) was dissolved in 2.5 g of deionized water and fed under nitrogen pressure to initiate the reaction.

As the polymerization progressed, the pressure in the tank was decreased, and therefore, when the pressure reached 0.735 MPa·G, 2 g of TFE and 2.2 g of PMVE were introduced into the autoclave to raise the pressure. Similarly, as the reaction progressed, TFE and PMVE were fed under pressure at a ratio of 60/40 mol%, and the pressure was repeatedly increased and decreased between 0.735 MPa·G and about 0.89 MPa·G, so that 28 g of TFE and 30.8 g of PMVE were fed under pressure by the completion of polymerization. During the polymerization, $CF_2=CFOCF_2CF(CF_3)OCF_2CF_2CN$, divided into 0.259 g each, was fed under nitrogen pressure five times along with 0.8 g of deionized water when the total amount of TFE charged reached 6 g, 10 g, 14 g, 18 g, and 24 g, respectively.

Thereafter, the autoclave was cooled and the unreacted monomer was released to obtain 259 g of an aqueous dispersion with a solid concentration of 22.0% by mass.

The polymerization time was 10.1 hours. The polymer adhered inside the tank was collected, heated to remove the moisture, and found to be 0.4 g. The adhesion rate was 0.7% by mass.

By adding 75 g of deionized water, 100 g of the obtained aqueous dispersion was mixed with and diluted with it. This mixed and diluted solution was added dropwise to 750 g of 35% aqueous hydrochloric acid solution. The dropping was carried out while stirring the aqueous hydrochloric acid solution.

The perfluoroelastomer was coagulated in the aqueous hydrochloric acid solution, and thus the coagulated perfluoroelastomer was filtered out, transferred to 100 g of deionized water, and washed with stirring for 5 minutes. After the 5 minutes, the perfluoroelastomer was again filtered out, transferred to 100 g of deionized water, and washed with stirring for 5 minutes. Thereafter, this washing operation with 100 g of deionized water was repeated, and the perfluoroelastomer was filtered out when the pH of the washing water after water washing reached 6 or more. The filtered-out perfluoroelastomer was vacuum dried at 70°C for 48 hours. The obtained perfluoroelastomer was 20.8 g.

Analysis of the obtained perfluoroelastomer showed the following results.

compositional features of perfluoroelastomer: TFE/PMVE/CNVE = 54.0/45.4/0.62 mol%
glass transition temperature: -6.2°C
metal content: 2.2 ppm

The polymerization rate was 29.4 g/(hour $\times$ kg), the cumulant average size of perfluoroelastomer particles in the aqueous dispersion was 69.5 nm, and the number of perfluoroelastomer particles in the aqueous dispersion was $7.9 \times 10^{14}$/cc.

Example 7

To a stainless steel autoclave with an internal volume of 0.5 liters (made of SUS316, equipped with a FULLZONE type stirring blade and one baffle plate) without an ignition source were added 65.7 g of deionized water and 130.0 g of the polymer L aqueous solution L-1 (solid concentration: 1.5% by mass), and aqueous ammonia was added to adjust the pH to 5.9. Subsequently, the system was thoroughly purged with nitrogen gas, then degassed, and heated to 50°C while stirring at 1,000 rpm. Then, a mixed gas of tetrafluoroethylene (TFE) and perfluoromethyl vinyl ether (PMVE) (TFE/PMVE = 25.6/74.4 mol% ratio) was charged therein such that the internal pressure reached 0.83 MPa·G, and after that, 0.141 g of ammonium persulfate (APS) was dissolved in 1.5 g of deionized water and fed under nitrogen pressure to initiate the reaction.

At the point when the pressure dropped to 0.783 MPa·G as the polymerization progressed, 0.416 g of a diiodine compound $I(CF_2)_4I$ was fed under pressure as the chain transfer agent, along with 1.5 g of deionized water. Then, when the pressure reached 0.735 MPa·G, 2 g of TFE and 1.8 g of PMVE were introduced into the autoclave to raise the pressure. Similarly, as the reaction progressed, TFE and PMVE were fed under pressure at a ratio of 64.8/35.2 mol%, and the pressure was repeatedly increased and decreased between 0.735 MPa·G and about 0.89 MPa·G. After the initiation of the reaction, 0.0294 g of APS was fed under nitrogen pressure along with 1.5 g of deionized water every 12 hours to continue the reaction. By the completion of polymerization, 44 g of TFE and 39.6 g of PMVE were fed under pressure.

Thereafter, the autoclave was cooled and the unreacted monomer was released to obtain 299 g of an aqueous dispersion with a solid concentration of 23.7% by mass.

The polymerization time was 33.0 hours. The polymer adhered inside the tank was collected, heated to remove the moisture, and found to be 0.47 g. The adhesion rate was 0.7% by mass.

By adding 150 g of deionized water, 200 g of the obtained aqueous dispersion was mixed with and diluted with it. This mixed and diluted solution was added dropwise to 1,300 g of 10% aqueous hydrochloric acid solution. The dropping was carried out while stirring the aqueous hydrochloric acid solution.

The perfluoroelastomer was coagulated in the aqueous hydrochloric acid solution, and thus the coagulated perfluoroelastomer was filtered out, transferred to 1,000 g of deionized water, and washed with stirring for 5 minutes. After the 5 minutes, the perfluoroelastomer was again filtered out, transferred to 100 g of deionized water, and washed with stirring for 5 minutes. Thereafter, this washing operation with 100 g of deionized water was repeated, and the perfluoroelastomer was filtered out when the pH of the washing water after water washing reached 6 or more. The filtered-out perfluoroelastomer was vacuum dried at 70°C for 48 hours. The obtained perfluoroelastomer was 51.2 g.

Analysis of the obtained perfluoroelastomer showed the following results.

compositional features of perfluoroelastomer: TFE/PMVE = 61.3/38.7 mol%
content of iodine: 0.18% by mass

glass transition temperature: -6.7°C

The polymerization rate was 9.3 g/(hour $\times$ kg), the cumulant average size of perfluoroelastomer particles in the aqueous dispersion was 129.7 nm, and the number of perfluoroelastomer particles in the aqueous dispersion was 1.3 $\times$ $10^{14}$/cc.

Example 8

To a stainless steel autoclave with an internal volume of 6 liters (made of SUS316, equipped with a stirring blade and one baffle plate) without an ignition source were added 831.8 g of deionized water and 1,756.1 g of the polymer L aqueous solution L-1 (solid concentration: 1.5% by mass), and aqueous ammonia was added to adjust the pH to 5.9. Subsequently, the system was thoroughly purged with nitrogen gas, then degassed, and heated to 50°C while stirring at 400 rpm. Then, a mixed gas of tetrafluoroethylene (TFE) and perfluoromethyl vinyl ether (PMVE) (TFE/PMVE = 25.6/74.4 mol% ratio) was charged therein such that the internal pressure reached 0.83 MPa·G, and after that, 4.257 g of ammonium persulfate (APS) was dissolved in 5.0 g of deionized water and fed under nitrogen pressure to initiate the reaction.

At the point when the pressure reached 0.735 MPa·G as the polymerization progressed, 14 g of TFE and 12 g of PMVE were introduced into the autoclave to raise the pressure, and 5.11 g of a diiodine compound $I(CF_2)_4I$ was fed under pressure as the chain transfer agent, along with 5.0 g of deionized water. Similarly, as the reaction progressed, TFE and PMVE were fed under pressure at a ratio of 65.9/34.1 mol%, and the pressure was repeatedly increased and decreased between 0.735 MPa·G and about 0.87 MPa·G. After the initiation of the reaction, 0.798 g of APS was fed under nitrogen pressure along with 3.0 g of deionized water every 12 hours to continue the reaction. By the completion of polymerization, 616 g of TFE and 528 g of PMVE were fed under pressure. During the polymerization, 1,1,2,2-tetrafluoro-3-iodo-1-((1,2,2-trifluorovinyl)oxy)propane, divided into 2.08 g each, was fed under nitrogen pressure four times along with 1.5 g of deionized water when the total amount of TFE charged reached 308 g, 364 g, 434 g, and 490 g, respectively.

Thereafter, the autoclave was cooled and the unreacted monomer was released to obtain 3,776.4 g of an aqueous dispersion with a solid concentration of 29.8% by mass.

The polymerization time was 30.0 hours. The polymer adhered inside the tank was collected, heated to remove the moisture, and found to be 0.1 g. The adhesion rate was 0.01% by mass.

By adding 150 g of deionized water, 200 g of the obtained aqueous dispersion was mixed with and diluted with it. This mixed and diluted solution was added dropwise to 1,300 g of 10% aqueous hydrochloric acid solution. The dropping was carried out while stirring the aqueous hydrochloric acid solution.

The perfluoroelastomer was coagulated in the aqueous hydrochloric acid solution, and thus the coagulated perfluoroelastomer was filtered out, transferred to 200 g of deionized water, and washed with stirring for 5 minutes. After the 5 minutes, the perfluoroelastomer was again filtered out, transferred to 100 g of deionized water, and washed with stirring for 5 minutes. Thereafter, this washing operation with 100 g of deionized water was repeated, and the perfluoroelastomer was filtered out when the pH of the washing water after water washing reached 6 or more. The filtered-out perfluoroelastomer was vacuum dried at 70°C for 48 hours. The obtained perfluoroelastomer was 56.4 g.

Analysis of the obtained perfluoroelastomer showed the following results.

compositional features of perfluoroelastomer: TFE/PMVE = 64.1/35.9 mol%
content of iodine: 0.43% by mass
Mooney viscosity: (ML 1 + 10 (100°C)) = 57.5
glass transition temperature: -3.1°C

The polymerization rate was 14.7 g/(hour $\times$ kg), the cumulant average size of perfluoroelastomer particles in the aqueous dispersion was 116.2 nm, and the number of perfluoroelastomer particles in the aqueous dispersion was 2.5 $\times$ $10^{14}$/cc.

Example 9

To a stainless steel autoclave with an internal volume of 0.5 liters (made of SUS316, equipped with a FULLZONE type stirring blade and one baffle plate) without an ignition source were added 118.8 g of deionized water and 78.0 g of the polymer M aqueous solution M-2 (solid concentration: 2.65% by mass), and the system was thoroughly purged with nitrogen gas, then degassed, and heated to 54°C while stirring at 1,000 rpm. Then, a mixed gas of tetrafluoroethylene (TFE) and perfluoromethyl vinyl ether (PMVE) (TFE/PMVE = 24/76 mol% ratio) was charged therein such that the internal pressure reached 0.83 MPa·G. Next, 0.259 g of $CF_2=CFOCF_2CF(CF_3)OCF_2CF_2CN$ (CNVE) was fed under nitrogen

pressure along with 0.8 g of deionized water, and then 1.03 g of ammonium persulfate (APS) was dissolved in 2.5 g of deionized water and fed under nitrogen pressure to initiate the reaction.

As the polymerization progressed, the pressure in the tank was decreased, and therefore, when the pressure reached 0.735 MPa.G, 2 g of TFE and 2.2 g of PMVE were introduced into the autoclave to raise the pressure. Similarly, as the reaction progressed, TFE and PMVE were fed under pressure at a ratio of 60/40 mol%, and the pressure was repeatedly increased and decreased between 0.735 MPa·G and about 0.89 MPa·G, so that 28 g of TFE and 30.8 g of PMVE were fed under pressure by the completion of polymerization. During the polymerization, $CF_2=CFOCF_2CF(CF_3)OCF_2CF_2CN$, divided into 0.259 g each, was fed under nitrogen pressure five times along with 0.8 g of deionized water when the total amount of TFE charged reached 6 g, 10 g, 14 g, 18 g, and 24 g, respectively.

Thereafter, the autoclave was cooled and the unreacted monomer was released to obtain 252 g of an aqueous dispersion with a solid concentration of 20.8% by mass.

The polymerization time was 5.3 hours. The polymer adhered inside the tank was collected, heated to remove the moisture, and found to be 4.0 g. The adhesion rate was 7.7% by mass.

By adding 75 g of deionized water, 100 g of the obtained aqueous dispersion was mixed with and diluted with it. This mixed and diluted solution was added dropwise to 700 g of 10% aqueous hydrochloric acid solution. The dropping was carried out while stirring the aqueous hydrochloric acid solution.

The perfluoroelastomer was coagulated in the aqueous hydrochloric acid solution, and thus the coagulated perfluoroelastomer was filtered out, transferred to 100 g of deionized water, and washed with stirring for 5 minutes. After the 5 minutes, the perfluoroelastomer was again filtered out, transferred to 100 g of deionized water, and washed with stirring for 5 minutes. Thereafter, this washing operation with 100 g of deionized water was repeated, and the perfluoroelastomer was filtered out when the pH of the washing water after water washing reached 6 or more. The filtered-out perfluoroelastomer was vacuum dried at 70°C for 48 hours. The obtained perfluoroelastomer was 19.1 g.

Analysis of the obtained perfluoroelastomer showed the following results.

compositional features of perfluoroelastomer: TFE/PMVE/CNVE = 57.1/42.5/0.38 mol%
glass transition temperature: -5.4°C

The polymerization rate was 50.3 g/(hour × kg), the cumulant average size of perfluoroelastomer particles in the aqueous dispersion was 42.0 nm, and the number of perfluoroelastomer particles in the aqueous dispersion was $3.4 \times 10^{14}$/cc.

## Claims

1. A method for producing a fluoropolymer, the method comprising polymerizing a perfluoromonomer in an aqueous medium in the presence of a polymer (1) to obtain a fluoropolymer, wherein

   a content of a polymerized unit derived from the perfluoromonomer in the fluoropolymer is 90 mol% or more based on all polymerized units of the fluoropolymer,
   the polymer (1) is a polymer of a monomer (1) represented by the general formula (1) below,
   a polymerized unit (1) derived from the monomer (1) in the polymer (1) is 50% by mass or more based on all polymerized units of the polymer (1), and
   a content of a dimer and a trimer of the monomer (1) in the polymer (1) is 1.0% by mass or less based on the polymer (1) :

   $$CF_2=CF\text{-}O\text{-}R\text{-}(Rf\text{-}SO_3M)_m \qquad (1)$$

   wherein R is a single bond or a linking group; Rf is a fluorine-containing alkylene group having 1 to 40 carbon atoms, or a fluorine-containing alkylene group having 2 to 100 carbon atoms and having an ether bond or a keto group; M is H, a metal atom, $NR^7_4$, imidazolium optionally having a substituent, pyridinium optionally having a substituent, or phosphonium optionally having a substituent; $R^7$ is H or an organic group; and m is an integer of 1 or more.

2. The method for production according to claim 1, wherein the monomer (1) is a monomer (2) represented by the following general formula (2):

   $$CF_2=CF\text{-}O\text{-}Rf\text{-}SO_3M \qquad (2)$$

wherein Rf and M are as described above.

**3.** The method for production according to claim 1 or 2, wherein the fluoropolymer is a polytetrafluoroethylene.

**4.** The method for production according to claim 1 or 2, wherein the fluoropolymer is a perfluoroelastomer.

**5.** A method for producing a polytetrafluoroethylene, the method comprising polymerizing tetrafluoroethylene in an aqueous medium in the presence of a polymer (1) to obtain a polytetrafluoroethylene, wherein

the polytetrafluoroethylene is a high-molecular-weight polytetrafluoroethylene,
the polymer (1) is a polymer of a monomer (1) represented by the general formula (1) below, and
a content of a dimer and a trimer of the monomer (1) in the polymer (1) is 1.0% by mass or less based on the polymer (1) :

$$CF_2=CF\text{-}O\text{-}R\text{-}(Rf\text{-}SO_3M)_m \qquad (1)$$

wherein R is a single bond or a linking group; Rf is a fluorine-containing alkylene group having 1 to 40 carbon atoms, or a fluorine-containing alkylene group having 2 to 100 carbon atoms and having an ether bond or a keto group; M is H, a metal atom, $NR^7_4$, imidazolium optionally having a substituent, pyridinium optionally having a substituent, or phosphonium optionally having a substituent; $R^7$ is H or an organic group; and m is an integer of 1 or more.

**6.** The method for production according to claim 5, wherein the monomer (1) is a monomer (2) represented by the following general formula (2):

$$CF_2=CF\text{-}O\text{-}Rf\text{-}SO_3M \qquad (2)$$

wherein Rf and M are as described above.

**7.** A composition comprising a polymer (1) and a fluoropolymer, wherein

the fluoropolymer contains a polymerized unit derived from a perfluoromonomer, and a content of the polymerized unit derived from the perfluoromonomer in the fluoropolymer is 90 mol% or more based on all polymerized units of the fluoropolymer,
the polymer (1) is a polymer of a monomer (1) represented by the general formula (1) below,
a polymerized unit (1) derived from the monomer (1) in the polymer (1) is 50% by mass or more based on all polymerized units of the polymer (1), and
a content of a dimer and a trimer of the monomer (1) in the polymer (1) is 1.0% by mass or less based on the polymer (1) :

$$CF_2=CF\text{-}O\text{-}R\text{-}(Rf\text{-}SO_3M)_m \qquad (1)$$

wherein R is a single bond or a linking group; Rf is a fluorine-containing alkylene group having 1 to 40 carbon atoms, or a fluorine-containing alkylene group having 2 to 100 carbon atoms and having an ether bond or a keto group; M is H, a metal atom, $NR^7_4$, imidazolium optionally having a substituent, pyridinium optionally having a substituent, or phosphonium optionally having a substituent; $R^7$ is H or an organic group; and m is an integer of 1 or more.

**8.** The composition according to claim 7, wherein the monomer (1) is a monomer (2) represented by the following general formula (2):

$$CF_2=CF\text{-}O\text{-}Rf\text{-}SO_3M \qquad (2)$$

wherein Rf and M are as described above.

**9.** The composition according to claim 7 or 8, wherein the polymer (1) is a copolymer of the monomer (1) and a monomer represented by general formula $CFR^{11}=CR^{11}_2$, wherein $R^{11}$ is independently H, F, or a perfluoroalkyl group having 1 to 4 carbon atoms.

**10.** The fluoropolymer according to claim 9, wherein a content of the polymerized unit (1) derived from the monomer (1) is 50 to 94% by mass based on all polymerized units constituting the polymer (1), and a content of a polymerized unit (M) derived from the monomer represented by the general formula $CFR^{11}=CR^{11}_2$, wherein $R^{11}$ is independently H, F, or a perfluoroalkyl group having 1 to 4 carbon atoms, is 6 to 50% by mass based on all polymerized units constituting the polymer (1).

**11.** The fluoropolymer according to claim 10, wherein an alternating ratio of the polymerized unit (1) and the polymerized unit (M) is 40% or more.

**12.** The composition according to any one of claims 7 to 11, wherein the fluoropolymer is a polytetrafluoroethylene.

**13.** The composition according to any one of claims 7 to 11, wherein the fluoropolymer is a perfluoroelastomer.

**14.** The composition according to claim 12 or 13, wherein a metal content is 10 ppm by mass or less.

**15.** A composition comprising a polymer (1) and a polytetrafluoroethylene, wherein

the polytetrafluoroethylene is a high-molecular-weight polytetrafluoroethylene,
the polymer (1) is a polymer of a monomer (1) represented by the general formula (1) below, and
a content of a dimer and a trimer of the monomer (1) in the polymer (1) is 1.0% by mass or less based on the polymer (1) :

$$CF_2=CF-O-R-(Rf-SO_3M)_m \qquad (1)$$

wherein R is a single bond or a linking group; Rf is a fluorine-containing alkylene group having 1 to 40 carbon atoms, or a fluorine-containing alkylene group having 2 to 100 carbon atoms and having an ether bond or a keto group; M is H, a metal atom, $NR^7_4$, imidazolium optionally having a substituent, pyridinium optionally having a substituent, or phosphonium optionally having a substituent; $R^7$ is H or an organic group; and m is an integer of 1 or more.

**16.** The composition according to claim 15, wherein the monomer (1) is a monomer (2) represented by the following general formula (2):

$$CF_2=CF-O-Rf-SO_3M \qquad (2)$$

wherein Rf and M are as described above.

## INTERNATIONAL SEARCH REPORT

International application No.
**PCT/JP2022/020583**

### A. CLASSIFICATION OF SUBJECT MATTER

***C08F 261/06***(2006.01)i; ***C08F 2/44***(2006.01)i; ***C08F 16/30***(2006.01)i; ***C08L 27/12***(2006.01)i; ***C08L 29/10***(2006.01)i
FI: C08F261/06; C08F2/44 C; C08F16/30; C08L27/12; C08L29/10

According to International Patent Classification (IPC) or to both national classification and IPC

### B. FIELDS SEARCHED

Minimum documentation searched (classification system followed by classification symbols)

C08F261/06; C08F2/44; C08F16/30; C08L27/12; C08L29/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/105651 A1 (DAIKIN INDUSTRIES, LTD.) 28 May 2020 (2020-05-28) claims, paragraphs [0166]-[0170], [0220]-[0224], [0257]-[0259], [0451] | 1-16 |
| X<br>A | WO 2020/218620 A1 (DAIKIN INDUSTRIES, LTD.) 29 October 2020 (2020-10-29) claims, paragraphs [0050], [0096]-[0099], [0142]-[0146], [0290] | 7-16<br>1-6 |
| P, X | WO 2021/100834 A1 (DAIKIN INDUSTRIES, LTD.) 27 May 2021 (2021-05-27) claims, paragraphs [0099]-[0102], [0144]-[0156], [0172]-[0176], [0253]-[0261] | 1-16 |
| A | WO 2019/168183 A1 (DAIKIN INDUSTRIES, LTD.) 06 September 2019 (2019-09-06) | 1-16 |
| A | JP 2008-545873 A (3M INNOVATIVE PROPERTIES CO.) 18 December 2008 (2008-12-18) | 1-16 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 July 2022** | **19 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/020583**

| Patent document cited in search report | Publication date (day/month/year) | Patent family member(s) | Publication date (day/month/year) |
|---|---|---|---|
| WO 2020/105651 A1 | 28 May 2020 | EP 3885372 A1<br>claims, paragraphs [0222]-[0232], [0322], [0584]<br>CN 113039213 A | |
| WO 2020/218620 A1 | 29 October 2020 | CN 113728014 A | |
| WO 2021/100834 A1 | 27 May 2021 | (Family: none) | |
| WO 2019/168183 A1 | 06 September 2019 | US 2020/0392266 A1<br>EP 3760649 A1<br>CN 111836835 A | |
| JP 2008-545873 A | 18 December 2008 | US 2007/0004848 A1<br>WO 2006/135825 A1<br>CA 2609834 A1<br>CN 101193923 A<br>RU 2007143627 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020510737 A
- WO 2019168183 A
- WO 2020218620 A
- US 7897682 B, Brothers
- US 7977438 B, Brothers
- WO 2011014715 A
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- WO 2005527652 A
- WO 2012002038 A
- JP 11049912 A
- US 5804654 A
- JP 11029679 A
- JP 2003002980 A
- JP 2827152 B
- JP 2538783 B
- WO 2007004250 A
- WO 2007000812 A
- JP 10147617 A
- WO 2007013532 A
- WO 2014175123 A
- WO 9724381 A
- JP 61057324 A
- JP 4081608 A
- JP 5013961 A
- WO 2018225586 A
- WO 2011520020 A
- US 200715937
- US 200725902
- US 200727251
- WO 2014099453 A
- WO 2010075497 A
- WO 2010075496 A
- WO 2011008381 A
- WO 2009055521 A
- WO 1987007619 A
- JP 61293476 A
- WO 2010075494 A
- WO 2010075359 A
- WO 2006119224 A
- WO 2013085864 A
- WO 2012082707 A
- WO 2012082703 A
- WO 2012082454 A
- WO 2012082451 A
- WO 2006135825 A
- WO 2004067588 A
- WO 2009068528 A
- JP 2004075978 A
- JP 2001226436 A
- WO 1992017635 A
- WO 2014069165 A
- JP 11181009 A
- JP 2002201217 A
- US 4576869 A


### Non-patent literature cited in the description


- **KASAI.** *J. Appl. Polymer Sci.,* 1995, vol. 57, 797
- Alkylpolygylcoside, Rompp, Lexikon Chemie. Georg Thieme Verlag, 1999